# EUROPEAN PATENT APPLICATION

(11) **EP 4 653 642 A1**
(43) Date of publication of application: **26.11.2025**
(21) Application number: 24744719.6
(22) Date of filing: 18.01.2024
(51) Int. Cl.: E04G 21/12, B21F 15/06, B65B 13/18, B65B 13/28, E04C 5/18

(54) **BINDING DEVICE**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023131097
(71) Applicant: MAX CO., LTD., Tokyo 103-8502 (JP)
(72) Inventor: AZAMI Takanari, Tokyo 103-8502 (JP); KISHI Kazuhiko, Tokyo 103-8502 (JP)
(74) Representative: Samson & Partner Patentanwälte mbB
(86) International application number: PCT/JP2024/001332
(87) International publication number: WO 2024/154799

(57) **Abstract**

This binding device comprises: a bundling mechanism that sends a wire around reinforcing bars and applies torque to the wire that has been sent around the reinforcing bars to bundle the reinforcing bars; a bundling-mechanism-moving part that causes the bundling mechanism to move between a bundling position at which the reinforcing bars are bundled together and an evacuation position that is separated from the reinforcing bars; and a wire-pulling part that pulls the wire, which is wound on a reel. The wire-pulling part operates in conjunction with movement of the bundling mechanism by the bundling-mechanism-moving part and pulls the wire in the movement direction of the bundling mechanism. The amount of wire being pulled by the wire-pulling part is greater than the movement amount of the bundling mechanism moving due to the operation of the bundling-mechanism-moving part.

## Description

### TECHNICAL FIELD

The present embodiment relates to a binding device.

### BACKGROUND ART

In the related art, for example, a technique for automating a reinforcing bar binding work of binding, with a wire or the like, an intersecting section where a reinforcing bar extending in a vertical direction and a reinforcing bar extending in a lateral direction intersect with each other has been studied. For example, Patent Literature 1 discloses a self-propelled work robot that can be used for reinforcing bar construction.

Patent Literature 2 discloses a reinforcing bar mesh manufacturing method and a reinforcing bar mesh manufacturing device that manufactures a planar reinforcing bar mesh which is formed by using a binding machine to bind intersecting sections of a plurality of reinforcing bars (vertical reinforcing bars) extending in a vertical direction and a plurality of reinforcing bars (lateral reinforcing bars) extending in a lateral direction to cross the vertical reinforcing bars. In the reinforcing bar mesh manufacturing device described in Patent Literature 2, a roller for drawing out a wire is provided as a configuration for drawing out the wire from a reel to the binding machine. The roller for drawing out the wire provided in the reinforcing bar mesh manufacturing device described in Patent Literature 2 is lowered from an upper retracted position to a lower drawing position, and is immediately returned to the retracted position to pay out a predetermined length of the wire from the reel.

### CITATION LIST

### PATENT LITERATURE

Patent Literature 1: JP2019-039174A
Patent Literature 2: JP2013-035052A

### SUMMARY OF INVENTION

### TECHNICAL PROBLEM

According to the technique disclosed in Patent Literature 2, when the wire is consumed in a binding operation performed by the binding machine, the roller for drawing out the wire can be lowered and raised to draw out the wire to be used in a next binding operation from the reel and store the wire in preparation for the next binding operation, and thus the binding operation can be performed smoothly. However, in the reinforcing bar mesh manufacturing device described in Patent Literature 2, a separate drive source for driving the roller for drawing out the wire is required. If the separate drive source is installed, the cost and/or weight may increase. In addition, the number of parts may increase by providing the drive source. Therefore, it is considered that there is room for improvement in the configuration for drawing out the wire of the binding device.

The present disclosure is made in view of the above problem, and an object thereof is to provide a binding device that can draw out a wire with a simple configuration.

### SOLUTION TO PROBLEM

An aspect of the present disclosure provides a binding device including: a binding mechanism configured to feed a wire around a reinforcing bar and twist and bind the wire fed around the reinforcing bar; a binding mechanism movement section configured to move the binding mechanism between a binding position where the reinforcing bar is bound and a retracted position away from the reinforcing bar; and a wire drawing section configured to draw out the wire wound on a reel, in which the wire drawing section draws out the wire in a movement direction of the binding mechanism in conjunction with movement of the binding mechanism by the binding mechanism movement section, and an amount of the wire drawn out by the wire drawing section is greater than a movement amount of the binding mechanism moved by an operation of the binding mechanism movement section.

### ADVANTAGEOUS EFFECTS OF INVENTION

The present disclosure provides a binding device that can draw out a wire with a simple configuration.

### BRIEF DESCRIPTION OF DRAWINGS

[FIG. 1] FIG. 1 is an overall perspective view of a reinforcing bar binding robot 100 which is an embodiment of the present disclosure, as viewed obliquely from an upward direction.
[FIG. 2] FIG. 2 is an overall perspective view of the reinforcing bar binding robot which is the embodiment of the present disclosure, as viewed obliquely from a downward direction.
[FIG. 3] FIG. 3 is a plan view of the reinforcing bar binding robot 100, as viewed from the upward direction (above in a Z direction).
[FIG. 4] FIG. 4 is a plan view of the reinforcing bar binding robot 100, as viewed from the downward direction (below in the Z direction).
[FIG. 5] FIG. 5 is a perspective view of the reinforcing bar binding robot 100 with a reinforcing bar binding unit 110 removed, as viewed obliquely from the upward direction.
[FIG. 6] FIG. 6 is a perspective view of the reinforcing bar binding robot 100 with the reinforcing bar binding unit 110 removed, as viewed obliquely from the upward direction.
[FIG. 7] FIG. 7 is a diagram illustrating a functional block configuration of the reinforcing bar binding robot 100.
[FIG. 8] FIG. 8 is a diagram of the reinforcing bar binding robot 100 being traveling along first reinforcing bars R10, as viewed from a Y direction.
[FIG. 9] FIG. 9 is a diagram of the reinforcing bar binding robot 100 being traveling along the first reinforcing bars R10, as viewed from an X direction.
[FIG. 10] FIG. 10 is a diagram of the reinforcing bar binding robot 100 that stops traveling and performs a binding work, as viewed from the Y direction.
[FIG. 11] FIG. 11 is a diagram of the reinforcing bar binding robot 100 that performs the binding work, as viewed from the X direction.
[FIG. 12] FIG. 12 is a diagram of the reinforcing bar binding robot 100 that performs the binding work, as viewed from below in the Z direction.
[FIG. 13A] FIG. 13A shows an image of the vicinity of an intersecting point of the first reinforcing bar R10 and a second reinforcing bar R20 captured by a 3D distance camera.
[FIG. 13B] FIG. 13B schematically shows an image of the vicinity of the intersecting point of the first reinforcing bar R10 and the second reinforcing bar R20.
[FIG. 14A] FIG. 14A is a schematic side view of the reinforcing bar binding robot 100 viewed from a horizontal direction (X direction).
[FIG. 14B] FIG. 14B is a schematic top view of the reinforcing bar binding robot 100, as viewed from the upward direction (upper side in the Z direction).
[FIG. 15] FIG. 15 is a diagram schematically showing an image captured by a first sensor 130a.
[FIG. 16] FIG. 16 is a schematic diagram for illustrating template matching.
[FIG. 17] FIG. 17 is a diagram schematically showing the reinforcing bar binding robot 100 to illustrate a method of estimating the intersecting point.
[FIG. 18] FIG. 18 is a flowchart of a method of estimating an intersecting point c12 in the embodiment of the present disclosure.
[FIG. 19] FIG. 19 is a flowchart related to a lateral movement of the reinforcing bar binding robot 100.
[FIG. 20A] FIG. 20A is a diagram of the reinforcing bar binding robot 100 during the lateral movement, as viewed from a rear side.
[FIG. 20B] FIG. 20B is a diagram of the reinforcing bar binding robot 100 during the lateral movement, as viewed obliquely from the upward direction.
[FIG. 21A] FIG. 21A is a diagram of the reinforcing bar binding robot 100 during the lateral movement, as viewed from the rear side.
[FIG. 21B] FIG. 21B is a diagram of the reinforcing bar binding robot 100 during the lateral movement, as viewed obliquely from the upward direction.
[FIG. 22A] FIG. 22A is a diagram of the reinforcing bar binding robot 100 during the lateral movement, as viewed from the rear side.
[FIG. 22B] FIG. 22B is a diagram of the reinforcing bar binding robot 100 during the lateral movement, as viewed obliquely from the upward direction.
[FIG. 23A] FIG. 23A is a diagram of the reinforcing bar binding robot 100 during the lateral movement, as viewed from the rear side.
[FIG. 23B] FIG. 23B is a diagram of the reinforcing bar binding robot 100 during the lateral movement, as viewed obliquely from the upward direction.
[FIG. 24A] FIG. 24A is a diagram of the reinforcing bar binding robot 100 during the lateral movement, as viewed from the rear side.
[FIG. 24B] FIG. 24B is a diagram of the reinforcing bar binding robot 100 during the lateral movement, as viewed obliquely from the upward direction.
[FIG. 25A] FIG. 25A is a diagram of the reinforcing bar binding robot 100 during the lateral movement, as viewed from the rear side.
[FIG. 25B] FIG. 25B is a diagram of the reinforcing bar binding robot 100 during the lateral movement, as viewed obliquely from the upward direction.
[FIG. 26] FIG. 26 is a schematic diagram of a reinforcing bar binding robot 200 according to another embodiment of the present disclosure, as viewed from below in the Z direction.
[FIG. 27A] FIG. 27A is a diagram of the binding device 100 according to the embodiment of the present disclosure, as viewed obliquely from the upward direction.
[FIG. 27B] FIG. 27B is a diagram of the binding device 100 as viewed from diagonally forward.
[FIG. 28A] FIG. 28A is a diagram of the binding device 100 according to the embodiment of the present disclosure, as viewed obliquely from the upward direction.
[FIG. 28B] FIG. 28B is a diagram of the binding device 100 as viewed from diagonally forward.
[FIG. 29A] FIG. 29A is a diagram of the binding device 100 according to the embodiment of the present disclosure to illustrate a configuration for drawing out a wire, as viewed obliquely from the upward direction.
[FIG. 29B] FIG. 29B is a diagram of the binding device 100 as viewed from diagonally forward.
[FIG. 30A] FIG. 30A is a top view of the binding device 100 according to the embodiment of the present disclosure.
[FIG. 30B] FIG. 30B is a diagram of the binding device 100 as viewed from diagonally above.
[FIG. 31A] FIG. 31A is a diagram as viewed from a -Y direction with a reel 180a, a reel 180b, a first wire drawing section 112, a second wire drawing section 148, and the like taken out.
[FIG. 31B] FIG. 31B is a diagram of the reel 180a, the reel 180b, the first wire drawing section 112, the second wire drawing section 148, and the like, as viewed obliquely from the upward direction.
[FIG. 32] FIG. 32 is an enlarged view showing the vicinity of the second wire drawing section 148 of the binding device 100 according to the embodiment of the present disclosure.

### DESCRIPTION OF EMBODIMENTS

Hereinafter, the present embodiment will be described with reference to the accompanying drawings. To facilitate understanding of the description, the same elements in the drawings are denoted by the same reference numerals as much as possible, and redundant descriptions will be omitted.

Hereinafter, a configuration of a binding device 100 according to the embodiment of the present disclosure will be described. In the present embodiment, the binding device is a reinforcing bar binding device that binds a plurality of reinforcing bars arranged to intersect with each other, and may be a reinforcing bar binding robot, for example. Hereinafter, a case where the binding device 100 is a reinforcing bar binding robot will be described, and the binding device 100 will also be referred to as a reinforcing bar binding robot 100. In the drawings, an X axis, a Y axis, and a Z axis may be shown. The X axis, the Y axis, and the Z axis constitute a right-handed three-dimensional orthogonal coordinate system. Hereinafter, an arrow direction of the X axis may be referred to as an X axis forward direction, a +X direction, a right side in an X direction, or an X axis right side, and a direction opposite to the arrow direction may be referred to as an X axis rearward direction, a -X direction, a left side in the X direction, or an X axis left side. The same applies to the other axes. A Z axis forward direction and a Z axis rearward direction may be referred to as an "upper side" or "above" and a "lower side" or "below", respectively. A plane orthogonal to each of the X axis, the Y axis, and the Z axis may be referred to as a YZ plane, a ZX plane, and an XY plane. These directions and the like are used for convenience in describing relative positional relationships. Accordingly, these directions and the like do not define absolute positional relationships.

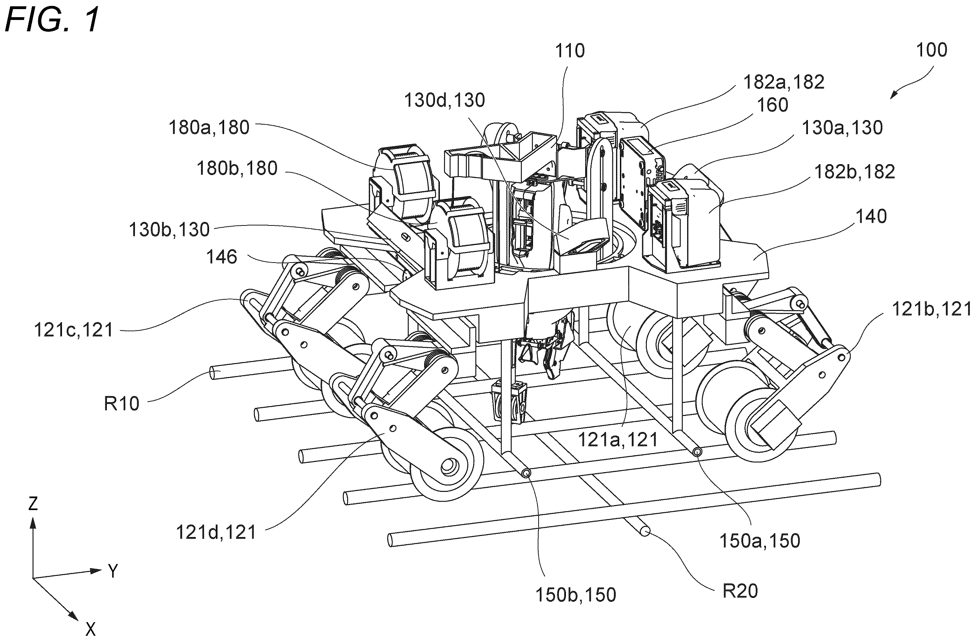

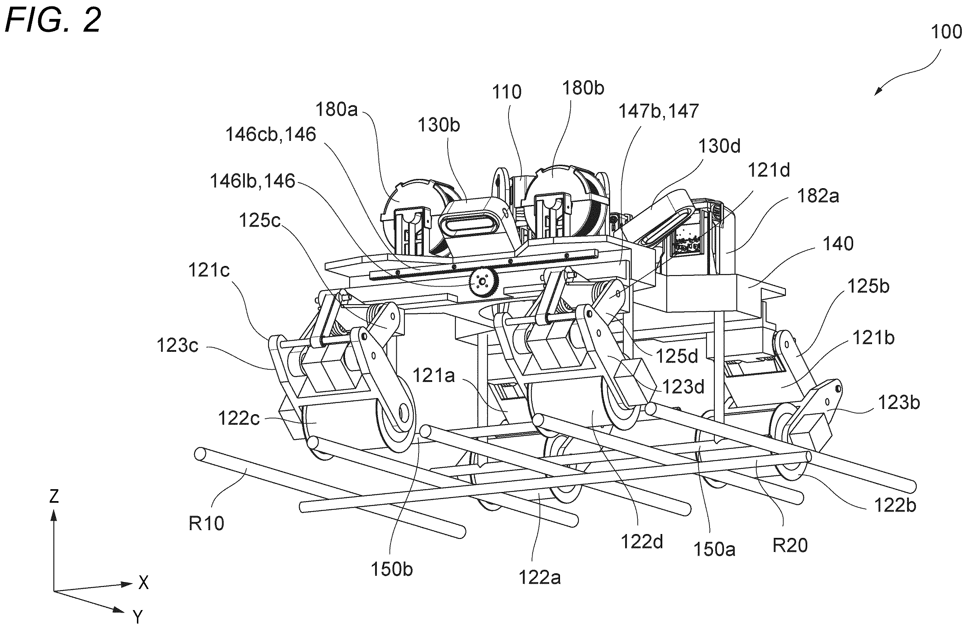

FIG. 1 is an overall perspective view of a reinforcing bar binding robot 100 which is an embodiment of the present disclosure, as viewed obliquely from an upward direction. FIG. 2 is an overall perspective view of the reinforcing bar binding robot 100 which is the embodiment of the present disclosure, as viewed obliquely from a downward direction. As shown in FIGS. 1 and 2, the reinforcing bar binding robot 100 according to the embodiment of the present disclosure includes a reinforcing bar binding unit 110, a traveling unit 121, and a sensor unit 130. The reinforcing bar binding robot 100 may further include other components such as a body unit 140, support bars 150, a control unit 160, reels 180 (a first reel 180a and a second reel 180b), batteries 182 (a first battery 182a and a second battery 182b), a lateral movement unit 146, and a storage device 198 (not shown).

FIGS. 1 and 2 also show a reinforcing bar group R including a plurality of reinforcing bars R10 (also referred to as "first reinforcing bars" or "vertical reinforcing bars" in the present embodiment) extending in a Y direction. As shown in FIGS. 1 and 2, the reinforcing bar binding robot 100 is disposed on the reinforcing bar group R to travel along the first reinforcing bars R10. The reinforcing bar group R may include a plurality of reinforcing bars extending in the X direction (also referred to as "second reinforcing bars R20" or "lateral reinforcing bars" in the present embodiment) in addition to the plurality of reinforcing bars R10.

In the embodiment of the present disclosure, the first reinforcing bars R10 are arranged such that a first direction, which is an extending direction of the first reinforcing bars R10, is parallel to the Y direction. Further, the second reinforcing bars R20 are disposed such that a second direction, which is an extension direction of the second reinforcing bars R20, is parallel to the X direction. Therefore, in the exemplary embodiment of the present disclosure, the first reinforcing bars R10 and the second reinforcing bars R20 are arranged to be orthogonal to each other. The first reinforcing bars R10 and the second reinforcing bars R20 are arranged such that a surface formed by the first reinforcing bars R10 and the second reinforcing bars R20 (also referred to as a "reinforcing bar surface" in the present embodiment) is parallel to the XY plane. Therefore, the surface formed by the first reinforcing bars R10 and the second reinforcing bars R20 is a horizontal surface in the present embodiment. The arrangement of the first reinforcing bars R10 and the second reinforcing bars R20 is not limited thereto. For example, the first reinforcing bars R10 and the second reinforcing bars R20 may be arranged not to be orthogonal to each other. For example, the first reinforcing bars R10 and the second reinforcing bars R20 may be disposed such that an angle formed by the first reinforcing bars R10 and the second reinforcing bars R20 is, for example, 30°, 45°, 60°, or another degree. In the embodiment of the present disclosure, the first reinforcing bars R10 and the second reinforcing bars R20 are arranged to be orthogonal to each other, but for example, the first reinforcing bars R10 and the second reinforcing bars R20 do not have to be orthogonal to each other depending on intersecting points, and may be arranged to form an angle of, for example, 85° or more and less than 90°.

The first reinforcing bars R10 and the second reinforcing bars R20 may have a finite length, and the plurality of first reinforcing bars R10 or the plurality of second reinforcing bars R20 may be connected via seams in the first direction or the second direction. Further, each of the first reinforcing bars R10 and the second reinforcing bars R20 may have ends as described later, and for example, the first reinforcing bar R10 and the second reinforcing bar R20 may have ends R10e and R20e described later at one end and the other end in the first direction and the second direction, respectively.

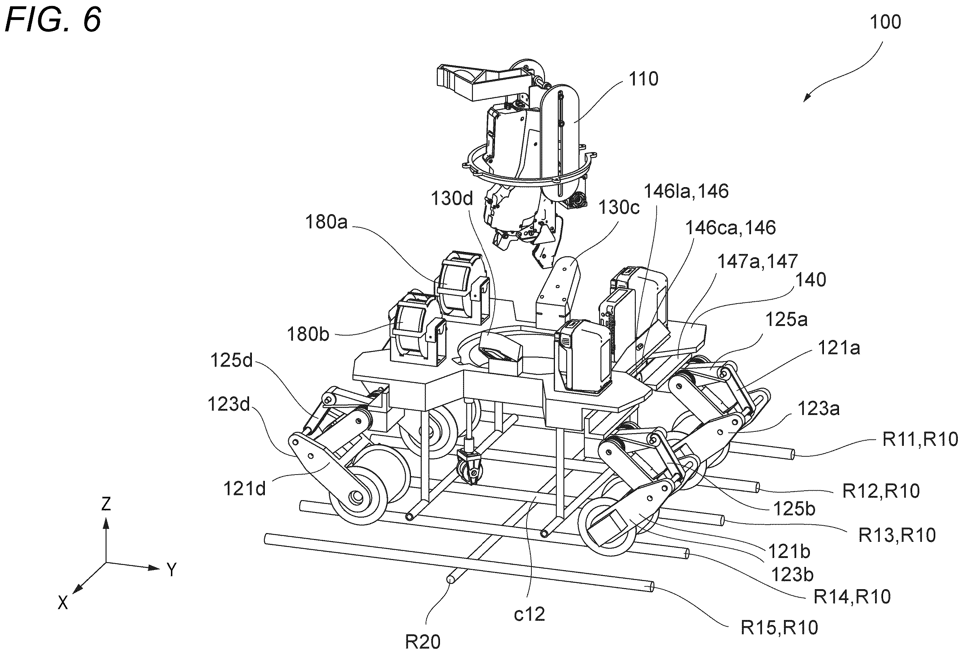

The reinforcing bar binding unit 110 is configured to bind an intersecting point c12 (FIG. 6) of the first reinforcing bar R10 and the second reinforcing bar R20. A binding operation at the intersecting point c12 of the first reinforcing bar R10 and the second reinforcing bar R20 performed by the reinforcing bar binding unit 110 will be described in detail later.

As shown in FIGS. 1 and 2, the traveling unit 121 may include four traveling units 121a, 121b, 121c, and 121d (in the present embodiment, also referred to as a "first traveling unit", a "second traveling unit", a "third traveling unit", and a "fourth traveling unit", respectively). In the embodiment of the present disclosure, the traveling unit 121 is disposed on the reinforcing bar group R such that the reinforcing bar binding robot 100 travels in the Y direction. The first traveling unit 121a, the second traveling unit 121b, the third traveling unit 121c, and the fourth traveling unit 121d include a first roller section 122a, a second roller section 122b, a third roller section 122c, and a fourth roller section 122d, respectively, and the first roller section 122a, the second roller section 122b, the third roller section 122c, and the fourth roller section 122d are configured to travel on any first reinforcing bar R10 of the plurality of first reinforcing bars R10 along the Y direction (first direction) that is the extension direction of the first reinforcing bars R10.

In the present embodiment, the traveling unit 121 is an example of a movement unit (movement unit 120 described below). Instead of the traveling unit 121 or in addition to the traveling unit 121, the movement unit 120 may have a configuration of a movement unit other than the traveling unit 121.

In the embodiment of the present disclosure, a case where the first traveling unit 121a, the second traveling unit 121b, the third traveling unit 121c, and the fourth traveling unit 121d are configured to travel in the Y direction will be described as an example, but the first traveling unit 121a, the second traveling unit 121b, the third traveling unit 121c, and the fourth traveling unit 121d may be configured to travel in a direction other than the Y direction.

For example, the first traveling unit 121a, the second traveling unit 121b, the third traveling unit 121c, and the fourth traveling unit 121d may travel in a direction inclined at an angle of several degrees to several tens of degrees from the Y direction. For example, these traveling units may travel in a direction inclined at an angle of several degrees to several tens of degrees from the Y direction to the +X direction or -X direction. For example, if an orientation of the reinforcing bar binding robot 100 is inclined from the Y direction due to the presence of a foreign matter on the traveling first reinforcing bar R10 or the like, the traveling direction of the first traveling unit 121a, the second traveling unit 121b, the third traveling unit 121c, and the fourth traveling unit 121d is at least temporarily inclined from the Y direction to the +X direction or -X direction. Even in this case, for example, the first traveling unit 121a, the second traveling unit 121b, the third traveling unit 121c, and the fourth traveling unit 121d may travel in a direction (in the -X direction or the +X direction) that returns the inclination of the orientation of the reinforcing bar binding robot 100 to the Y direction, so that the reinforcing bar binding robot 100 travels to substantially follow the first reinforcing bar R10. Accordingly, the reinforcing bar binding unit 110 of the reinforcing bar binding robot 100 can continue the binding operation at the intersecting point c12 of the first reinforcing bar R10 and the second reinforcing bar R20.

For example, even at a construction site where the first reinforcing bars R10 are arranged to draw a curve, the first traveling unit 121a, the second traveling unit 121b, the third traveling unit 121c, and the fourth traveling unit 121d may be configured to travel to draw a curve to follow the curved first reinforcing bars R10, and in this case, the first direction that is the extension direction of the first reinforcing bars R10 may be different for each point constituting the curve.

As shown in FIGS. 1 and 2 and FIG. 3 described later, the sensor unit 130 includes a sensor 130a, a sensor 130b, a sensor 130c, and a sensor 130d (in the present embodiment, also referred to as a "first sensor", a "second sensor", a "third sensor", and a "fourth sensor", respectively). The first sensor 130a and the second sensor 130b are disposed apart from each other along the Y direction in FIGS. 1 and 2 (in the present embodiment, a direction along which a straight line connecting the first sensor 130a and the second sensor 130b extends is also referred to as a "third direction"). The fourth sensor 130d is disposed on a side surface of the reinforcing bar binding robot 100 opposite to a side surface on which the third sensor 130c is provided (a side surface on a back side of the paper surface in FIGS. 1 and 2), and the third sensor 130c and the fourth sensor 130d are disposed apart from each other along a direction intersecting with the Y direction in FIGS. 1 and 2 (the X direction in the example shown in FIGS. 1 and 2, and the extension direction of the straight line connecting the third sensor 130c and the fourth sensor 130d in the present embodiment are also referred to as a "fourth direction").

The first sensor 130a, the second sensor 130b, the third sensor 130c, and the fourth sensor 130d are configured to detect the first reinforcing bar R10 and/or the second reinforcing bar R20. For example, the first sensor 130a and the second sensor 130b may be configured to detect the first reinforcing bar R10, and the third sensor 130c and the fourth sensor 130d may be configured to detect the second reinforcing bar R20. Alternatively, all of the first sensor 130a, the second sensor 130b, the third sensor 130c, and the fourth sensor 130d may be configured to detect the first reinforcing bar R10 and the second reinforcing bar R20.

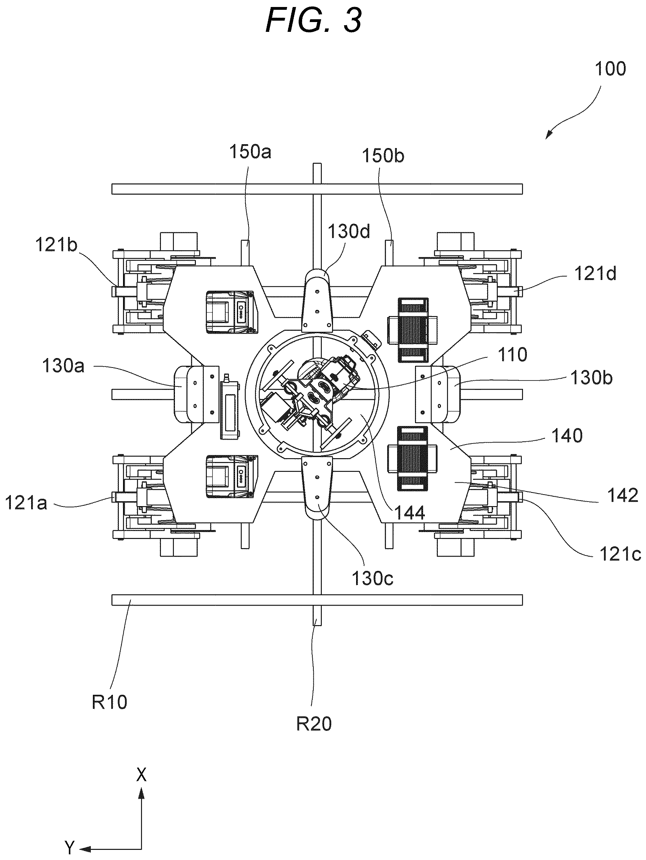

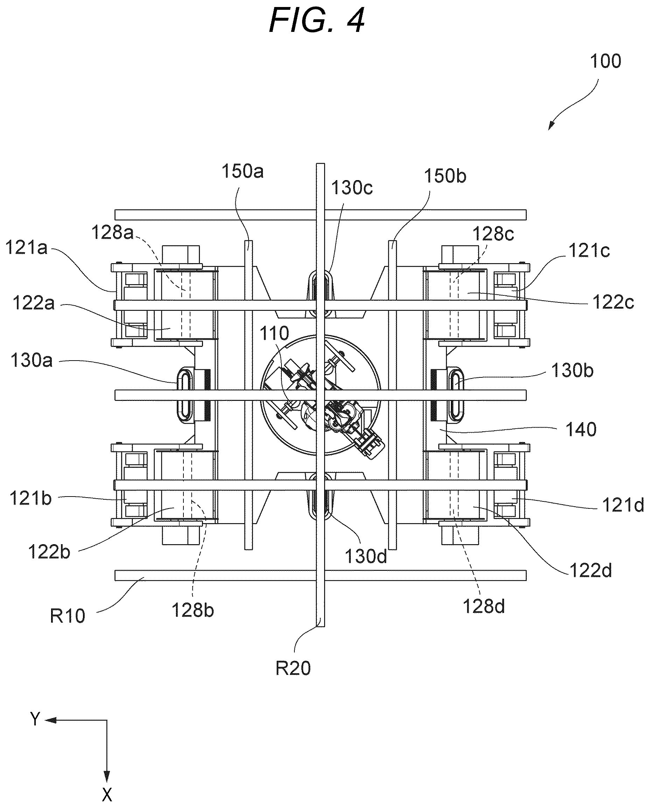

FIG. 3 shows a plan view of the reinforcing bar binding robot 100, as viewed from the upward direction (above in a Z direction). FIG. 4 shows a plan view of the reinforcing bar binding robot 100, as viewed from the downward direction (below in the Z direction).

As can be seen from FIGS. 3 and 4, the first traveling unit 121a and the second traveling unit 121b may be disposed on one side and the other side (a left side and a right side in the X direction in FIG. 3) in the fourth direction (X direction) with respect to the first sensor 130a. The third traveling unit 121c and the fourth traveling unit 121d may be disposed on one side and the other side in the fourth direction (X direction) with respect to the second sensor 130b. In other words, the first sensor 130a may be disposed between the first traveling unit 121a and the second traveling unit 121b in the fourth direction. Similarly, the second sensor 130b may be disposed between the third traveling unit 121c and the fourth traveling unit 121d in the fourth direction.

Further, as shown in FIGS. 3 and 4, the third sensor 130c may be disposed between the first traveling unit 121a and the third traveling unit 121c in the third direction (Y direction in FIGS. 3 and 4), and similarly, the fourth sensor 130d may be disposed between the second traveling unit 121b and the fourth traveling unit 121d in the third direction (Y direction).

For example, as shown in FIG. 4, the first sensor 130a may be disposed on a straight line passing through a rotation shaft 128a of the first roller section 122a constituting the first traveling unit 121a and a rotation shaft 128b of the second roller section 122b constituting the second traveling unit 121b, or disposed more rearward (-Y direction in FIG. 4) than the straight line passing through the rotation shaft 128a and the rotation shaft 128b when viewed from below. Similarly, the second sensor 130b may be disposed on a straight line passing through a rotation shaft 128c of the third roller section 122c constituting the third traveling unit 121c and a rotation shaft 128d of the fourth roller section 122d constituting the fourth traveling unit 121d, or disposed more forward (+Y direction in FIG. 4) than the straight line passing through the rotation shaft 128c and the rotation shaft 128d when viewed from below. A specific example of the sensor unit 130 will be described later.

As shown in FIGS. 3 and 4, the first sensor 130a is disposed in front of the body unit 140 in the Y axis direction (+Y direction). Similarly, the second sensor 130b is disposed behind the body unit 140 in the Y axis direction (-Y direction). The third sensor 130c and the fourth sensor 130d are respectively disposed on a left side and a right side of the body unit 140 in the X direction in a top view in FIG. 3. That is, for example, as can be seen from FIG. 4 and the like, in the present embodiment, the first sensor 130a, the second sensor 130b, the third sensor 130c, and the fourth sensor 130d are disposed on or inside outer edges of a rectangle virtually formed by connecting the vicinity of centers of the first traveling unit 121a, the second traveling unit 121b, the third traveling unit 121c, and the fourth traveling unit 121d in a plan view of the reinforcing bar binding robot 100. Note that the rectangle virtually formed by the first traveling unit 121a to the fourth traveling unit 121d may be a square when, for example, intervals between the traveling units in the X direction and the Y direction are substantially equal, and in this case, the first sensor 130a to the fourth sensor 130d may be disposed on or inside the outer edges of the virtual square. Depending on arrangement configurations of the first traveling unit 121a to the fourth traveling unit 121d, a quadrangle other than a rectangle and a square may be virtually formed by the first traveling unit 121a to the fourth traveling unit 121d, and also in this case, the first sensor 130a to the fourth sensor 130d may be disposed on or inside outer edges of the virtual quadrangle.

A case where the first sensor 130a, the second sensor 130b, the third sensor 130c, and the fourth sensor 130d are disposed on or inside outer edges of a rectangle virtually formed by connecting the vicinity of centers of the first traveling unit 121a, the second traveling unit 121b, the third traveling unit 121c, and the fourth traveling unit 121d has been described as an example, but the present invention is not limited thereto. For example, the first sensor 130a, the second sensor 130b, the third sensor 130c, and the fourth sensor 130d may have different arrangement configurations depending on the arrangement configurations of the first traveling unit 121a, the second traveling unit 121b, the third traveling unit 121c, and the fourth traveling unit 121d and/or a shape of the body unit 140. For example, the first sensor 130a, the second sensor 130b, the third sensor 130c, and the fourth sensor 130d may be disposed on or outside the outer edges of the rectangle virtually formed by connecting the vicinity of centers of the first traveling unit 121a, the second traveling unit 121b, the third traveling unit 121c, and the fourth traveling unit 121d in a plan view of the reinforcing bar binding robot 100.

As shown in FIGS. 1 and 3, the body unit 140 may include a body upper surface 142. For example, a circular hole 144 may be formed in the vicinity of a center of the body upper surface 142, and the reinforcing bar binding unit 110 may be disposed penetrating the hole 144.

In the present embodiment, the reinforcing bar binding robot 100 may include, for example, two support bars 150 (a first support bar 150a and a second support bar 150b). The first support bar 150a and the second support bar 150b are bars extending in one direction, and are provided, for example, in parallel to the fourth direction (the X direction in FIGS. 1 to 4). Therefore, in the embodiment of the present disclosure, the first support bar 150a and the second support bar 150b are provided to be parallel to a horizontal direction, for example. As shown in FIGS. 1 to 4, the first support bar 150a and the second support bar 150b may be provided apart from each other in the Y direction (third direction). For example, the first support bar 150a and the second support bar 150b may be configured to support the body unit 140 and the like of the reinforcing bar binding robot 100 when the reinforcing bar binding robot 100 moves in a lateral direction (the X direction in FIGS. 1 to 4, the fourth direction in the reinforcing bar binding robot 100).

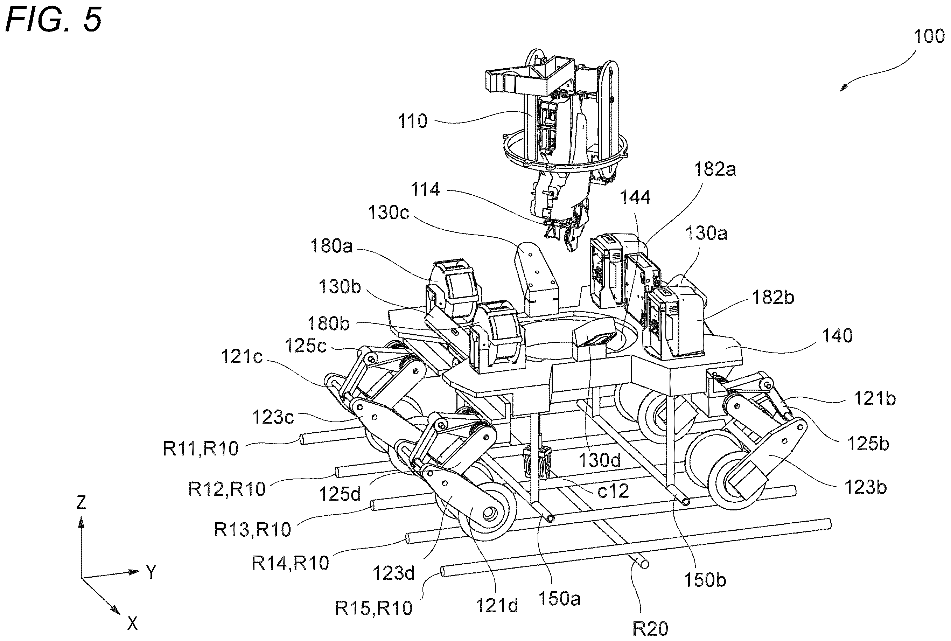

FIG. 5 is a perspective view of the reinforcing bar binding robot 100 with the reinforcing bar binding unit 110 removed, as viewed from obliquely rearward right. FIG. 6 is a perspective view of the reinforcing bar binding robot 100 with the reinforcing bar binding unit 110 removed, as viewed from obliquely forward right. As shown in FIGS. 5 and 6, the reinforcing bar binding unit 110 may be provided to be movable in an up-down direction (Z direction in FIG. 5) while penetrating the hole 144. Accordingly, for example, when the reinforcing bar binding unit 110 is lowered, and the reinforcing bar binding robot 100 reaches the intersecting point c12 of the first reinforcing bar R10 and the second reinforcing bar R20, and the intersecting point c12 of the first reinforcing bar R10 and the second reinforcing bar R20 is bound. As shown in FIGS. 5 and 6, the binding device 100 has the reels 180a and 180b. A wire used for binding the reinforcing bars is accommodated in the reel 180a and the reel 180b, and when the reinforcing bar binding unit 110 binds the intersecting point c12 of the first reinforcing bar R10 and the second reinforcing bar R20, the wire accommodated in the reel 180a and/or the reel 180b is drawn out to perform binding at the intersecting point c12. Although the detailed description is omitted, at one end (a lower end in the Z direction in FIG. 5) of the reinforcing bar binding unit 110, the reinforcing bar binding unit 110 is provided with a wire twisting section 114 (FIG. 5) having a wire guide and the like and configured to perform a reinforcing bar binding work. The reinforcing bar binding work of the wire twisting section 114 may be implemented by, for example, a function same as that of a well-known reinforcing bar binding machine.

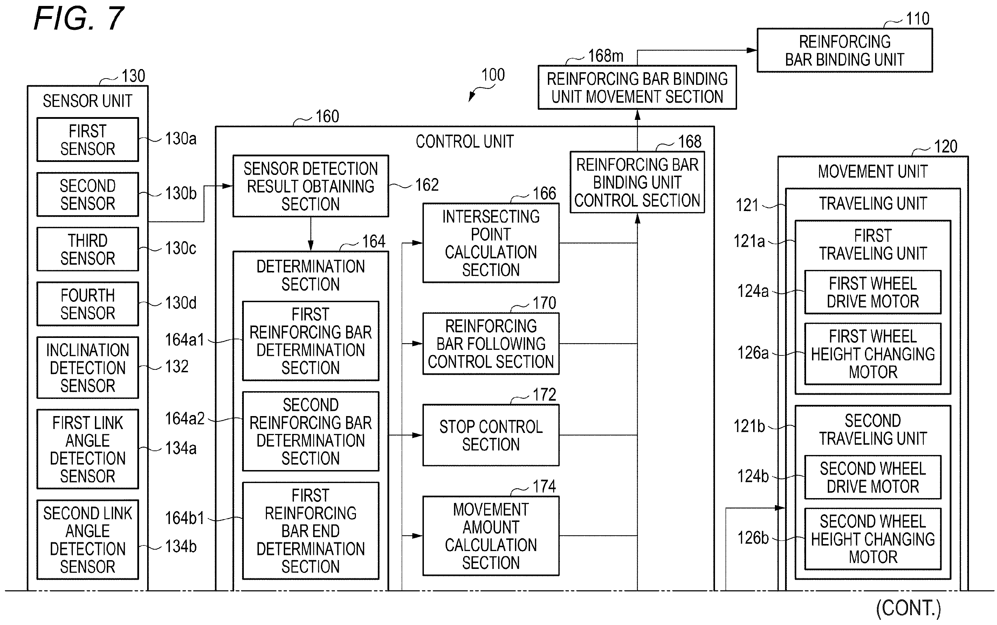

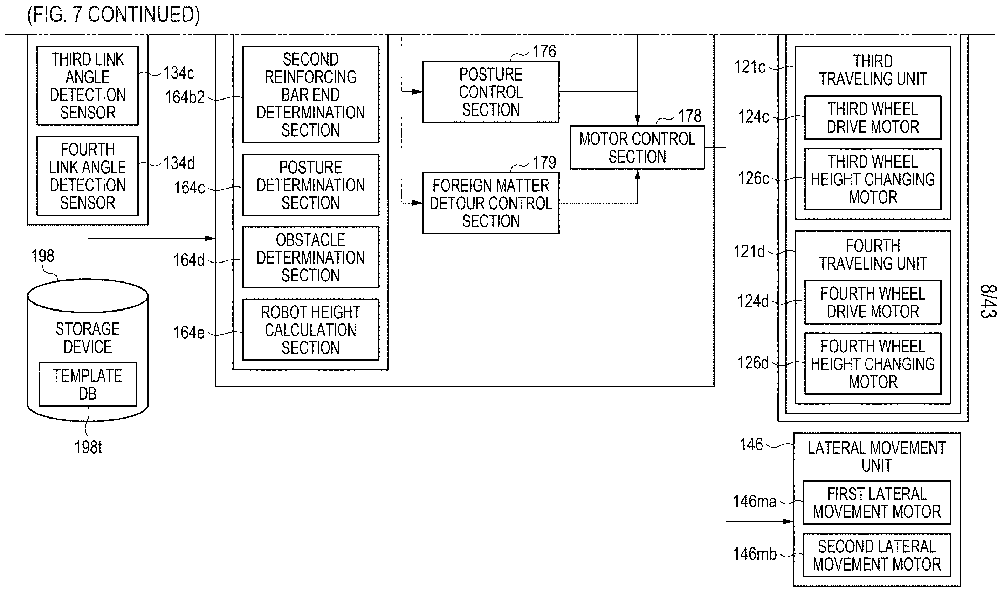

FIG. 7 is a diagram illustrating a functional block configuration of the reinforcing bar binding robot 100. As shown in FIG. 7, the reinforcing bar binding robot 100 may include the control unit 160, the lateral movement unit 146, and the storage device 198 in addition to the configurations of the reinforcing bar binding unit 110, the traveling unit 121, the sensor unit 130, and the like described above.

The control unit 160 is configured to control movement and the binding work performed by the reinforcing bar binding robot 100. The control unit 160 may include a sensor detection result obtaining section 162, a determination section 164, an intersecting point calculation section 166 (also referred to as an "intersecting point estimation section" or an "intersecting point estimation unit" in the present embodiment), a reinforcing bar binding unit control section 168, a reinforcing bar following control section 170, a stop control section 172, a movement amount calculation section 174, a posture control section 176, a motor control section 178, and a foreign matter detour control section 179.

In the reinforcing bar binding robot 100 of the present embodiment, as shown in FIG. 1, the control unit 160 is disposed on a side opposite to the reel 180a and the reel 180b with respect to the reinforcing bar binding unit 110 in the Y direction. More specifically, as shown in FIG. 1, the reel 180a and the reel 180b are disposed in the -Y direction of the reinforcing bar binding unit 110, whereas the control unit 160 is disposed in the +Y direction of the reinforcing bar binding unit 110. In particular, immediately after replacing the wire reels (the reel 180a and/or the reel 180b), the reels wound with the wire become heavier, but by disposing the control unit 160 on the side opposite to the reinforcing bar binding unit 110, it is possible to balance the weight.

The lateral movement unit 146 (FIG. 7) is configured to control movement of the body unit 140 of the reinforcing bar binding robot 100. In the reinforcing bar binding robot 100 according to the embodiment of the present disclosure, the reinforcing bar binding robot 100 may be moved in the horizontal direction by the lateral movement unit 146. The lateral movement unit 146 may include a first lateral movement motor 146ma and a second lateral movement motor 146mb, and for example, when the reinforcing bar binding robot 100 is in lateral movement described later, the body unit 140 may be horizontally moved by the two motors 146ma and 146mb.

More specifically, as shown in FIG. 6, the lateral movement unit 146 includes a first lateral movement roller 146la and a first drive rack 146ca. The first lateral movement roller 146la is provided on a first connecting section 147a that connects the first traveling unit 121a and the second traveling unit 121b to the body unit 140. The first drive rack 146ca is provided along the X direction on a back surface (surface in a -Z direction) of the body unit 140.

Similarly, as shown in FIG. 2, the lateral movement unit 146 includes a second lateral movement roller 146lb and a second drive rack 146cb. The second lateral movement roller 146lb is provided on a second connecting section 147b that connects the third traveling unit 121c and the fourth traveling unit 121d to the body unit 140. The second drive rack 146cb is provided along the X direction on the back surface (surface in the -Z direction) of the body unit 140.

The second lateral movement roller 146lb constitutes, for example, a drive gear. In the second drive rack 146cb, for example, a plurality of teeth that mesh with external teeth provided on an outer circumference of the second lateral movement roller 146lb are arranged in a straight line in the X direction. The second lateral movement roller 146lb is driven by the second lateral movement motor 146mb. When the second lateral movement roller 146lb is rotated by the second lateral movement motor 146mb, the second lateral movement roller 146lb moves relative to the second drive rack 146cb to follow a longitudinal direction of the second drive rack 146cb. In this way, the body unit 140 can move in the X direction relative to the third traveling unit 121c and the fourth traveling unit 121d.

The first lateral movement roller 146la (FIG. 6) also constitutes, for example, a drive gear, and in the first drive rack 146ca, a plurality of teeth that mesh with external teeth provided on an outer circumference of the first lateral movement roller 146la are arranged in a straight line in the X direction. The first lateral movement roller 146la is driven by the first lateral movement motor 146ma. When the first lateral movement roller 146la is rotated by the first lateral movement motor 146ma, the first lateral movement roller 146la moves relative to the first drive rack 146ca along a longitudinal direction of the first drive rack 146ca, so that the body unit 140 can move in the X direction relative to the third traveling unit 121c and the fourth traveling unit 121d.

Accordingly, the body unit 140 may perform the lateral movement (in the X direction) relative to the traveling unit 121 by driving the first lateral movement roller 146la and the second lateral movement roller 146lb by the first lateral movement motor 146a and the second lateral movement motor 146b, respectively.

The storage device 198 may include, for example, a storage medium (for example, a semiconductor memory device) or other media for non-transitorily storing one or more computer programs executed in the control unit 160, data used to control the reinforcing bar binding robot 100, and the like. The storage device 198 may include, for example, a template database 198t. For example, as will be described later, the template database 198t may store a template image used when detecting the first reinforcing bar R10 and/or the second reinforcing bar R20 and the end R10e of the first reinforcing bar R10 and/or the end R20e of the second reinforcing bar R20 by using template matching based on the detection result of the sensor unit 130, and may store data obtained by performing image processing such as frequency analysis on the template image, and the like. The control unit 160 may further include a template data creation section, and for example, may be configured to create template data based on an image captured by the sensor unit 130 according to a site subjected to the reinforcing bar binding work, and to store the template data in the template database 198t. The template data stored in the template database 198t may be accumulated, for example, at a timing when new template data is created, or may be deleted at a timing when the binding work at the construction site is completed. Alternatively, the created template data may be configured to be retained in the template database 198t of the storage device 198 for a certain period of time and then deleted, for example, periodically.

The sensor detection result obtaining section 162 obtains the detection result from the sensor unit 130. For example, detection results of the first sensor 130a, the second sensor 130b, the third sensor 130c, and/or the fourth sensor 130d of the sensor unit 130 may be used for the determination on positions of the first reinforcing bar R10 and/or the second reinforcing bar R20 by a first reinforcing bar determination section 164al and/or a second reinforcing bar determination section 164a2 of the determination section 164 described later. The detection results of the first sensor 130a, the second sensor 130b, the third sensor 130c, and/or the fourth sensor 130d may be used for the determination on the positions of the end R10e of the first reinforcing bar R10 and/or the end R20e of the second reinforcing bar R20 by a first reinforcing bar end determination section 164b1 and/or a second reinforcing bar end determination section 164b2 of the determination section 164.

The determination section 164 may include the first reinforcing bar determination section 164a1, the second reinforcing bar determination section 164a2, the first reinforcing bar end determination section 164bl, the second reinforcing bar end determination section 164b2, a posture determination section 164c, an obstacle determination section 164d, and a robot height calculation section 164e. The first reinforcing bar determination section 164al and the second reinforcing bar determination section 164a2 determine the positions of the first reinforcing bar R10 and/or the second reinforcing bar R20 by using, for example, the detection results from the first sensor 130a, the second sensor 130b, the third sensor 130c, and/or the fourth sensor 130d obtained by the sensor detection result obtaining section 162. As will be described later, the first reinforcing bar determination section 164a1 and the second reinforcing bar determination section 164a2 may determine the positions of the first reinforcing bar R10 and/or the second reinforcing bar R20 by performing the template matching based on captured images that are the detection results of the first sensor 130a to the fourth sensor 130d.

The first reinforcing bar end determination section 164b1 and the second reinforcing bar end determination section 164b2 determine the end R10e of the first reinforcing bar R10 and/or the end R20e of the second reinforcing bar R20 by using, for example, the detection results from the first sensor 130a, the second sensor 130b, the third sensor 130c, and/or the fourth sensor 130d obtained by the sensor detection result obtaining section 162. Similarly to the first reinforcing bar determination section 164al and the second reinforcing bar determination section 164a2, the first reinforcing bar end determination section 164bl and the second reinforcing bar end determination section 164b2 may also determine the positions of the end R10e of the first reinforcing bar R10 and/or the end R20e of the second reinforcing bar R20 based on the template matching.

For example, the robot height calculation section 164e may calculate a height of the reinforcing bar binding robot 100 from the reinforcing bar group R based on the detection results of the first sensor 130a, the second sensor 130b, the third sensor 130c, and/or the fourth sensor 130d. For example, when images of the first reinforcing bar R10 and/or the second reinforcing bar R20 are captured by the first sensor 130a, the second sensor 130b, the third sensor 130c, and/or the fourth sensor 130d (for example, when an image of a range including the first reinforcing bar R10 and/or the second reinforcing bar R20 is captured), the robot height calculation section 164e may calculate the height of the reinforcing bar binding robot 100 from the reinforcing bar group R by calculating a distance of the reinforcing bar binding robot 100 from the reinforcing bar group R based on a relative size of the first reinforcing bar R10 and/or the second reinforcing bar R20 in the captured images of the first reinforcing bar R10 and/or the second reinforcing bar R20.

The height of the reinforcing bar binding robot 100 from the reinforcing bar group R may be calculated based on, for example, an angle of the traveling unit 121. As shown in FIG. 6, the traveling unit 121a may include a first body side link section 125a connected to the body section 140 and a first roller side link section 123a connected to the first roller section 122a, and the first body side link section 125a and the first roller side link section 123a may constitute a link mechanism. In this case, a link angle which is an angle formed by the first body side link section 125a and the first roller side link section 123a may be detected by a first link angle detection sensor 134a (FIG. 7) of the sensor unit 130, and a height of the first traveling unit 121a may be calculated based on the link angle.

Similarly, as shown in FIG. 2, the second traveling unit 121b may include a second body side link section 125b and a second roller side link section 123b, the third traveling unit 121c may include a third body side link section 125c and a third roller side link section 123c, and the fourth traveling unit 121d may include a fourth body side link section 125d and a fourth roller side link section 123d, and heights of the second traveling unit 121b, the third traveling unit 121c, and the fourth traveling unit 121d may be calculated by detecting a link angle formed by the second body side link section 125b and the second roller side link section 123b, a link angle formed by the third body side link section 125c and the third roller side link section 123c, and a link angle formed by the fourth body side link section 125d and the fourth roller side link section 123d by a second link angle detection sensor 134b, a third link angle detection sensor 134c, and a fourth link angle detection sensor 134d, respectively.

The robot height calculation section 164e may calculate the height of the reinforcing bar binding robot 100 from the reinforcing bar group R based on the thus calculated heights of the first traveling unit 121a, the second traveling unit 121b, the third traveling unit 121c, and the fourth traveling unit 121d (heights from the reinforcing bar group R). For example, the height of the reinforcing bar binding robot 100 may be calculated by an average value of some or all of the calculated heights of the first traveling unit 121a, the second traveling unit 121b, the third traveling unit 121c, and the fourth traveling unit 121d. For example, when the reinforcing bar binding robot 100 is positioned parallel or substantially parallel to a virtual plane formed by the reinforcing bar group R, the height of the reinforcing bar binding robot 100 may be any one of the heights of the first traveling unit 121a, the second traveling unit 121b, the third traveling unit 121c, and the fourth traveling unit 121d.

As shown in FIG. 7, the sensor unit 130 may include an inclination detection sensor 132 in addition to the first sensor 130a to the fourth sensor 130d described above. As the inclination detection sensor 132, a sensor capable of detecting an inclination angle of the reinforcing bar binding robot 100, such as a well-known inclination sensor or horizontal sensor, may be used. The sensor detection result obtaining section 162 may also obtain a detection result from the inclination detection sensor 132. For example, a posture of the reinforcing bar binding robot 100 may be determined by the posture determination section 164c of the determination section 164 based on the detection result of the inclination detection sensor 132, and the posture of the reinforcing bar binding robot 100 may be adjusted by driving a height changing motor 126 of the traveling unit 121 (a first height changing motor 126a of the first traveling unit 121a, a second height changing motor 126b of the second traveling unit 121b, a third height changing motor 126c of the third traveling unit 121c, and/or a height changing motor 126d of the fourth traveling unit 121d) by the posture control section 176 based on the determination result of the posture determination section 164c.

For example, the reinforcing bar binding robot 100 may drive the height changing motor 126 based on the detection result of the inclination detection sensor 132 such that the body unit 140 is parallel to the surface formed by the first reinforcing bars R10 and/or the second reinforcing bars R20 (also referred to as the "reinforcing bar surface" in the present embodiment). For example, if the reinforcing bar binding robot 100 is inclined in the X direction when the first reinforcing bars R10 and the second reinforcing bars R20 are arranged such that the reinforcing bar surface extends in the horizontal direction, the height of the first traveling unit 121a and the third traveling unit 121c or the second traveling unit 121b and the fourth traveling unit 121d among the first traveling unit 121a to the fourth traveling unit 121d may be changed to adjust the posture of the reinforcing bar binding robot 100.

The intersecting point calculation section 166 estimates the intersecting point c12 of the first reinforcing bar R10 and the second reinforcing bar R20 by calculating the intersecting point c12. For example, as described later, the intersecting point calculation section 166 may calculate a position of the intersecting point c12 based on a position of the first reinforcing bar R10 and a position of the second reinforcing bar R20 determined by the first reinforcing bar determination section 164al and the second reinforcing bar determination section 164a2. The reinforcing bar binding robot 100 may perform the binding work by the reinforcing bar binding unit 110 based on the calculated position of the intersecting point c12. Based on the estimated position of the intersecting point c12, the motor control section 178 may adjust the position of the reinforcing bar binding robot 100 by the first traveling unit 121a, the second traveling unit 121b, the third traveling unit 121c, and/or the fourth traveling unit 121d such that the reinforcing bar binding unit 110 is above the intersecting point c12.

The reinforcing bar binding unit control section 168 controls the movement of the reinforcing bar binding unit 110 by controlling a reinforcing bar binding unit movement section 168m. The reinforcing bar binding unit 110 can take a binding position where the reinforcing bar binding unit 110 performs a binding operation to bind the intersecting point c12 where the first reinforcing bar R10 and the second reinforcing bar R20 are intersected with each other, and a retracted position where the reinforcing bar binding unit 110 retracts after the binding operation is completed and moves to the intersecting point c12 where a next binding operation is performed. When moving from the retracted position to the binding position, the reinforcing bar binding unit 110 moves in the -Z direction, and when moving from the binding position to the retracted position, the reinforcing bar binding unit 110 moves in a +Z direction. Such movement of the reinforcing bar binding unit 110 in the Z direction is implemented by the reinforcing bar binding unit movement section 168m implemented by, for example, a motor. A lifting operation on the reinforcing bar binding unit 110 in the Z direction by the reinforcing bar binding unit movement section 168m is controlled by the reinforcing bar binding unit control section 168.

The reinforcing bar binding unit control section 168 also controls the binding operation at the intersecting point c12 by the reinforcing bar binding unit 110 after the reinforcing bar binding unit 110 moves to the binding position. For example, the binding work performed by the reinforcing bar binding unit 110, which is executed using a wire drawn out from the reels 180 by wire drawing sections described later, is controlled by the reinforcing bar binding unit control section 168. For example, after moving the reinforcing bar binding robot 100 by the first traveling unit 121a, the second traveling unit 121b, the third traveling unit 121c, and/or the fourth traveling unit 121d such that the reinforcing bar binding unit 110 is positioned above the intersecting point c12, the reinforcing bar binding unit control section 168 may control the reinforcing bar binding unit movement section 168m to lower the reinforcing bar binding unit 110 to the binding position to approach the intersecting point c12, and perform the binding at the intersecting point c12.

For example, the reinforcing bar following control section 170 may cause the motor control section 178 to control the traveling unit 121 to follow the first reinforcing bar R10 on which the reinforcing bar binding robot 100 is traveling, based on information such as the position of the first reinforcing bar R10 determined by the first reinforcing bar determination section 164a1. For example, as shown in FIG. 5, when the reinforcing bar binding robot 100 travels on a first reinforcing bar R12 and a first reinforcing bar R14, drive motors of the traveling unit 121 (a first wheel drive motor 124a for driving the first roller section 122a, a second wheel drive motor 124b for driving the second roller section 122b, a third wheel drive motor 124c for driving the third roller section 122c, and/or a fourth wheel drive motor 124d for driving the fourth roller section 122d) may perform driving such that the reinforcing bar binding robot 100 does not separate from the first reinforcing bar R12 and the first reinforcing bar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are drive motors of the first traveling unit 121a and the third traveling unit 121c disposed at the same position or substantially the same position in the X direction, may be accelerated or decelerated with respect to the second wheel drive motor 124b and the fourth wheel drive motor 124d, which are drive motors of the second traveling unit 121b and the fourth traveling unit 121d disposed on the other side in the X direction, to adjust the position of the reinforcing bar binding robot 100 and cause the reinforcing bar binding robot 100 to travel to follow the first reinforcing bars R10.

Alternatively, the reinforcing bar following control section 170 may cause the reinforcing bar binding robot 100 to travel to follow the first reinforcing bars R10, for example, by adjusting rotation speeds of the first wheel drive motor 124a, the second wheel drive motor 124b, the third wheel drive motor 124c, and/or the fourth wheel drive motor 124d. For example, the reinforcing bar binding robot 100 can be made to flexibly follow the first reinforcing bars R10 by setting the rotation speed of one or more of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to rotation speeds different from each other.

The stop control section 172 is configured to control a stop operation of the reinforcing bar binding robot 100. For example, as will be described later, if it is determined that the reinforcing bar binding robot 100 that travels on the first reinforcing bar R12 and the first reinforcing bar R14 is present in the vicinity of an end R13e of a first reinforcing bar R13 or approaching the end R13e by the first reinforcing bar end determination section 164b1 and/or the second reinforcing bar end determination section 164b2 based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d and stop the reinforcing bar binding robot 100. The reinforcing bar binding robot 100 may be stopped if it is determined that the reinforcing bar binding robot 100 is present in the vicinity of an end R12e of the first reinforcing bar R12 and/or an end R14e of the first reinforcing bar R14, or that the reinforcing bar binding robot 100 is approaching the end R12e and/or the end R14e, not limited to the end R13e of the first reinforcing bar R13, instead of the end R13e, or in addition to the end R13e.

For example, when the above intersecting point calculation section 166 calculates the intersecting point c12 of the first reinforcing bar R10 and the second reinforcing bar R20, the stop control section 172 may stop the reinforcing bar binding robot 100 to bind the intersecting point c12 by the reinforcing bar binding unit 110.

As will be described later, for example, the movement amount calculation section 174 may be configured to calculate a movement amount when the reinforcing bar binding robot 100 performs the lateral movement (movement in the X direction). For example, as described above, if the first reinforcing bar end determination section 164b1 and/or the second reinforcing bar end determination section 164b2 determine that the reinforcing bar binding robot 100 is in the vicinity of or approaching the end R12e of the first reinforcing bar R12 and the end R14e of the first reinforcing bar R14, the reinforcing bar binding robot 100 completes the reinforcing bar binding work at the intersecting point c12 on the first reinforcing bar R13 disposed between the first reinforcing bar R12 and the first reinforcing bar R14, moves to other first reinforcing bars R10, and starts the reinforcing bar binding work at the intersecting point c12.

For example, when the reinforcing bar binding robot 100 completes the reinforcing bar binding work at the intersecting point c12 on the first reinforcing bar R13 and then performs the reinforcing bar binding work at the intersecting point c12 on the first reinforcing bar R14, the reinforcing bar binding robot 100 moves in the X direction by one interval with respect to intervals between the first reinforcing bars R10 in the X direction. In this case, the movement amount calculation section 174 may calculate the movement amount based on the interval between the adjacent first reinforcing bars R10 in the X direction based on the information on the positions of the first reinforcing bars R10 determined by the first reinforcing bar determination section 164a1. Similarly, when the reinforcing bar binding robot 100 performs the reinforcing bar binding work at the intersecting points c12 on the two or more separated first reinforcing bars R10 in the X direction, the movement amount may be calculated based on the interval between the first reinforcing bars R10. The lateral movement (for example, horizontal movement) of the body unit 140 by the lateral movement unit 146 during the lateral movement may be performed based on the calculated movement amount. The movement amount calculation section 174 may calculate a movement amount in a direction other than a lateral movement amount. For example, the movement amount calculation section 174 may calculate a movement amount of vertical movement (movement in the first direction or Y direction) of the reinforcing bar binding robot 100 based on the detection results of the sensors 130, the determination results of the reinforcing bar end determination section 164b1 and/or the reinforcing bar end determination section 164b2, and the like.

For example, a camera capable of capturing a two-dimensional image or a three-dimensional image may be used as the sensor unit 130, and a position of a foreign matter may be determined by, for example, the obstacle determination section 164d of the determination section 164 based on the detection result of the sensor unit 130. In a construction site or the like where reinforcing bars are assembled, for example, a tool or the like may be left or a worker may work on a reinforcing bar surface. These may be detected as foreign matters based on the detection results of the sensor unit 130, and the foreign matter detour control section 179 may be configured to drive the first wheel drive motor 124a, the second wheel drive motor 124b, the third wheel drive motor 124c, and/or the fourth wheel drive motor 124d by the motor control section 178 to detour the foreign matter based on the detection result of the foreign matter. Alternatively, the reinforcing bar binding robot 100 may be configured to detour the foreign matter by performing the lateral movement described later.

The control unit 160 is, for example, a processor such as a central processing unit (CPU) corresponding to a calculation section, and is a control section that performs control related to execution of a computer program stored in the storage device 198, calculation of data, and processing. The processor is a calculation section that executes a program for executing operations (reinforcing bar following and traveling, lateral movement (for example, horizontal movement), reinforcing bar binding work, and the like) of the reinforcing bar binding robot 100 using detection data and the like. The processor executes the program stored in the storage device 198 to cause each unit of the control unit (for example, the sensor detection result obtaining section 162) to be realized.

The storage device 198 may include, for example, a random access memory (RAM) and a read only memory (ROM). The RAM is a part of the storage unit in which data can be rewritten, and may be implemented by, for example, a semiconductor storage element. The RAM may store a program executed by the processor and data necessary for executing the program (for example, data and the like of a template used for determining the position of the reinforcing bar based on the detection result of the sensor unit 130 as described later). Note that these are examples, and other data may be stored in the RAM, or some of these may not be stored.

The ROM is a part of the storage unit from which data can be read, and may be implemented by, for example, a semiconductor storage element. The ROM may store, for example, a program executed by the control unit 160 and data that is not rewritten.

The program executed by the control unit 160 may be provided by being stored in a computer-readable storage medium such as the storage device 198 (for example, RAM or ROM), or may be provided via a communication network connected by a communication section (not shown) when the reinforcing bar binding robot 100 according to the present embodiment includes the communication section.

A physical configuration described above is an example, and in the reinforcing bar binding robot 100 according to the embodiment of the present disclosure, the control unit 160 and the storage device 198 may not necessarily be independent of each other. For example, the reinforcing bar binding robot 100 may include a large-scale integration (LSI) in which a processor and a memory are integrated. The reinforcing bar binding robot 100 may include a graphical processing unit (GPU) as the control unit 160, and various operations described above may be implemented by the GPU executing a program.

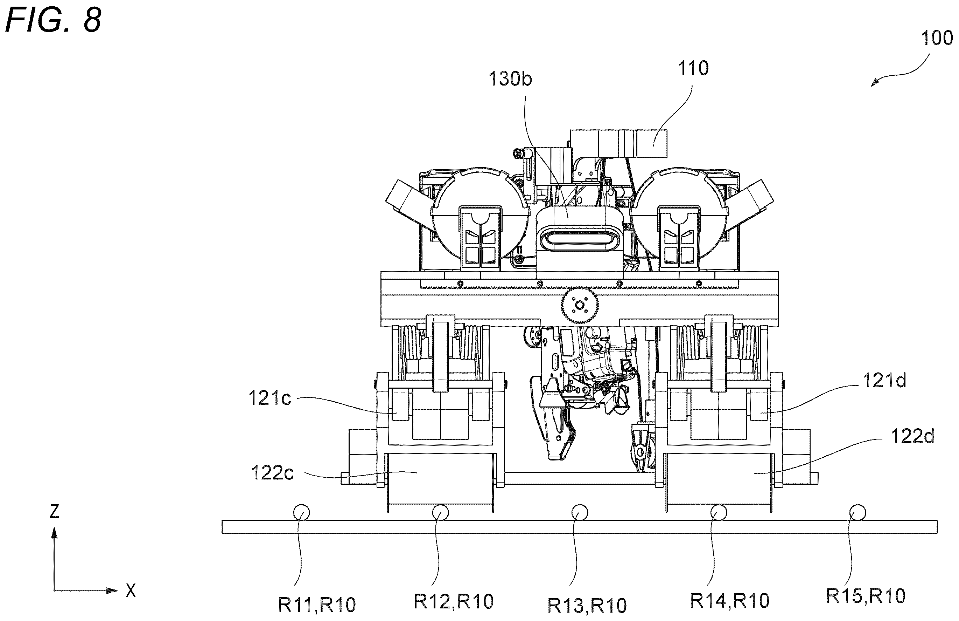

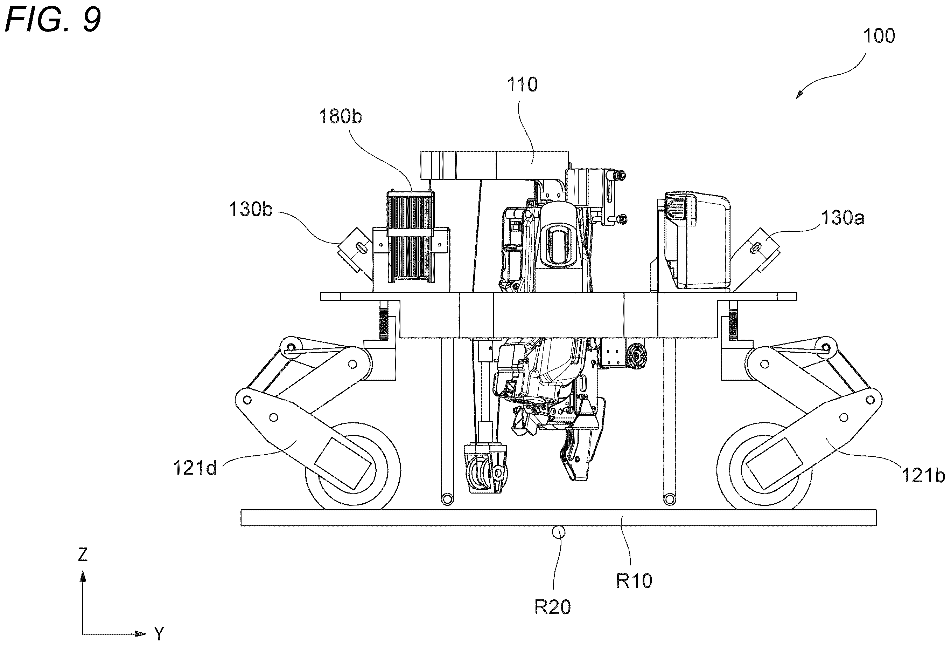

Next, a traveling operation on the reinforcing bar by the reinforcing bar binding robot 100 will be described with reference to FIGS. 8 and 9. FIG. 8 is a diagram of the reinforcing bar binding robot 100 being traveling along the first reinforcing bars R10, as viewed from the Y direction (-Y direction). FIG. 9 is a diagram of the reinforcing bar binding robot 100 being traveling along the first reinforcing bars R10, as viewed from the X direction (+X direction). In FIGS. 8 and 9, the reinforcing bar binding robot 100 travels in the first direction (Y direction). As shown in FIGS. 8 and 9, during the traveling, the reinforcing bar binding robot 100 travels such that the third roller 122c of the third traveling unit 121c is on the first reinforcing bar R12 and the fourth roller 122d of the fourth traveling unit 121d is on the first reinforcing bar R14. As shown in FIG. 9, the second roller section 122b of the second traveling unit 121b also travels on the first reinforcing bar R14, similarly to the fourth roller section 122d of the fourth traveling unit 121d. Although not shown in FIGS. 8 and 9, the first roller section 122a of the first traveling unit 121a also travels on the first reinforcing bar R12, similarly to the third roller section 122c of the third traveling unit 121c. Accordingly, when the reinforcing bar binding robot 100 according to the embodiment of the present disclosure travels along the first reinforcing bars R10, for example, the reinforcing bar binding robot 100 travels on the certain first reinforcing bar R10 (first reinforcing bar R12) and the certain first reinforcing bar R10 (first reinforcing bar R14) disposed two reinforcing bars away from the first reinforcing bar R12, and binds the intersecting point c12 of the first reinforcing bar R10 and the second reinforcing bar R20 present on the first reinforcing bar R13, which is the first reinforcing bar R10 present between the traveled first reinforcing bar R12 and the traveled first reinforcing bar R14.

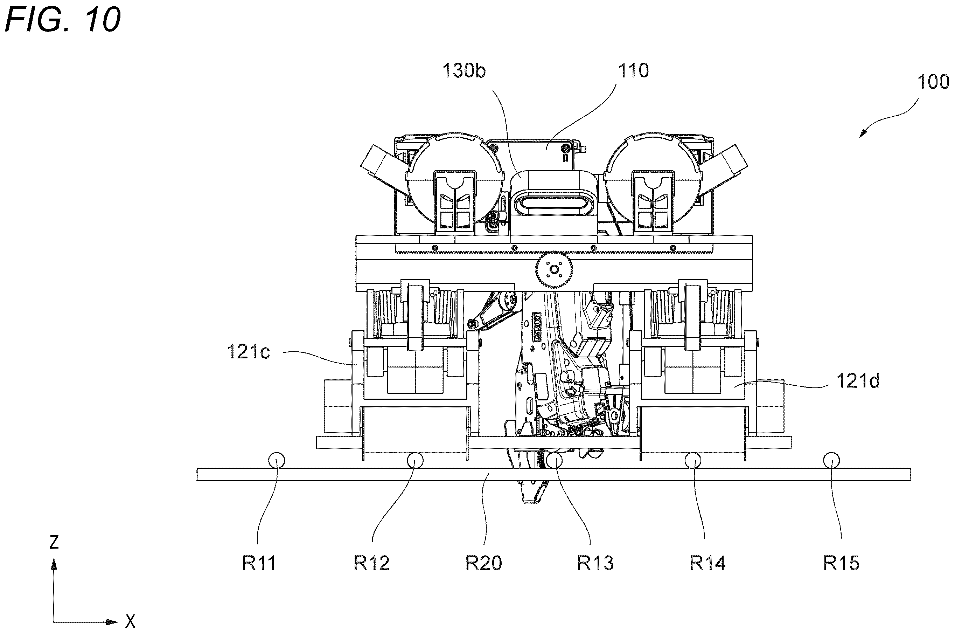

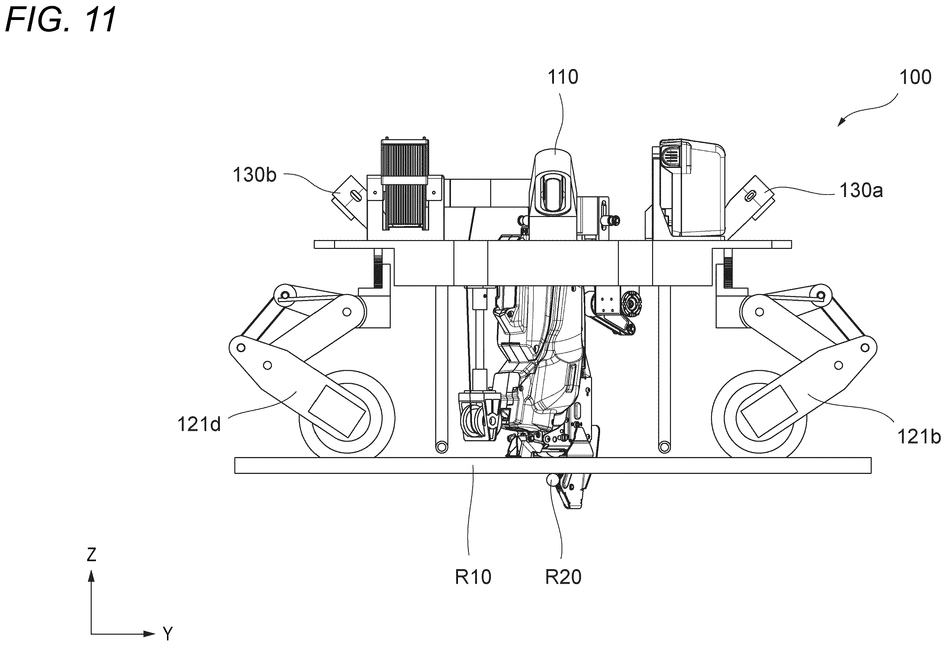

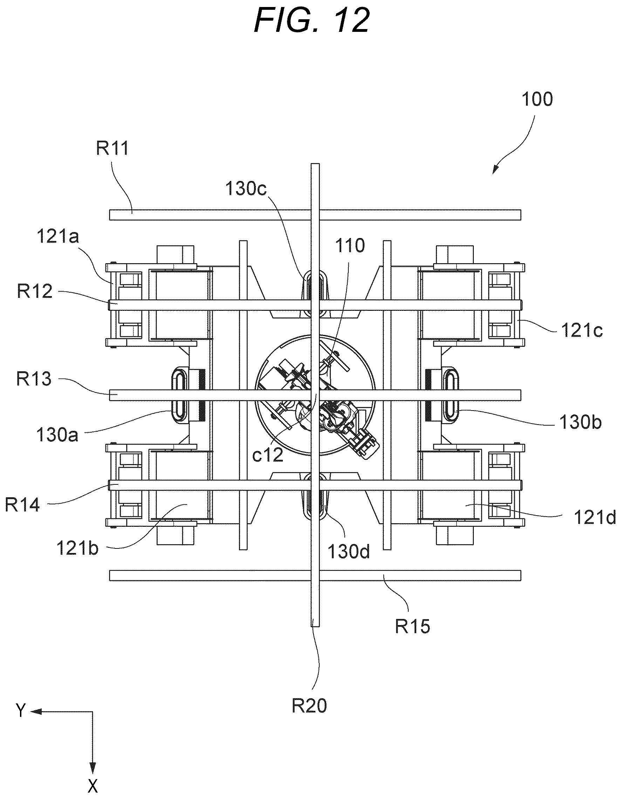

Next, the reinforcing bar binding robot 100 during the reinforcing bar binding work will be described with reference to FIGS. 10, 11, and 12. FIG. 10 is a diagram of the reinforcing bar binding robot 100 that stops traveling and performs the binding work, as viewed from the Y direction (-Y direction). FIG. 11 is a diagram of the reinforcing bar binding robot 100 that performs the binding work, as viewed from the X direction (+X direction). FIG. 12 is a diagram of the reinforcing bar binding robot 100 that performs the binding work, as viewed from below in the Z direction (-Z direction). FIGS. 10, 11, and 12 show an example in which the reinforcing bar binding robot 100 binds the intersecting point c12 of the first reinforcing bar R13 and the second reinforcing bar R20. When performing the binding work, the reinforcing bar binding robot 100 stops the traveling (FIG. 10) and lowers the reinforcing bar binding unit 110 to perform the binding (FIGS. 11 and 12).

Next, a configuration for calculating the position of the reinforcing bar group R (first reinforcing bars R10 and second reinforcing bars R20) by the reinforcing bar binding robot 100 according to the embodiment of the present disclosure will be described. The reinforcing bar binding robot 100 according to the embodiment of the present disclosure includes: the traveling unit 121 configured to travel on the reinforcing bar group R including the plurality of first reinforcing bars R1 whose extension direction is the Y direction (first direction) and the plurality of second reinforcing bars R2 whose extension direction is the X direction (second direction) intersecting with the Y direction (first direction) and that are arranged to intersect with the first reinforcing bars R1; the sensor unit 130 configured to detect at least one of the first reinforcing bars R10 and/or at least one of the second reinforcing bars R20; and the first reinforcing bar determination section 164a1 and/or the second reinforcing bar determination section 164a2 (also referred to as "reinforcing bar position calculation unit" in the present embodiment) configured to calculate a position of at least one of the first reinforcing bars R10 and/or at least one of the second reinforcing bars R20 detected by the sensor unit 130 based on pixel values of a plurality of pixels constituting a two-dimensional image generated by the detection results of the sensor unit 130. The reinforcing bar binding robot 100 according to the embodiment of the present disclosure can improve an efficiency of a calculation process of the positions of the first reinforcing bar R10 and/or the second reinforcing bar R20 by calculating the positions of the first reinforcing bar R10 and/or the second reinforcing bar R20 based on the two-dimensional image generated based on the detection results of the sensor unit 130. For example, as compared with a case where a position of a reinforcing bar is calculated using three-dimensional data as a detection result of a sensor unit, a calculation load can be reduced by performing the calculation based on a two-dimensional image.

In the reinforcing bar binding robot 100 according to the embodiment of the present disclosure, the two-dimensional image used to calculate the positions of the first reinforcing bar R10 and/or the second reinforcing bar R20 may be a grayscale image. In this case, the reinforcing bar binding robot 100 may include the storage device 198 that stores information on at least one of template images including partial images of the first reinforcing bar R10 and/or the second reinforcing bar R20, the above two-dimensional image may include a grayscale image, and the first reinforcing bar determination section 164a1 and/or the second reinforcing bar determination section 164a2 (reinforcing bar position calculation unit) may be configured to calculate the positions of at least one of the first reinforcing bars R10 and/or at least one of the second reinforcing bars R20 by collating the grayscale image with the template image.

In the reinforcing bar binding robot 100 according to the embodiment of the present disclosure, when a density value of a pixel in the grayscale image is equal to or greater than a predetermined threshold, it may be determined that the pixel corresponds to the first reinforcing bar R10 and/or the second reinforcing bar R20. In this case, if the density value of the pixel constituting the grayscale image is equal to or greater than the predetermined threshold, the first reinforcing bar determination section 164a1 and/or the second reinforcing bar determination section 164a2 (reinforcing bar position calculation unit) may determine that at least a part of the first reinforcing bar R1 and/or at least a part of the second reinforcing bar R2 are present at a position corresponding to the pixel having the density value equal to or greater than the predetermined threshold (first threshold). Alternatively, when the grayscale image is used as the two-dimensional image, the grayscale image may be generated by decreasing an image density of a region where an object is present and increasing an image density of a region where the object is not present, and in this case, if the density value of the pixel is less than a predetermined threshold, it may be determined that the pixel corresponds to the first reinforcing bar R10 and/or the second reinforcing bar R20.

In the reinforcing bar binding robot 100 according to the embodiment of the present disclosure, the grayscale image may be generated based on a detection result of a three-dimensional sensor. In this case, the sensor unit 130 may include a three-dimensional sensor capable of detecting an x coordinate, a y coordinate, and a z coordinate of a plurality of points on a surface of the detection object, a z coordinate value detected by the three-dimensional sensor may be converted into an image density that varies depending on magnitude of the z coordinate value, and the grayscale image may be generated by forming a two-dimensional image based on the x coordinate, the y coordinate, and the image density.

Alternatively, the reinforcing bar binding robot 100 according to the embodiment of the present disclosure may be configured such that the sensor unit 130 captures a grayscale image. In this case, the sensor unit 130 may include an image capturing device, and the grayscale image may be generated based on an image captured by the image capturing device.

The reinforcing bar binding robot 100 according to the embodiment of the present disclosure may calculate the positions of the first reinforcing bar R10 and/or the second reinforcing bar R20 based on a matching degree. In this case, the first reinforcing bar determination section 164a1 and/or the second reinforcing bar determination section 164a2 (reinforcing bar position calculation unit) may be configured to calculate the positions of at least one of the first reinforcing bars R10 and/or at least one of the second reinforcing bars R20 based on the matching degree between the grayscale image and the template image.

In the embodiment of the present disclosure, the matching degree may be calculated, for example, by comparing the detection result of the sensor unit 130 or the two-dimensional image generated based on the detection result of the sensor unit 130 with a template image. For example, pixel values of all pixels in a partial image to be compared in the two-dimensional image generated based on the detection results of the sensor unit 130 may be compared with pixel values of all pixels in the template image, and based on whether the pixel values of the pixels corresponding to each other in the two images to be compared match, a ratio of matching pixels represented by percentage or the like may be calculated as the matching degree. For example, if a template image including 50,000 pixels is compared with a grayscale image including 50,000 pixels, and densities of 40,000 pixels in the two images match or the densities of most pixels match (for example, a difference between the two images is within 10%), the matching degree may be calculated to be 80%.

In this case, the positions of the first reinforcing bar R10 and/or the second reinforcing bar R20 may be calculated using a reference value of the matching degree. In this case, the first reinforcing bar determination section 164a1 and/or the second reinforcing bar determination section 164a2 (reinforcing bar position calculation unit) may determine whether the matching degree is equal to or greater than a predetermined reference value, and determine that the first reinforcing bar R10 and/or the second reinforcing bar R20 are present within a detection range of the sensor unit 130 if the matching degree is equal to or greater than the predetermined reference value.

In the reinforcing bar binding robot 100 according to the embodiment of the present disclosure, a value that varies depending on the height may be set as the reference value of the matching degree. In this case, the reinforcing bar binding robot 100 according to the embodiment of the present disclosure includes the robot height calculation section 164e (also referred to as a "robot height calculation unit" in the present embodiment) configured to calculate the height of the reinforcing bar binding robot 100 from the reinforcing bar group R. The predetermined reference value includes a plurality of reference values corresponding to different heights of the reinforcing bar binding robot 100. The first reinforcing bar determination section 164a1 and/or the second reinforcing bar determination section 164a2 (reinforcing bar position calculation unit) determines whether a reference value corresponding to the height of the reinforcing bar binding robot 100 from the reinforcing bar group R calculated by the robot height calculation section 164e (robot height calculation unit) is present in the plurality of reference values, if it is determined that the reference value corresponding to the height of the reinforcing bar binding robot 100 is present in the plurality of reference values, the position of the first reinforcing bar R10 and/or the second reinforcing bar R20 is calculated based on the reference value, and if it is determined that the reference value corresponding to the height of the reinforcing bar binding robot 100 is not present in the plurality of reference values, a new reference value corresponding to the measured height of the reinforcing bar binding robot 100 may be calculated based on at least two reference values of the plurality of reference values.

In the embodiment of the present disclosure, for example, the plurality of reference values may be set in predetermined magnitude for the height of the reinforcing bar binding robot 100 from the reinforcing bar group R. For example, five reference values may be set in 5 cm increments for the height of the reinforcing bar binding robot 100 from the reinforcing bar group R, starting from 10 cm and ending at 30 cm. In this case, for example, if the robot height calculation section 164e determines that the height of the reinforcing bar binding robot 100 from the reinforcing bar group R is 20 cm, when the reference value is set to 60% for the height of 20 cm, 60% may be used as the reference value. For example, when the reference value for 23 cm is not set if the robot height calculation section 164e determines that the height of the reinforcing bar binding robot 100 from the reinforcing bar group R is 23 cm, a new reference value may be set based on, for example, the reference value for 20 cm and a reference value for 25 cm. For example, if the reference value for the height of 20 cm is 60% and the reference value for the height of 25 cm is 50%, the reference value for 23 cm may be calculated by linear interpolation as 50% + (((60% - 50%) * ((25 cm - 23 cm)/(25 cm - 20 cm))) = 54%. The newly calculated reference value may be stored in the storage device 198, for example, and may be used in subsequent work as necessary. The method of calculating the height, the reference value, and the new reference value described above is an example and is not limited thereto. For example, more reference values may be set, and for example, a reference value may be set for a height of less than 10 cm or greater than 30 cm.

Hereinafter, a calculation process of the position of the reinforcing bar performed by the reinforcing bar binding robot according to the embodiment of the present disclosure will be described.

First, a specific example of the sensor unit 130 used in the reinforcing bar binding robot 100 will be described in detail. As the sensor unit 130, for example, a 3D distance camera such as a time of flight (ToF) camera can be used (for example, TOFcam-635 manufactured by ESPROS Photonics). By the 3D distance camera, for example, an image with different grayscale intensities according to a separation distance from the camera is output for each captured object. A distance to the target captured object is obtained for each pixel, and a closer object is represented with higher density (closer to black), while a farther object is represented with lower density (closer to white). In the embodiment of the present disclosure, since the distance between the reinforcing bar binding robot 100 and the reinforcing bar group R does not substantially change while the reinforcing bar binding robot 100 is traveling on the reinforcing bar group R, the reinforcing bar may be detected by recognizing an object relatively close to black as a reinforcing bar (first reinforcing bar R10 and/or second reinforcing bar R20).

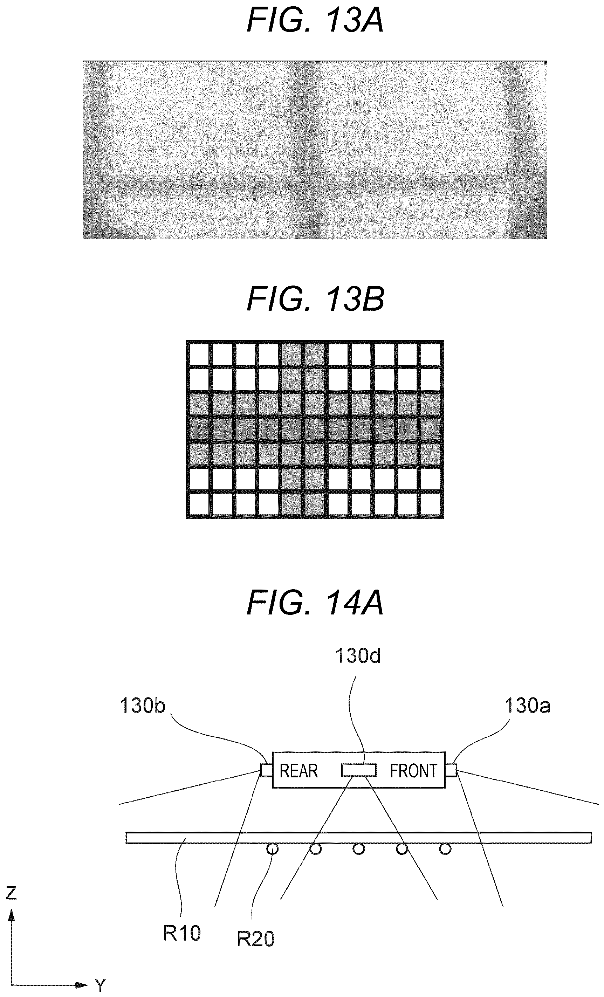

Each of FIGS. 13A and 13B shows an image output by the 3D distance camera. FIG. 13A shows an image of the vicinity of the intersecting point of the first reinforcing bar R10 and the second reinforcing bar R20 captured by the 3D distance camera. FIG. 13B schematically shows an image of the vicinity of the intersecting point of the first reinforcing bar R10 and the second reinforcing bar R20. As shown in FIG. 13A, grayscale appears in the image captured by the 3D distance camera, and in the embodiment of the present disclosure, it is possible to recognize a portion having a high density as the first reinforcing bar R10 and/or the second reinforcing bar R20. As schematically shown in FIG. 13B, an image in which the gradation of intensity varies for each pixel is obtained.

The sensor unit 130 is not limited to the image capturing device such as the camera exemplified above, and other sensors may be used. For example, a laser or the like capable of obtaining information in a depth direction or a height direction may be used. For example, a two-dimensional image using a density similar to that described above may be generated based on the information in the depth direction obtained by a laser.

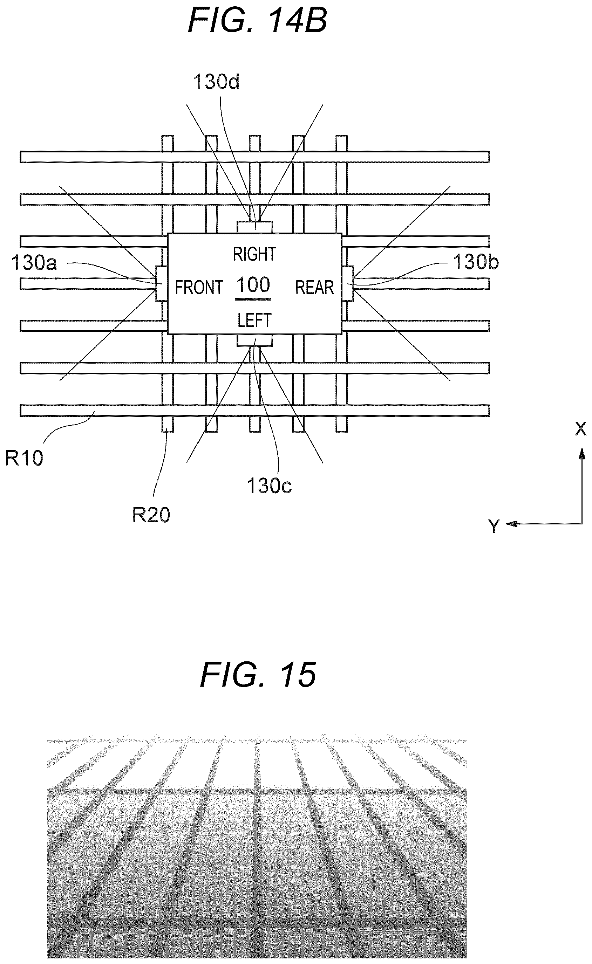

Subsequently, a process of detecting reinforcing bars based on an image (grayscale image in the present embodiment) captured and obtained by the sensor unit 130 will be described. First, the arrangement of the first sensor 130a, the second sensor 130b, the third sensor 130c, and the fourth sensor 130d of the sensor 130 will be described with reference to FIGS. 14A and 14B. Each of FIGS. 14A and 14B is a diagram schematically showing the arrangement of the first sensor 130a, the second sensor 130b, the third sensor 130c, and the fourth sensor 130d. FIG. 14A is a schematic side view of the reinforcing bar binding robot 100 viewed from the horizontal direction (X direction). FIG. 14B is a schematic top view of the reinforcing bar binding robot 100, as viewed from the upward direction (upper side in the Z direction). FIG. 14A schematically shows the first sensor 130a, the second sensor 130b, and the third sensor 130c together with image capturing ranges of the first sensor 130a, the second sensor 130b, and the third sensor 130c.

As schematically shown in FIGS. 14A and 14B, the first sensor 130a and the second sensor 130b, which are disposed apart from each other in the Y direction, are disposed to capture images obliquely downward. Similarly, the third sensor 130c and the fourth sensor 130d (not shown) are disposed to capture images obliquely downward. For example, the first sensor 130a and the second sensor 130b are set such that an angle of view defining the image capturing range is 80° or more and 100° or less. An angle of view of the third sensor 130c and the fourth sensor 130d is set to, for example, 50° or more and 70° or less. Any of the sensors 130 may be set to another angle of view. As described above, if the determination on a foreign matter is performed based on the detection results of the first sensor 130a, the second sensor 130b, the third sensor 130c, and/or the fourth sensor 130d, the image capturing ranges of the sensors may be changed, for example, by setting the angles of the sensors upward.

FIG. 15 schematically shows an image captured by the first sensor 130a. As shown in FIG. 15, in the embodiment of the present disclosure, since the first sensor 130a is disposed to capture an image obliquely downward, the interval between the adjacent first reinforcing bars R10 becomes narrower from a front side to a back side. In the embodiment of the present disclosure, the positions of the reinforcing bars (the plurality of first reinforcing bars R10 and the plurality of second reinforcing bars R20) constituting the reinforcing bar group R can be detected by, for example, performing the template matching based on the image obtained in this way. In the embodiment of the present disclosure, for example, by the template matching, the reinforcing bars (first reinforcing bars R10 and/or second reinforcing bars R20) are detected based on a similarity (also referred to as the "matching degree" in the present embodiment) between the captured image and an image prepared in advance, a grayscale image including a grayscale section corresponding to the reinforcing bars is prepared as a template, the image captured by each sensor unit 130 is scanned, and a similarity in a scanning direction is calculated.

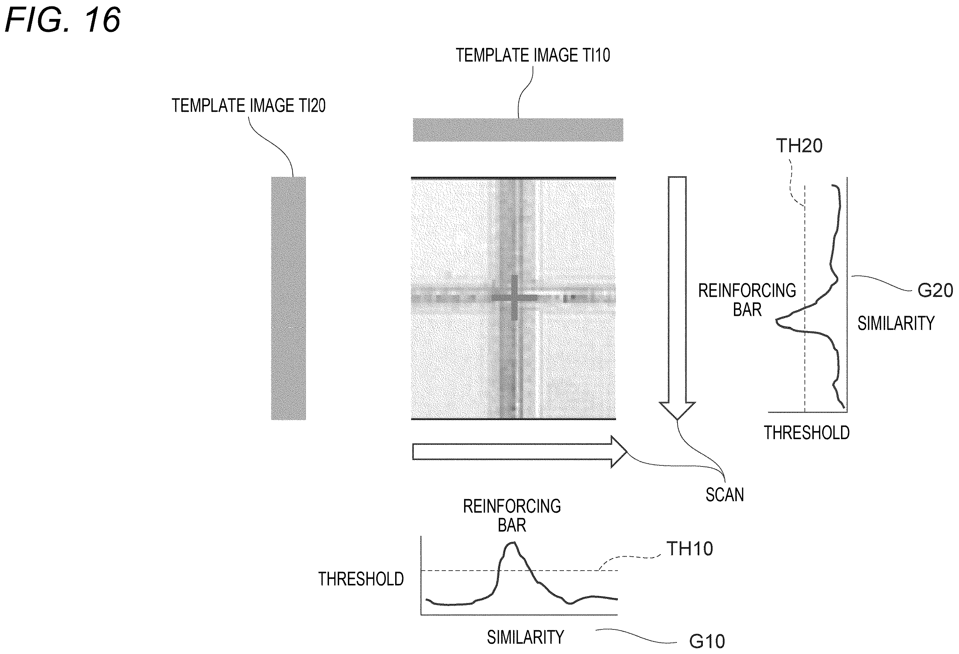

The template matching performed in the embodiment of the present disclosure will be described with reference to FIG. 16. FIG. 16 is a schematic diagram for illustrating the template matching according to the present embodiment. FIG. 16 also shows a captured image of the vicinity of the intersecting point c12 of the first reinforcing bar R10 and the second reinforcing bar R20, and template images TI10 and TI20 for scanning in the X direction and the Y direction. FIG. 16 also shows the template images TI10 and TI20, and schematic graphs G10 and G20 of the similarities calculated in accordance with the respective scans. By scanning the template images TI10 and TI20 in the Y direction and the X direction, respectively, and calculating the similarities with the template images TI10 and TI20, it is determined that a point where a maximum value of the calculated similarity exceeds a threshold on the captured image corresponds to the position where the reinforcing bar is present. As shown in the graphs G10 and G20, in distribution of the similarities along the Y direction and the X direction, portions exceeding a threshold TH10 and a threshold TH20 are confirmed, and these correspond to the positions where the reinforcing bars are present. The similarity (matching degree) may be calculated, for example, by comparing a color density of each of pixels of the captured image with the color density of each of pixels constituting the template image. For example, first, a distance from each of the pixels of the captured image to an object is extracted as the color density. Next, if a total value or an average value of the color densities of the entire captured image is light (for example, lower than the predetermined threshold), it is determined that there is no reinforcing bar in the captured image. On the other hand, if the color density is high (for example, higher than the predetermined threshold), a difference between the extracted color density and the color density of each of the pixels constituting the template image is compared for each of the pixels. Among the pixels of the captured image, a position where a sum of absolute values of differences between the color densities of the pixels of the captured pixels and the color densities of the pixels constituting the template image is lowest may be extracted as a reinforcing bar position. Accordingly, the first reinforcing bar R10 and the second reinforcing bar R20 can be detected by the template matching based on the similarity calculated by scanning the captured image with respect to the template image.

As described above with reference to FIG. 15, in the embodiment of the present disclosure, in the image captured by the first sensor 130a, the interval between the first reinforcing bars R10 adjacent to each other in the X direction changes along the Y direction. Similarly, in the image captured by the second sensor 130b, the interval of the first reinforcing bars R10 in the X direction changes in the Y direction, and in the images captured by the third sensor 130c and the fourth sensor 130d, the interval of the captured second reinforcing bars R20 in the Y direction changes along the X direction. Therefore, for example, the template matching may be performed after the image is corrected such that the intervals between the reinforcing bars on the captured image become substantially equal by performing an orthographic transformation on the captured image. Detection of the reinforcing bars based on the template matching can also be performed by preparing, as a template, an image in which the interval between the reinforcing bars changes as shown in FIG. 15 without performing image conversion such as the orthographic transformation.

In the template matching according to the embodiment of the present disclosure, for example, frequency analysis may be performed on the images, and a relevance between the captured image and the template image may be evaluated by using a phase correlation method.

The positions of the first reinforcing bar R10 and the second reinforcing bar R20 can also be estimated by using, for example, a three-dimensional sensor or the like to obtain three-dimensional data in XYZ directions of a target object within a detection range. As described above, in the reinforcing bar binding robot 100 according to the embodiment of the present disclosure, by performing the template matching in which the three-dimensional data in the Z direction is treated as the information on the density of the pixel, a calculation amount of calculating the position of the intersecting point c12 can be made smaller as compared with the case where the calculation is performed based on, for example, three-dimensional data in XYZ directions. As in the reinforcing bar binding robot 100 according to the embodiment of the present disclosure, when the binding work at the intersecting point c12 is performed while traveling, a method of determining the position of the reinforcing bar by the template matching that can reduce the calculation amount is preferably used.

Next, a method of determining the intersecting point of the first reinforcing bar R10 and the second reinforcing bar R20 in the embodiment of the present disclosure will be described. In the embodiment of the present disclosure, when the reinforcing bar binding robot 100 determines the intersecting point c12 of the first reinforcing bar R10 and the second reinforcing bar R20, the first sensor 130a and the second sensor 130b may be configured to detect the first reinforcing bar R10 as described above. That is, as described above, the reinforcing bar binding robot 100 includes the reinforcing bar binding unit 110 configured to bind the intersecting point c12 of the first reinforcing bar R10 and the second reinforcing bar R20 of the reinforcing bar group R, and the sensor units 130 are arranged apart from each other along the third direction, and include the first sensor 130a and the second sensor 130b configured to detect at least the first reinforcing bars R10. At least one of the template images includes the template image TI10 (first template image) including a partial image of the first reinforcing bar R10, the reinforcing bar binding robot 100 is disposed such that the traveling unit 121 travels in the Y direction (first direction) and the direction (third direction) where the first sensor 130a and the second sensor 130b are disposed is parallel to the Y direction (first direction), the first reinforcing bar determination section 164al and/or the second reinforcing bar determination section 164a2 (reinforcing bar position calculation unit) calculate the position of the first reinforcing bar R10 by collating the detection results of the first sensor 130a and/or the second sensor 130b with the first template image, and the reinforcing bar binding unit 110 may bind the intersecting point c12 on the first reinforcing bar R10 whose position is calculated.

In this case, the reinforcing bar binding robot 100 may be further configured such that the third sensor 130c and the fourth sensor 130d detect the second reinforcing bar R20 in addition to the first reinforcing bar R10 to estimate the intersecting point c12. That is, the reinforcing bar binding robot 100 further includes the intersecting point calculation section 166 (also referred to as the "intersecting point estimation unit" in the present embodiment) configured to estimate the intersecting point c12, and the sensor unit 130 includes the third sensor 130c and the fourth sensor 130d arranged apart from each other along the fourth direction intersecting with the third direction, and configured to detect at least the second reinforcing bar R20. At least one of the template images includes the template image TI20 (second template image) including the partial image of the second reinforcing bar R20, the reinforcing bar binding robot 100 is disposed such that the fourth direction is parallel to the X direction (second direction), the first reinforcing bar determination section 164al and/or the second reinforcing bar determination section 164a2 (reinforcing bar position calculation unit) calculate the position of the second reinforcing bar R20 by collating the detection results of the third sensor 130c and/or the fourth sensor 130d with the second template image, the intersecting point estimation section (intersecting point estimation unit) estimates an intersection of the calculated first reinforcing bar R10 and the calculated second reinforcing bar R20 as the intersecting point c12, and the reinforcing bar binding unit 110 may be configured to bind the estimated intersecting point c12.

When the reinforcing bar binding robot 100 detects the end R10e of the first reinforcing bar R10, the reinforcing bar binding robot 100 may cause the third sensor 130c and/or the fourth sensor 130d to detect the first reinforcing bar R10, and may be used to calculate a lateral movement amount of the reinforcing bar binding robot 100 described later based on the first reinforcing bar R10 detected by the third sensor 130c and/or the fourth sensor 130d. That is, the reinforcing bar binding robot 100 includes the movement amount calculation section 174 (movement amount calculation unit) configured to calculate the movement amount of the traveling unit 121 based on the position information on the first reinforcing bar R10 calculated by the first reinforcing bar determination section 164a1 and/or the second reinforcing bar determination section 164a2 (reinforcing bar position calculation unit) when the traveling unit 121 moves from the first reinforcing bar R10 on which the traveling unit 121 is traveling to another first reinforcing bar R10. The first reinforcing bar determination section 164a1 and/or the second reinforcing bar determination section 164a2 (reinforcing bar position calculation unit) calculate, based on the detection results of the first sensor 130a and/or the second sensor 130b, the position of the first reinforcing bar R10 on which the traveling unit 121 is traveling, and determines whether the matching degree is equal to or greater than a predetermined end reference value if the matching degree of the detection result of the first sensor 130a is less than the predetermined reference value. If it is determined that the matching degree is equal to or greater than the predetermined end reference value, the first reinforcing bar determination section 164a1 and/or the second reinforcing bar determination section 164a2 determine that the end R10e of the first reinforcing bar R10 is present within the detection range of the first sensor 130a, and if it is determined that the end R10e of the first reinforcing bar R10 is present within the detection range of the first sensor 130a, the third sensor 130c and/or the fourth sensor 130d are set to detect the first reinforcing bar R10. The first reinforcing bar determination section 164al and/or the second reinforcing bar determination section 164a2 (reinforcing bar position calculation unit) calculate the position of another first reinforcing bar R10 that is apart in the X direction (second direction) from the first reinforcing bar R10 on which the traveling unit 121 is traveling, based on the detection results of the third sensor 130c and/or the fourth sensor 130d. The movement amount calculation section 174 (movement amount calculation unit) calculates the movement amount of the traveling unit 121 in the X direction (second direction) based on the position of another first reinforcing bar R10 calculated by the first reinforcing bar determination section 164a1 and/or the second reinforcing bar determination section 164a2 (reinforcing bar position calculation unit) and the position of the first reinforcing bar R10 on which the traveling unit 121 is traveling. The traveling unit 121 may be configured to move in the X direction (second direction) based on the calculated movement amount in the X direction (second direction).

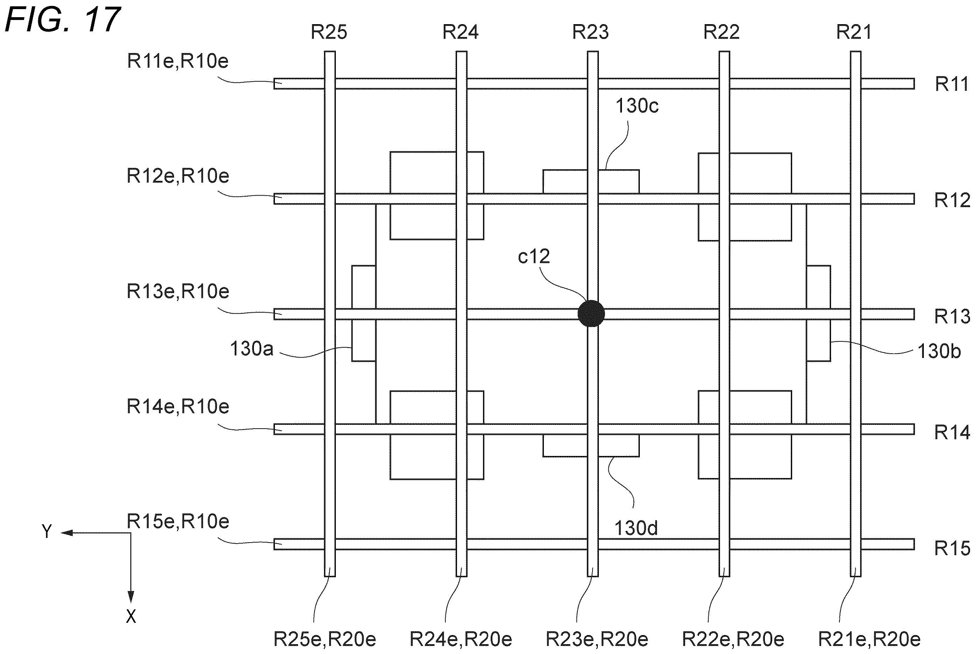

A method of estimating the intersecting point of the first reinforcing bar R10 and the second reinforcing bar R20 will be described with reference to FIG. 17. FIG. 17 is a diagram schematically showing the reinforcing bar binding robot 100 viewed from the lower side in the Z direction (-Z direction) to illustrate the method of estimating the intersecting point. As shown in FIG. 17, for example, in the embodiment of the present disclosure, the reinforcing bar binding robot 100 is configured to travel on the two reinforcing bars, that is, the first reinforcing bar R12 and the first reinforcing bar R14 as described above, the first sensor 130a and the second sensor 130b detect the first reinforcing bar R13, and the third sensor 130c and the fourth sensor 130d detect the second reinforcing bar R20. In the example shown in FIG. 17, for example, the third sensor 130c and the fourth sensor 130d detect a second reinforcing bar R23. In this case, the first reinforcing bar R13 extending between the first sensor 130a and the second sensor 130b is estimated based on the detection results of the first sensor 130a and the second sensor 130b, and the second reinforcing bar R23 extending between the third sensor 130c and the fourth sensor 130d is estimated based on the detection results of the third sensor 130c and the fourth sensor 130d. A point where the estimated first reinforcing bar R13 extending between the first sensor 130a and the second sensor 130b and the estimated second reinforcing bar R23 extending between the third sensor 130c and the fourth sensor 130d intersect with each other is estimated as the intersecting point c12.

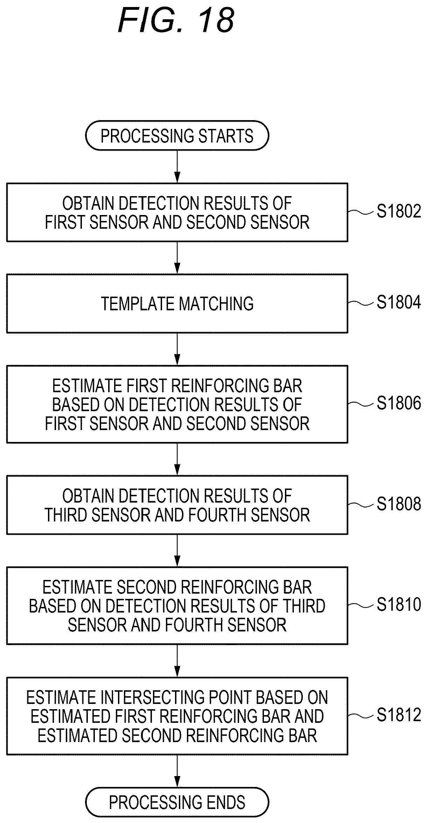

The method of estimating the intersecting point c12 in the embodiment of the present disclosure will be described with reference to FIG. 18. FIG. 18 is a flowchart of the method of estimating the intersecting point c12 in the embodiment of the present disclosure.

First, the detection results from the first sensor 130a and the second sensor 130b are obtained (S1802).

Next, the template matching is executed based on the detection results of the first sensor 130a and the second sensor 130b to confirm the first reinforcing bar R10 and/or the second reinforcing bar R20 detected by the first sensor 130a and the second sensor 130b (S1804).

The position of the first reinforcing bar R13 is estimated based on the detection results of the first sensor 130a and the second sensor 130b (S1806).

Subsequently, the detection results from the third sensor 130c and the fourth sensor 130d are obtained (S1808).

Next, the position of the second reinforcing bar R20 is estimated based on the detection results of the third sensor 130c and the fourth sensor 130d (S1810).

Subsequently, the intersecting point is estimated based on the estimated positions of the first reinforcing bar R13 and the second reinforcing bar R20 (S1812).

Accordingly, the reinforcing bar binding robot 100 according to the embodiment of the present disclosure is disposed on the reinforcing bar group R such that the third direction (Y direction) where the first sensor 130a and the second sensor 130b are disposed is parallel to the first direction that is the extension direction of the first reinforcing bar R10, and the fourth direction that is the direction where the third sensor 130c and the fourth sensor 130d are disposed is parallel to the second direction that is the extension direction of the second reinforcing bar R20, and includes the intersecting point calculation section 166 that estimates the intersecting point c12 and is the intersecting point estimation section. The first sensor 130a and the second sensor 130b are configured to detect the first reinforcing bar R10, and the third sensor 130c and the fourth sensor 130d are configured to detect the second reinforcing bar R20. The intersecting point calculation section 166, which is the intersecting point estimation section, may be configured to estimate the position of the first reinforcing bar R10 (first reinforcing bar R13) detected by both the first sensor 130a and the second sensor 130b based on the detection results of the first sensor 130a and the second sensor 130b, estimate the position of the second reinforcing bar R20 (second reinforcing bar R23) detected by both the third sensor 130c and the fourth sensor 130d based on the detection results of the third sensor 130c and the fourth sensor 130d, and estimate, as the intersecting point c12, the intersection of the first reinforcing bar R13 detected by the first sensor 130a and the second sensor 130b and the second reinforcing bar R23 detected by the third sensor 130c and the fourth sensor 130d.

When the reinforcing bar binding robot 100 calculates the position of the intersecting point c12 of the first reinforcing bar R10 and the second reinforcing bar R20 on the first reinforcing bar R13, the first sensor 130a may pass through the intersecting point (intersecting section cp12), for example. In this case, for example, the calculated position of the intersecting section cp12 may be adjusted based on the information on the intersecting point c12 captured by the first sensor 130a. That is, the reinforcing bar binding robot 100 may be configured such that the first sensor 130a and the second sensor 130b travel in the first direction (Y direction) while detecting the first reinforcing bar R10, and if the first sensor 130a detects the intersecting section cp12 where the first reinforcing bar R10 intersects with the second reinforcing bar R20 while the reinforcing bar binding robot 100 is traveling, the reinforcing bar binding robot 100 may determine whether the intersecting section cp12 matches the estimated intersecting point c12, and if the intersecting section cp12 does not match the estimated intersecting point c12, the reinforcing bar binding robot 100 may adjust the position of the estimated intersecting point c12. If the detected position of the intersecting section cp12 does not match the estimated position of the intersecting point c12, the position of the reinforcing bar binding robot 100 may be adjusted by accelerating or decelerating the first traveling unit 121a, the second traveling unit 121b, the third traveling unit 121c, and/or the fourth traveling unit 121d of the traveling unit 121, or controlling the rotation speeds of the first wheel drive motor 124a, the second wheel drive motor 124b, the third wheel drive motor 124c, and the fourth wheel drive motor 124d, similarly to the method of causing the reinforcing bar binding robot 100 to follow the first reinforcing bars R10 described above, for example.

Note that the method of estimating the intersecting point described above with reference to FIG. 18 is an example, and is not limited to the example described above. For example, the obtaining of the detection results from the sensors may not necessarily be executed in the above order, and the estimation of the position of the reinforcing bar based on the detection results may not necessarily be executed in the above order.

Next, a method of calculating the movement amount of the reinforcing bar binding robot 100 in the embodiment of the present disclosure will be described. With reference to FIG. 17, a case where the reinforcing bar binding robot 100 reaches the vicinity of the end R10e of the first reinforcing bar R10 in the Y direction and performs the lateral movement (movement in the X direction) will be described as an example. As shown in FIG. 17, the reinforcing bar binding robot 100 travels on the first reinforcing bar R12 and the first reinforcing bar R14, binds a point where the first reinforcing bar R13 present between the first reinforcing bar R12 and the first reinforcing bar R14 intersects with the second reinforcing bar R20 (for example, second reinforcing bars R21, R22, R23, R24, and R25), and reaches the vicinity of the end R12e, the end R13e, and the end R14e. In this case, the reinforcing bar binding robot 100 next executes the binding work of the first reinforcing bar R14, which is a reinforcing bar adjacent in the X direction (+X direction) to the first reinforcing bar R13 in which the binding work has been executed, and therefore moves in the X direction (+X direction, a direction from the first reinforcing bar R13 toward the first reinforcing bar R14).

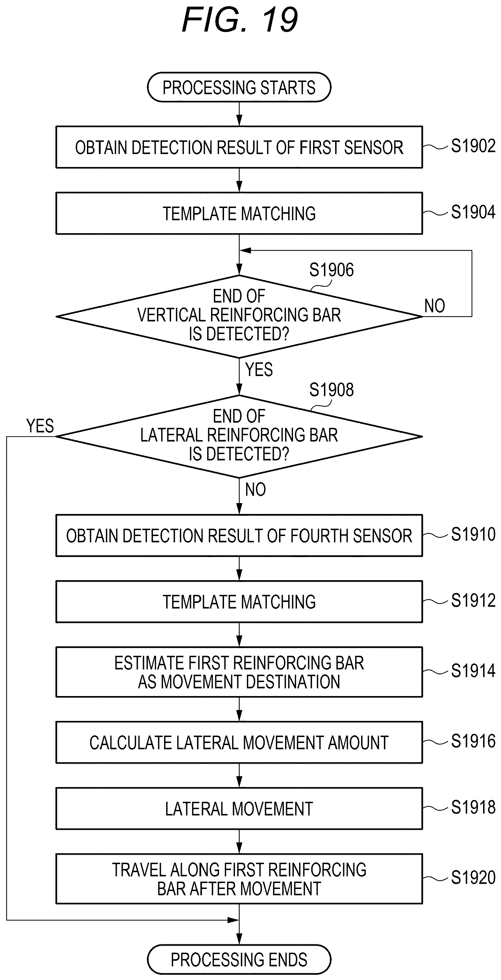

A method of the lateral movement of the reinforcing bar binding robot 100 in this case will be described with reference to FIG. 19. FIG. 19 is a flowchart related to the lateral movement of the reinforcing bar binding robot 100.

First, the detection result from the first sensor 130a is obtained (S1902).

Next, the template matching is performed on the detection result of the first sensor 130a (S1904).

Next, it is determined whether the end R13e of the first reinforcing bar R13 detected by the first sensor 130a has been detected, based on the result of the template matching (S1906).

Subsequently, it is determined whether the end R20e of the second reinforcing bar R20 has been detected (S1908). As the end R20e of the second reinforcing bar R20, for example, as shown in FIG. 17, it may be determined whether any of ends R21e, R22e, R23e, R24e, and R25e of the second reinforcing bars R21, R22, R23, R24, and R25 has been detected.

For example, it may be determined whether the end R20e of the second reinforcing bar R20 has been detected based on the detection results of the third sensor 130c and/or the fourth sensor 130d. In the embodiment of the present disclosure, the reinforcing bar binding robot 100 performs the binding work at the intersecting point of the first reinforcing bar R10 and the second reinforcing bar R20 from the first reinforcing bar R10 on the X axis left side toward the first reinforcing bar R10 on the X axis right side when viewed from above in the Z direction. Therefore, it may be determined whether the end R20e of the second reinforcing bar R20 on the right side in the X direction has been detected based on the detection result of the fourth sensor 130d provided on the right side in the X direction when viewed from above in the Z direction. For example, when the end R20e of the second reinforcing bar R20 on the right side in the X direction has been detected by the fourth sensor 130d, there is a possibility that the binding work of the last first reinforcing bar R10 has been completed, and thus the binding work of the reinforcing bar group R as a work target may be ended.

The detection of the end R20e is not limited thereto, and for example, the determination may be performed based on the detection results of other sensors, and when the binding work is performed from the first reinforcing bar R10 on the right side in the X direction toward the first reinforcing bar R10 on the left side in the X direction, the end R20e of the second reinforcing bar R20 on the left side in the X direction may be detected by the third sensor 130c. In addition, the binding work may be configured to be ended based on a condition other than the detection of the end R20e. For example, it is also possible to set a condition to start the binding work of other reinforcing bars at a point other than the end R20e and move the reinforcing bar binding robot 100, or it is also possible to change the binding position due to occurrence of a factor such as foreign matter detection, change the reinforcing bar to be subjected to the binding work, and move the reinforcing bar binding robot 100. The first sensor 130a and/or the second sensor 130b can also detect the second reinforcing bar R20 by adjusting, for example, the arrangement point, the inclination, and the angle of view, and thus the detection of the end R20e of the second reinforcing bar R20 may be executed using the detection results of the first sensor 130a and/or the second sensor 130b.

Next, the detection result from the fourth sensor 130d is obtained (S1910).

Subsequently, the template matching is performed based on the detection result of the fourth sensor 130d (S1912).

Next, the first reinforcing bar R10 as the movement destination of the reinforcing bar binding robot 100 is estimated based on the position of the first reinforcing bar R10 detected by the fourth sensor 130d (S1914). In the embodiment of the present disclosure, the fourth sensor 130d detects the plurality of first reinforcing bars R10. For example, in the example shown in FIG. 17, the fourth sensor 130d may detect the first reinforcing bar R14 present on the right side of the reinforcing bar binding robot 100 in the X direction. Further, since the binding work of the intersecting point c12 of the first reinforcing bar R10 and the second reinforcing bar R20 along the first reinforcing bar R13 has been executed, next, when the binding work of the intersecting point along the first reinforcing bar R14 is executed, the reinforcing bar binding robot 100 performs the lateral movement to travel on the first reinforcing bar R13 and a first reinforcing bar R15, for example. For example, the lateral movement of moving the reinforcing bar binding robot 100 in the X direction may be performed such that the first traveling unit 121a and the third traveling unit 121c travel on the first reinforcing bar R13 and the second traveling unit 121b and the fourth traveling unit 121d travel on the first reinforcing bar R15.

Subsequently, the lateral movement amount is calculated (S1918). The lateral movement amount of the reinforcing bar binding robot 100 may be calculated by the following method. For example, as described above, when the reinforcing bar binding robot 100 moves to the right side in the X direction (+X direction) as viewed from the upper side in the Z direction, that is, when the reinforcing bar binding robot 100 moves in the direction where the fourth sensor 130d is disposed, the lateral movement amount of the reinforcing bar binding robot 100 may be calculated based on two pieces of information, that is, a distance of the fourth sensor 130d in the X direction from the center of the reinforcing bar binding robot 100 in the X direction and a distance of the first reinforcing bar R14 detected by the fourth sensor 130d from the fourth sensor 130d.

In the case of calculating the distance of the fourth sensor 130d in the X direction from the center of the reinforcing bar binding robot 100 in the X direction, the center of the reinforcing bar binding robot 100 in the X direction may be, for example, a position where the reinforcing bar binding unit 110 is disposed. Alternatively, the binding position by the reinforcing bar binding unit 110 may be regarded as the center of the reinforcing bar binding robot 100 in the X direction. In this case, for example, the position in the X direction of the first reinforcing bar R13, which is subjected to the binding work performed by the reinforcing bar binding robot 100, may be determined as a center position of the reinforcing bar binding robot 100 in the X direction. The center position of the reinforcing bar binding robot 100 in the X direction and a distance of the fourth sensor 130d from the center position of the reinforcing bar binding robot 100 in the X direction (distance in the X direction) may be calculated in advance and stored in the storage device 198. In the configuration in which the position of the sensor unit 130 can be changed, for example, when the position of the fourth sensor 130d is changed according to a construction site or the like, a direction and an amount in which the fourth sensor 130d has been moved may be calculated, and the distance of the fourth sensor 130d in the X direction from the center of the reinforcing bar binding robot 100 in the X direction may be calculated in consideration of the movement amount of the fourth sensor 130d. The distance of the first reinforcing bar R14 detected by the fourth sensor 130d from the fourth sensor 130d may be calculated based on, for example, an image captured by the fourth sensor 130d.

For example, when the fourth sensor 130d is attached at a position 100 away in the X direction from the center of the reinforcing bar binding robot 100 in the X direction (for example, the position of the first reinforcing bar R13) and the first reinforcing bar R14 is at a position 20 away from the fourth sensor 130d in a direction away from the center of the reinforcing bar binding robot 100 in the X direction, the interval between the first reinforcing bars R10 (the interval between the first reinforcing bar R13 and the first reinforcing bar R14) may be calculated to be 121 and the lateral movement amount may be controlled to be 121. For example, when the fourth sensor 130d is attached at a position 20 cm away in the X direction from the center of the reinforcing bar binding robot 100 in the X direction (for example, the position of the first reinforcing bar R13) and the first reinforcing bar R14 is at a position 4 cm away from the fourth sensor 130d in a direction away from the center of the reinforcing bar binding robot 100 in the X direction, the interval between the first reinforcing bars R10 (the interval between the first reinforcing bar R13 and the first reinforcing bar R14) may be calculated to be 24 cm, and the lateral movement amount may be controlled to be 24 cm. When the fourth sensor 130d is attached at a position 20 cm away in the X direction from the center of the reinforcing bar binding robot 100 in the X direction (for example, the position of the first reinforcing bar R13) and the first reinforcing bar R14 is at a position 4 cm closer to the center of the reinforcing bar binding robot 100 in the X direction from the fourth sensor 130d, the interval between the first reinforcing bars R10 (the interval between the first reinforcing bar R13 and the first reinforcing bar R14) may be calculated to be 16 cm, and the lateral movement amount may be controlled to be 16 cm.

For example, as described above, regarding the lateral movement amount of the reinforcing bar binding robot 100, when the reinforcing bar binding robot 100 next performs the lateral movement to bind the intersecting point on the first reinforcing bar R14, the lateral movement amount may be calculated such that the reinforcing bar binding robot 100 performs the lateral movement corresponding to the interval between the adjacent first reinforcing bars R10 as a whole. In the example described above, the first traveling unit 121a and the third traveling unit 121c move from the first reinforcing bar R12 to the first reinforcing bar R13, and the second traveling unit 121b and the fourth traveling unit 121d move from the first reinforcing bar R14 to the first reinforcing bar R15. In the embodiment of the present disclosure, since the first reinforcing bars R10 are arranged at substantially equal intervals to be substantially parallel to each other, the movement amounts of the first traveling unit 121a to the fourth traveling unit 121d in the X direction are equal. Therefore, the lateral movement amount may be, for example, the interval in the X direction between the first reinforcing bar R14 and the first reinforcing bar R15 detected by the fourth sensor 130d. Alternatively, since the intervals between the first reinforcing bars R10 are substantially equal, the lateral movement amount may be calculated based on the interval between the adjacent first reinforcing bars R10 calculated based on the detection results of other sensors. The distances in the X direction between the plurality of (for example, three or more) first reinforcing bars R10 are calculated, an average value of the calculated distances in the X direction between the plurality of first reinforcing bars R10 may be calculated, and the average value of the intervals between the first reinforcing bars R10 may be used as the lateral movement amount. By calculating the average value, for example, even when there is an error in the interval between the first reinforcing bars R10, an influence of the error on the calculated lateral movement amount can be reduced.

Next, the lateral movement of the reinforcing bar binding robot 100 is executed based on the calculated lateral movement amount (S1918).

The reinforcing bar binding robot 100 that has completed the lateral movement travels, for example, along the first reinforcing bar R13 and the first reinforcing bar R15 on which the first traveling unit 121a to the fourth traveling unit 121d are positioned after the movement (S1920), and may start the binding work of the intersecting point c12 on the first reinforcing bar R14.

For example, a template corresponding to the image of the end R10e may be prepared, and the detection on the end R10e of the first reinforcing bar R10 described above may be determined based on the matching degree with the template of the end R10e. For example, when the template image extending in one direction as shown with reference to FIG. 16 is prepared for a portion other than the end R10e, a template image in which a length in the Y direction of a portion corresponding to the reinforcing bar is shorter than that of the portion other than the end R10e may be prepared for the end R10e.

Alternatively, when the matching degree is within a certain value range, it may be determined that the end R10e is being reached. For example, in the portion other than the end R10e of the first reinforcing bar R10, the presence of the portion other than the end R10e of the first reinforcing bar R10 may be determined if the matching degree is relatively close to 100%, that is, equal to or greater than 75%, and the portion close to the end R10e of the first reinforcing bar R10 may be determined to be traveled if the matching degree is relatively low, for example, equal to or greater than 50% and equal to or less than 75%. The matching degree here is an example for the portion other than the end R10e and the vicinity of the end R10e, and other values may be set, or the reference value may be configured to change according to an arrangement state of the reinforcing bars, other environments, and the like.

Accordingly, when the reinforcing bar binding robot 100 performs the lateral movement, in particular, the detection result of the first reinforcing bar R10 by the third sensor 130c and/or the fourth sensor 130d is used. Regarding the third sensor 130c and the fourth sensor 130d, as described above, for example, the detection results of the position of the second reinforcing bar R20 by the third sensor 130c and the fourth sensor 130d may be used to calculate the position of the intersecting point c12 of the first reinforcing bar R10 and the second reinforcing bar R20, that is, the detection results of the position of the first reinforcing bar R10 by the third sensor 130c and the fourth sensor 130d may not be used to calculate the position of the intersecting point c12 of the first reinforcing bar R10 and the second reinforcing bar R20, and thus in this case, the first reinforcing bar R10 may not be detected by the third sensor 130c and the fourth sensor 130d. When the reinforcing bar binding robot 100 advances the reinforcing bar binding work and reaches the end R10e of the first reinforcing bar R10, for example, the reinforcing bar binding robot 100 performs the lateral movement, and thus, in order to be able to calculate the movement amount and be able to detect the first reinforcing bar R10 can be detected by the third sensor 130c and/or the fourth sensor 130d, the image capturing ranges of the third sensor 130c and/or the fourth sensor 130d may be changed by, for example, a method of changing an orientation of the third sensor 130c and/or the fourth sensor 130d.

Although the case where the detection results of the first sensor 130a and the fourth sensor 130d are used has been described as an example with reference to FIG. 19 above, the sensors whose detection results are referred to are not limited thereto, and it is also possible, for example, to change which sensor is used depending on the direction where the reinforcing bar binding robot 100 is traveling. As described above, when the end R10e of the first reinforcing bar R10 is detected by the first sensor 130a, the reinforcing bar binding robot 100 is not limited to performing the lateral movement in the direction of the fourth sensor 130d, and for example, when the end R10e of the first reinforcing bar R10 is detected by the first sensor 130a, the reinforcing bar binding robot 100 may perform the lateral movement in the direction of the third sensor 130c. For example, when the end R10e of the first reinforcing bar R10 is detected by the second sensor 130b, the reinforcing bar binding robot 100 may perform the lateral movement in the direction of the third sensor 130c, or when the end R10e of the first reinforcing bar R10 is detected by the second sensor 130b, the reinforcing bar binding robot 100 may perform the lateral movement in the direction of the fourth sensor 130d.

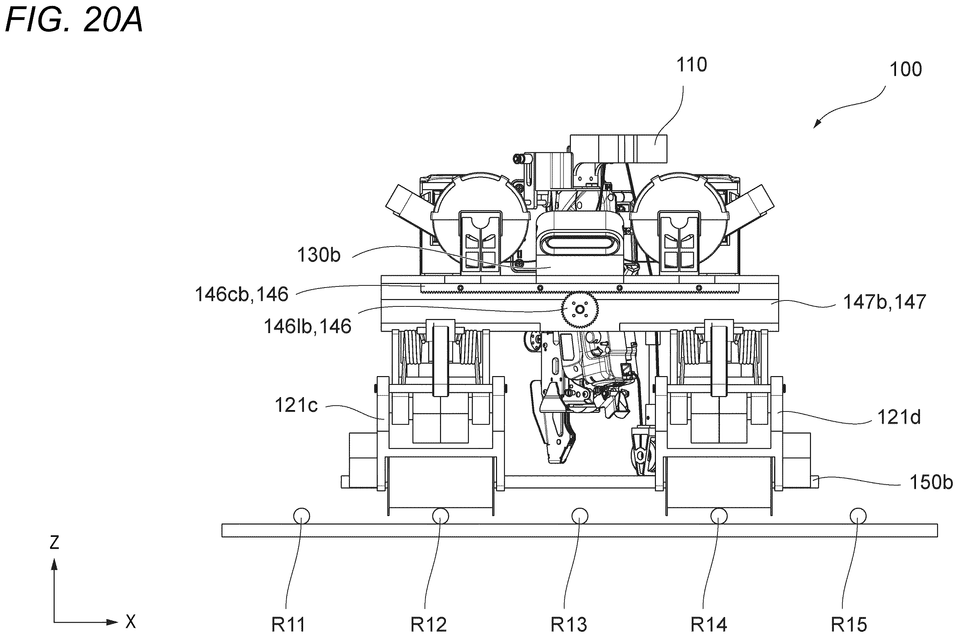

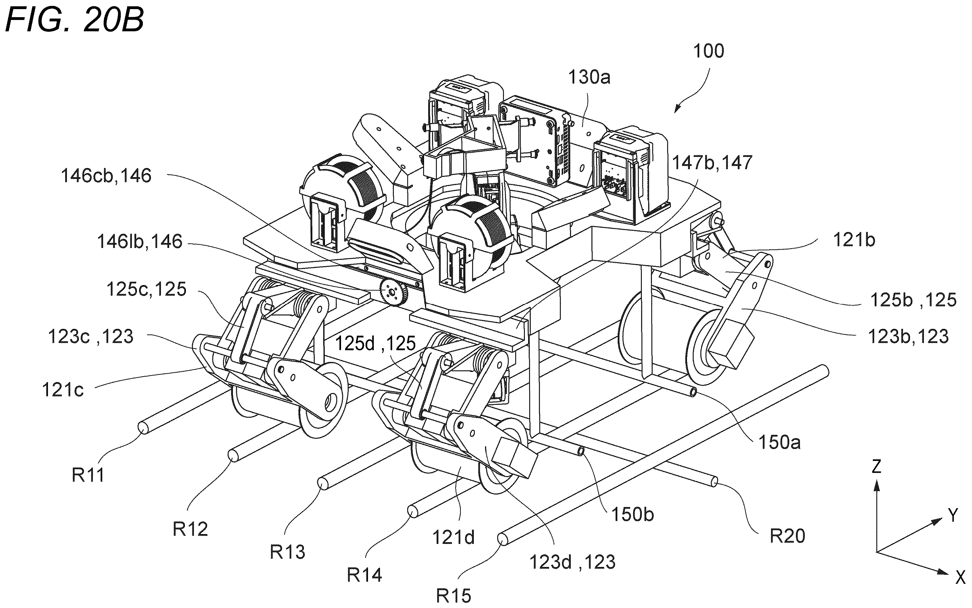

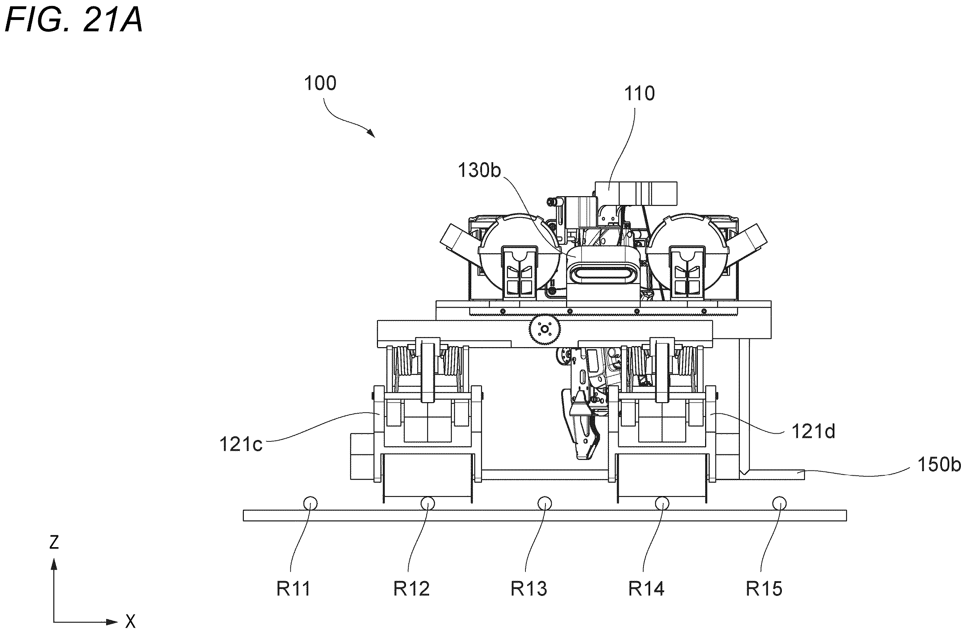

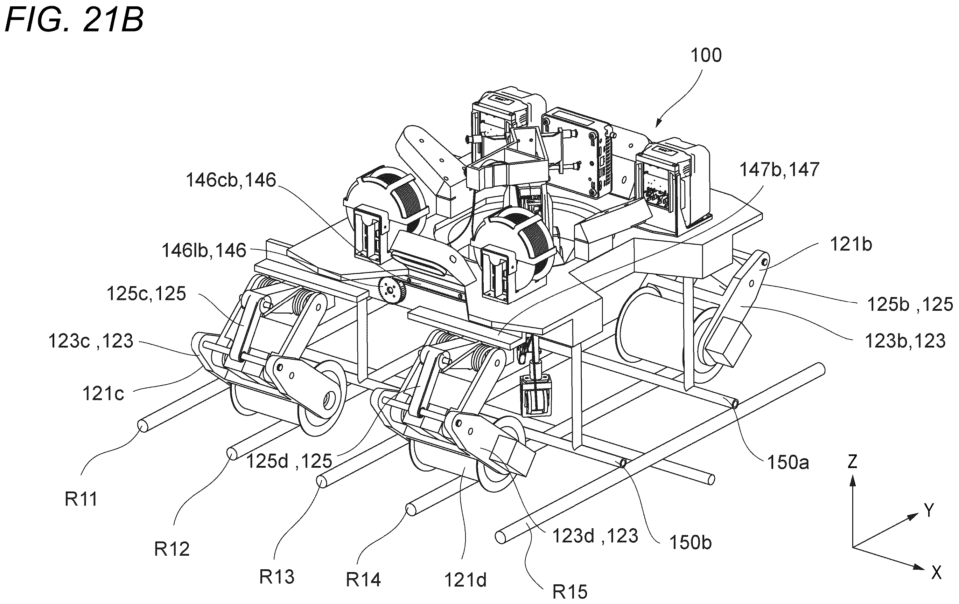

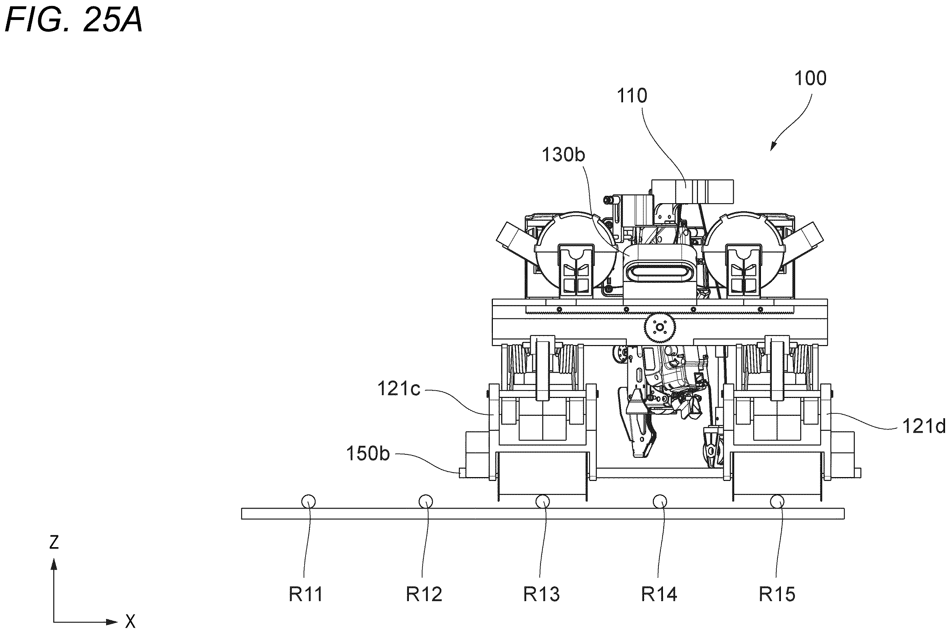

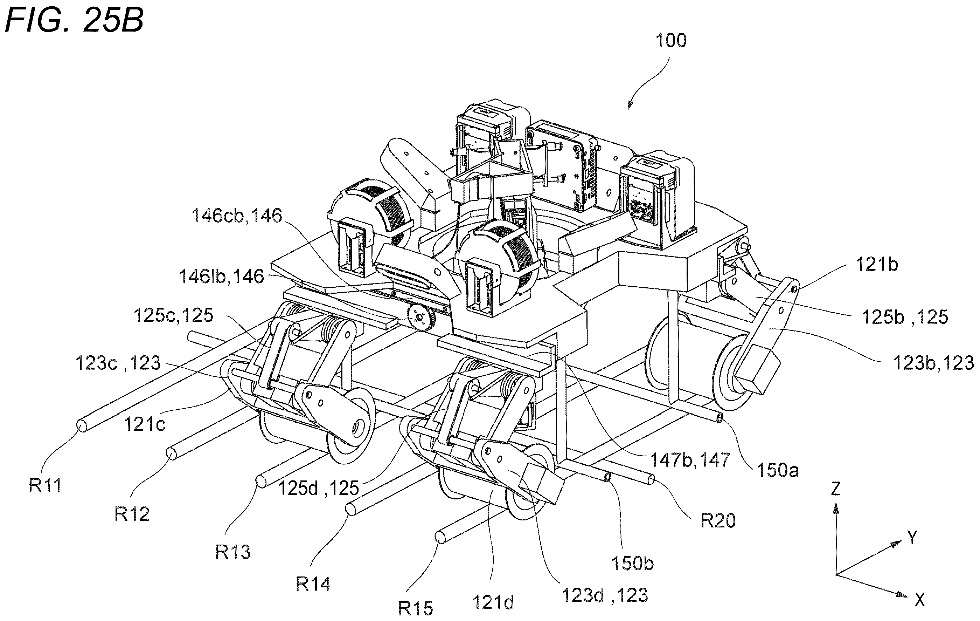

Hereinafter, an example of the lateral movement of the reinforcing bar binding robot 100 will be described with reference to FIGS. 20A to 25B. FIGS. 20A to 25B are diagrams of the reinforcing bar binding robot 100 during the lateral movement of the reinforcing bar binding robot 100, FIG. 20A, FIG. 21A, ..., and FIG. 25A are diagrams of the reinforcing bar binding robot 100 as viewed from a rear side, and FIG. 20B, FIG. 21B, ..., and FIG. 25B are diagrams of the reinforcing bar binding robot 100 as viewed obliquely from the upward direction.

FIGS. 20A and 20B show the reinforcing bar binding robot 100 before starting the lateral movement. As shown in FIGS. 20A and 20B, the reinforcing bar binding robot 100 travels on the first reinforcing bars R12 and R14.

Next, the reinforcing bar binding robot 100 starts the lateral movement. In the embodiment of the present disclosure, as described above, for example, if it is determined based on the detection result of the first sensor 130a that the vicinity of the end R10e of the first reinforcing bar R10 is reached or is being reached, it is determined that the lateral movement is started. FIGS. 21A and 21B show a state when the reinforcing bar binding robot 100 starts the lateral movement. As shown in FIGS. 21A and 21B, the reinforcing bar binding robot 100 does not move the traveling unit 121, but moves in a direction (X direction) where the body unit 140 moves. As shown in FIGS. 21A and 21B, in this case, the first traveling unit 121a and the second traveling unit 121b are present on the first reinforcing bar R12 and the first reinforcing bar R14, respectively, without moving. In this case, the support bars 150a and 150b do not abut against any reinforcing bars. The lateral movement of the body unit 140 (here, for example, movement in the horizontal direction (movement in the X direction)) may be executed, for example, by driving the first lateral movement roller 146la and the second lateral movement roller 146lb provided on the first connecting section 147a and second connecting section 147b by the first lateral movement motor 146ma and the second lateral movement motor 146mb of the lateral movement unit 146 (not shown in FIGS. 21A and 21B), and moving the body unit 140 in the X direction via the first drive rack 146ca and the second drive rack 146cb.

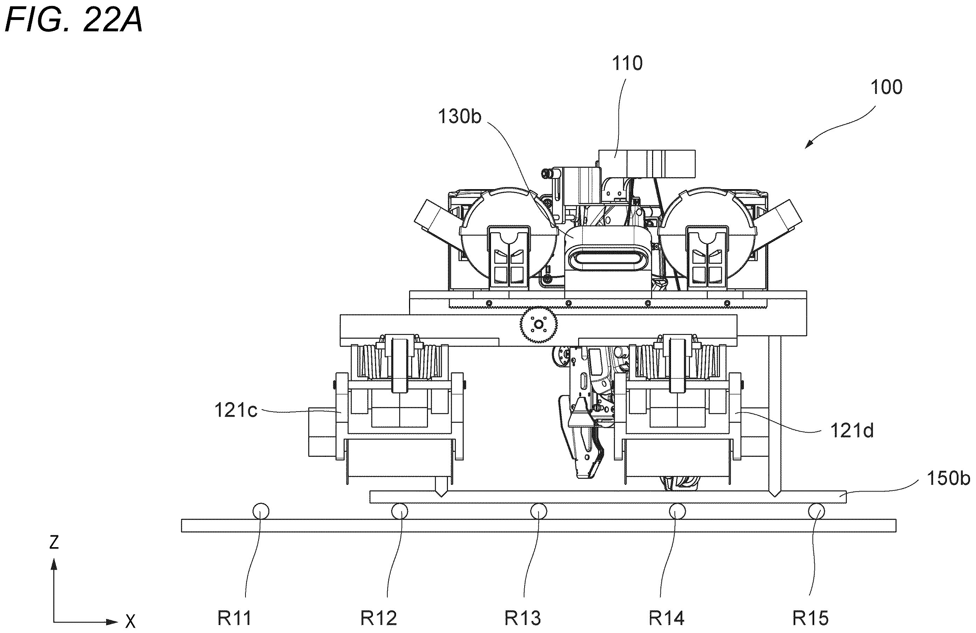

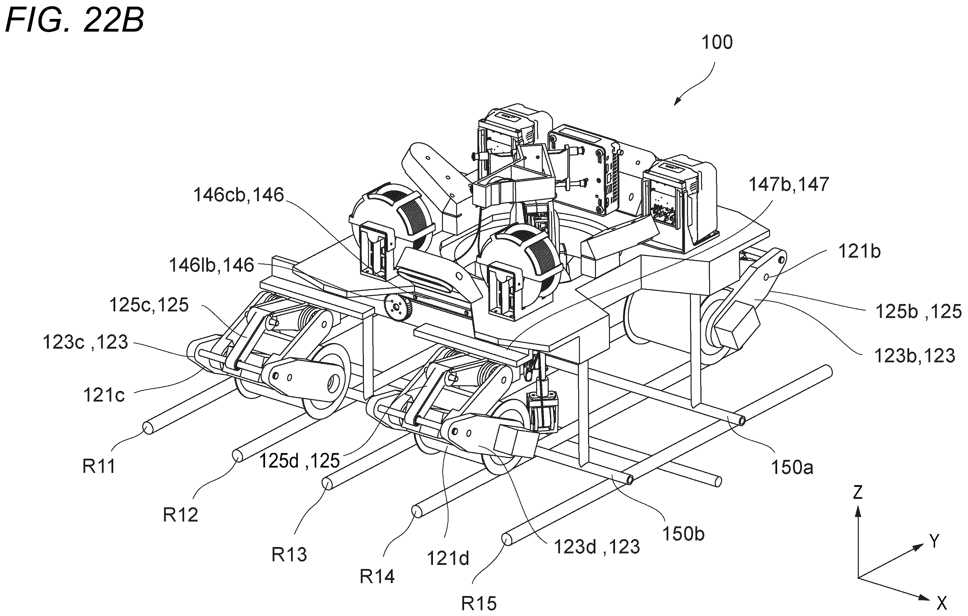

Next, the reinforcing bar binding robot 100 moves the traveling unit 121 (a lower end of the traveling unit 121) in the upward direction relative to the first reinforcing bar R10. As shown in FIGS. 22A and 22B, the lower end of the traveling unit 121 in the -Z direction is raised upward in the Z direction (+Z direction) in FIGS. 22A and 22B. In this case, for example, the first body side link section 125a and the first roller side link section 123a move in a direction to approach each other relatively (that is, the first body side link section 125a and the first roller side link section 123a close). That is, the first body side link section 125a and the first roller side link section 123a move such that an angle formed by the first body side link section 125a and the first roller side link section 123a becomes smaller. Similarly, regarding the second traveling unit 121b, the third traveling unit 121c, and the fourth traveling unit 121d, the second body side link section 125b and the second roller side link section 123b, the third body side link section 125c and the first roller side link section 123c, and the fourth body side link section 125d and the fourth roller side link section 123d move in a closing direction.

When the body side link section 125 and the roller side link section 123 close and the lower end of the traveling unit 121 are raised, the support bars 150a and 150b are relatively lowered. When the traveling unit 121 is separated from the first reinforcing bar R10, the support bars 150a and 150b abut against the first reinforcing bars R10. For example, the traveling unit 121 may be configured such that a length in the Z direction can be changed by closing the body side link section 125 and the roller side link section 123 (the first body side link section 125a and the first roller side link section 123a, the second body side link section 125b and the second roller side link section 123b, the third body side link section 125c and the third roller side link section 123c, and the fourth body side link section 125d and the fourth roller side link section 123d) which correspond to a configuration supporting the rollers (the first roller section 122a, the second roller section 122b, the third roller section 122c, and the fourth roller section 122d) using a motor or the like (for example, the first wheel height changing motor 126a, the second wheel height changing motor 126b, the third wheel height changing motor 126c, and the fourth wheel height changing motor 126d shown in FIG. 7). The roller section 122 may be raised by closing the body side link section 125 and the roller side link section 123, so that the roller section 122 is separated from the first reinforcing bar R10.

As shown in FIGS. 22A and 22B, for example, the support bars 150a and 150b abut against the first reinforcing bars R11 to R14. In this way, the entire reinforcing bar binding robot 100 is supported by the support bars 150a and 150b.

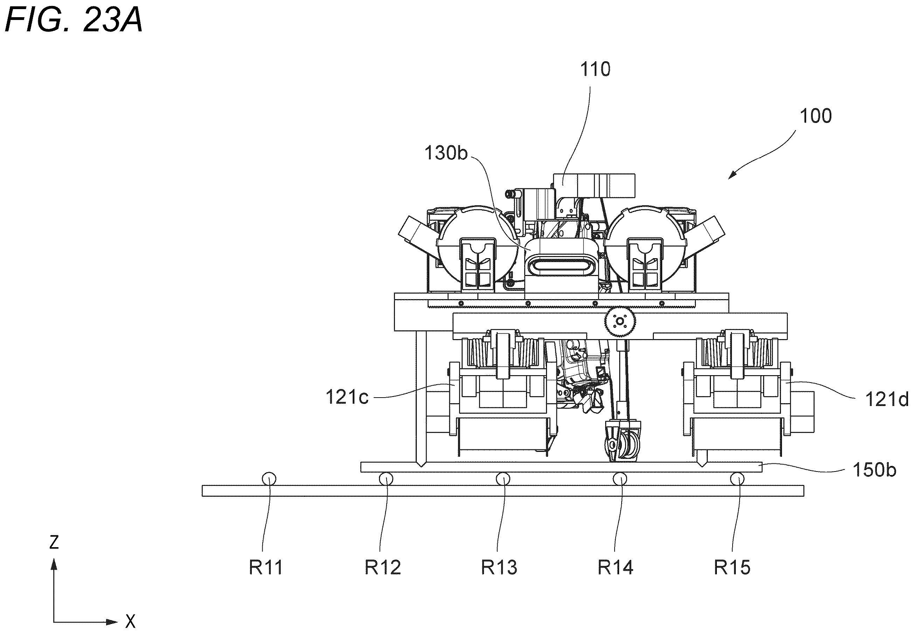

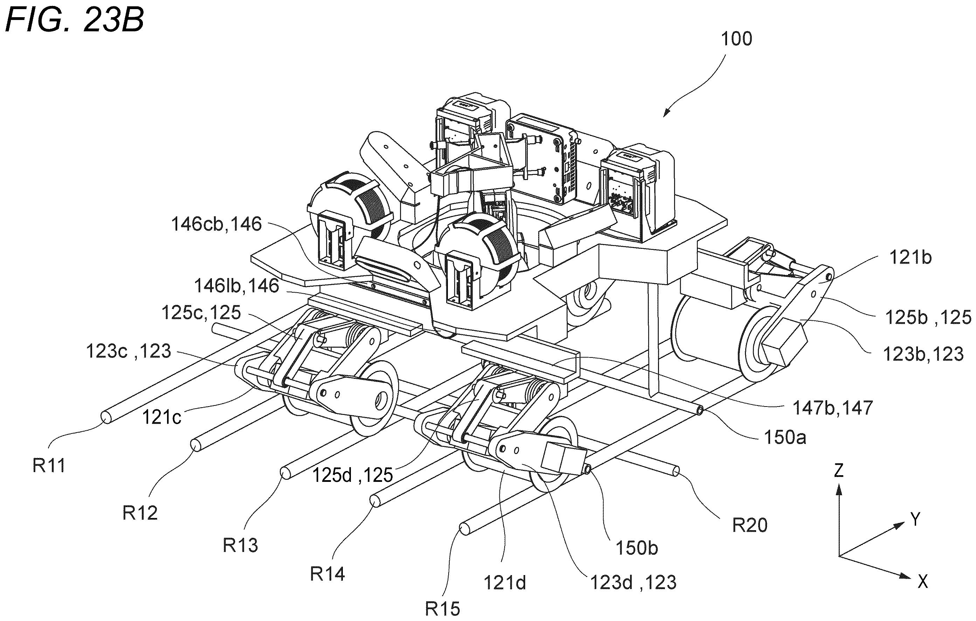

Next, the traveling unit 121 of the reinforcing bar binding robot 100 moves in the X direction. As shown in FIGS. 23A and 23B, the first traveling unit 121a and the third traveling unit 121c, and the second traveling unit 121b and the fourth traveling unit 121d, which abut against the first reinforcing bar R12 and the first reinforcing bar R14, respectively, are moved above the first reinforcing bar R13 and the first reinforcing bar R15. In this case, none of the first traveling unit 121a to the fourth traveling unit 121d abuts against the first reinforcing bars R10, and the support bars 150a and 150b abut against the first reinforcing bars R10 (the first reinforcing bars R12 to R15) to support the reinforcing bar binding robot 100.

Next, the body side link section 125 and the roller side link section 123 of the traveling unit 121 are opened. Accordingly, the lower end of the traveling unit 121 in the -Z direction is lowered relative to the first reinforcing bar R10. In this case, for example, the first body side link section 125a and the first roller side link section 123a move in a direction away from each other relatively (that is, the first body side link section 125a and the first roller side link section 123a are opened). That is, the first body side link section 125a and the first roller side link section 123a move such that the angle formed by the first body side link section 125a and the first roller side link section 123a becomes larger. Similarly, regarding the second traveling unit 121b, the third traveling unit 121c, and the fourth traveling unit 121d, the second body side link section 125b and the second roller side link section 123b, the third body side link section 125c and the first roller side link section 123c, and the fourth body side link section 125d and the fourth roller side link section 123d move in an opening direction.

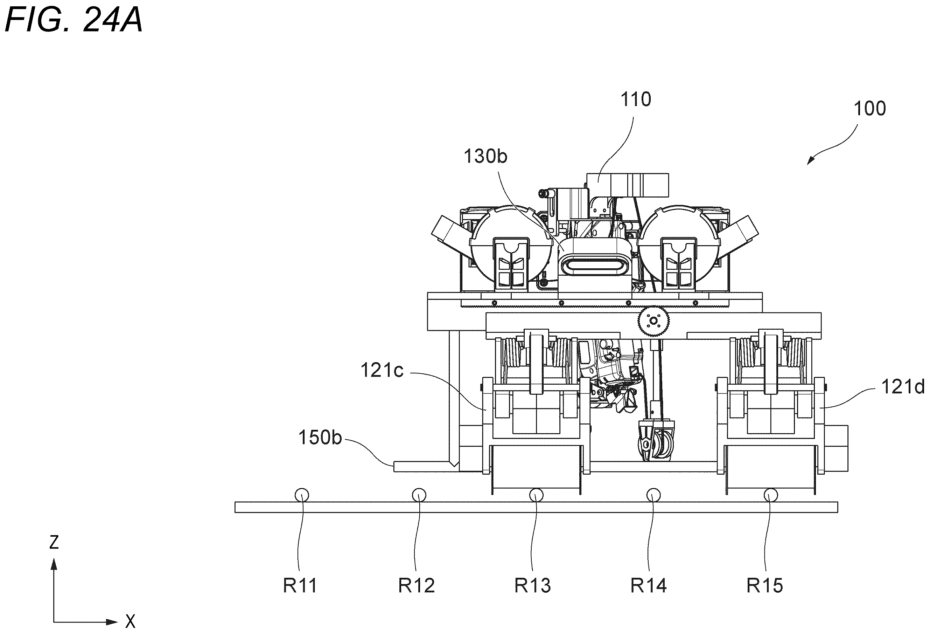

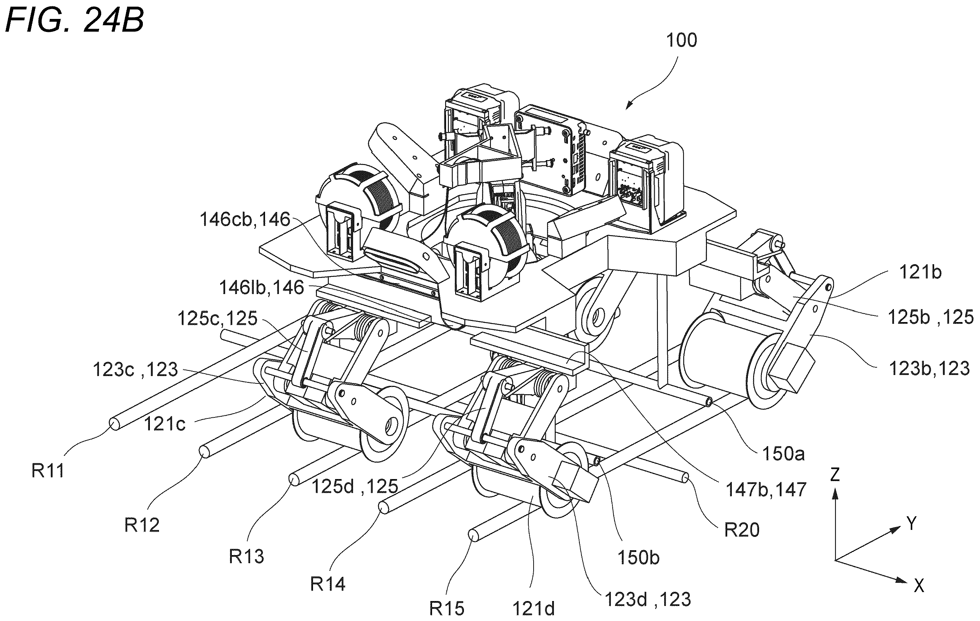

As shown in FIGS. 24A and 24B, the lower end of the traveling unit 121 in the -Z direction is lowered downward in the Z direction (-Z direction) in FIGS. 24A and 24B. As shown in FIGS. 24A and 24B, the first traveling unit 121a and the third traveling unit 121c abut against the first reinforcing bar R13, and the second traveling unit 121b and the fourth traveling unit 121d abut against the first reinforcing bar R15. Therefore, the support bars 150a and 150b are raised relative to the first reinforcing bar R10. Therefore, the reinforcing bar binding robot 100 is supported by the traveling unit 121 in this state.

Next, as shown in FIGS. 25A and 25B, the body unit 140 is moved in the X direction. Similarly to the above description with reference to FIGS. 21A and 21B, the lateral movement (here, for example, movement in the horizontal direction (movement in the X direction)) of the body unit 140 shown in FIGS. 25A and 25B may be executed by, for example, the first lateral movement motor 146ma and the second lateral movement motor 146mb of the lateral movement unit 146 (not shown in FIGS. 25A and 25B). In this way, the lateral movement of the reinforcing bar binding robot 100 is completed. For example, the reinforcing bar binding robot 100 starts traveling on the first reinforcing bar R13 and the first reinforcing bar R15, and performs the binding work of the intersecting point c12 of the first reinforcing bar R10 and the second reinforcing bar R20 on the first reinforcing bar R14.

Although the case where the reinforcing bar binding robot 100 moves from the first reinforcing bar R12 and the first reinforcing bar R14 to the first reinforcing bar R13 and the first reinforcing bar R15 has been described above as an example, for example, the reinforcing bar binding robot 100 can also move to a destination separated by the plurality of first reinforcing bars R10. Also in this case, it is possible to move by the same method as described above, or it is possible to move by a longer distance by repeating the above-described moving method. The movement amount may also be calculated based on the detection result of the sensor unit 130 by the same method in the case of moving to the destination separated by the plurality of first reinforcing bars R10.

The reinforcing bar binding robot 100 is not limited to the method described above and may perform the lateral movement by another method, and even in that case, the movement amount of the reinforcing bar binding robot 100 can be calculated based on the detection results of the sensor unit 130 according to the method of calculating the movement amount in the embodiment of the present disclosure, and the movement of the reinforcing bar binding robot 100 can be smoothly performed by using the method of calculating the movement amount in the embodiment of the present disclosure.

As described above, the reinforcing bar binding robot 100 according to the embodiment of the present disclosure includes: the traveling unit 121 configured to travel on the reinforcing bar group R including a plurality of first reinforcing bars R1 whose extension direction is the first direction (Y direction) and a plurality of second reinforcing bars R2 whose extension direction is the second direction (X direction) intersecting with the first direction (Y direction) and that are arranged to intersect with the first reinforcing bars R1; the sensor unit 130 configured to detect at least one of the first reinforcing bars R10 and/or at least one of the second reinforcing bars R20; and the first reinforcing bar determination section 164al and/or a second reinforcing bar determination section 164a2 (also referred to as "reinforcing bar position calculation unit" in the present embodiment) configured to calculate a position of at least one of the first reinforcing bars R10 and/or at least one of the second reinforcing bars R20 detected by the sensor unit 130 based on pixel values of a plurality of pixels constituting a two-dimensional image generated by the detection results of the sensor unit 130. The reinforcing bar binding robot 100 according to the embodiment of the present disclosure can improve an efficiency of a calculation process of the positions of the first reinforcing bar R10 and/or the second reinforcing bar R20 by calculating the positions of the first reinforcing bar R10 and/or the second reinforcing bar R20 based on the two-dimensional image generated based on the detection results of the sensor unit 130. Therefore, a reinforcing bar detection process in the reinforcing bar phase work of the reinforcing bar binding robot 100 can be made efficient. For example, as compared with a case where a position of a reinforcing bar is calculated using three-dimensional data as a detection result of a sensor unit, a calculation load can be reduced by performing the calculation based on a two-dimensional image.

Improvement in technical levels of various units constituting the reinforcing bar binding robot 100 makes it possible to increase a speed and an efficiency of the reinforcing bar binding work. In order to achieve an increase in the speed of the reinforcing bar binding work, it is considered that an increase in a speed of the reinforcing bar detection and the detection of an intersecting point of reinforcing bars on which binding of the reinforcing bars is performed is desired. The reinforcing bar binding robot 100 according to the embodiment of the present disclosure can improve the efficiency of the reinforcing bar detection process, thereby contributing to an increase in the speed of the reinforcing bar binding work.

The reinforcing bar binding robot 100 according to the embodiment of the present disclosure includes: the reinforcing bar binding unit 110 configured to bind the intersecting point c12 of the plurality of first reinforcing bars R10 and the plurality of second reinforcing bars R20 included in the reinforcing bar group R, the plurality of first reinforcing bars R10 whose extension direction is the first direction (Y direction), and the plurality of second reinforcing bars R20 whose extension direction is the second direction (X direction) intersecting with the first direction (Y direction) and that are arranged to intersect with the first reinforcing bars R10; the traveling unit 121 configured to travel on the first reinforcing bars R10 and/or the second reinforcing bars R20; the first sensor 130a and the second sensor 130b configured to detect at least one of the first reinforcing bars R10 and/or at least one of the second reinforcing bars R20, and disposed apart from each other along the third direction (Y direction); and the third sensor 130c and the fourth sensor 130d configured to detect at least one of the first reinforcing bars R10 and/or at least one of the second reinforcing bars R20, and disposed apart from each other along the fourth direction (X direction) intersecting with the third direction (Y direction). As described above, since the reinforcing bar binding robot 100 includes the four sensors 130 (the first sensor 130a, the second sensor 130b, the third sensor 130c, and the fourth sensor 130d), for example, as described above, the intersecting point c12 of the first reinforcing bars R10 and the second reinforcing bars R20 can be efficiently detected. The position of the intersecting point c12 can be confirmed, for example, by providing a sensor in the vicinity of the reinforcing bar binding unit 110, but since the reinforcing bar binding unit 110 is configured to move up and down, it may be difficult to provide the sensor in the vicinity. In the embodiment of the present disclosure, the position of the intersecting point c12 can be estimated based on the detection results of the four sensors 130 without providing a sensor in the vicinity of the reinforcing bar binding unit 110.

For example, the reinforcing bar binding robot 100 according to the embodiment of the present disclosure includes: the reinforcing bar binding unit 110 configured to bind the intersecting point c12 of the plurality of first reinforcing bars R10 and the plurality of second reinforcing bars R20 included in the reinforcing bar group R, the plurality of first reinforcing bars R10 whose extension direction is the first direction (Y direction), and the plurality of second reinforcing bars R20 whose extension direction is the second direction (X direction) intersecting with the first direction (Y direction); the traveling unit 121 configured to travel on the first reinforcing bars R10 and/or the second reinforcing bars R20; the sensor unit 130 configured to detect the first reinforcing bars R10 and/or the second reinforcing bars R20; and the movement amount calculation section 174 configured to calculate the movement amount of the traveling unit 121 based on the position information on the first reinforcing bars R10 or the second reinforcing bars R20 detected by the sensor unit 130 when the traveling unit 121 moves from the first reinforcing bar R10 or the second reinforcing bar R20 on which the traveling unit 121 is traveling to another first reinforcing bar R10 or another second reinforcing bar R20. As described above, for example, the reinforcing bar binding robot 100 according to the embodiment of the present disclosure can determine, based on the detection result of the sensor unit 130, the position of the reinforcing bar as a movement destination of the reinforcing bar binding robot 100, and calculate the movement amount of the reinforcing bar binding robot 100 based on the position of the reinforcing bar traveled by the traveling unit 121 of the reinforcing bar binding robot 100 and the position of the reinforcing bar as the movement destination. For example, when the reinforcing bar binding robot 100 reaches the end of the reinforcing bar that has been subjected to the reinforcing bar binding work and moves to the reinforcing bar to be subjected to the reinforcing bar binding work next, the movement amount can be calculated based on the detection result of the sensor unit 130.

In the embodiment of the present disclosure described above, the case where the reinforcing bar binding robot 100 performs the reinforcing bar binding work on the intersecting point c12 of the first reinforcing bar R10 and the second reinforcing bar R20 in the reinforcing bar group in which the first reinforcing bar R10 and the second reinforcing bar R20 are arranged orthogonal to each other has been described as an example, but the reinforcing bar binding robot 100 according to the embodiment of the present disclosure may also be used when the first reinforcing bar R10 and the second reinforcing bar R20 are in a non-orthogonal relationship.

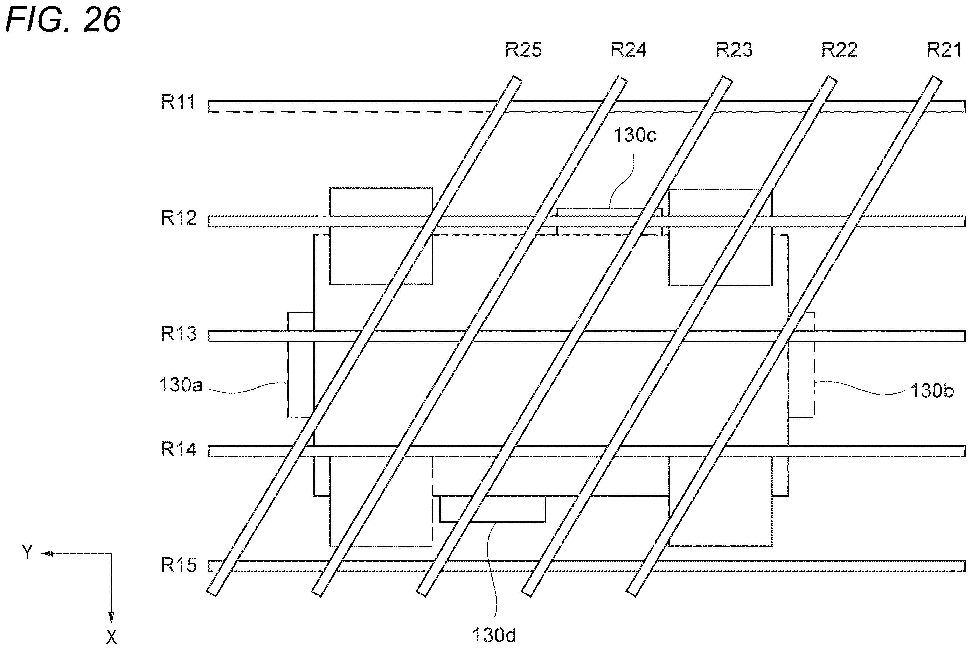

FIG. 26 is a schematic diagram of a reinforcing bar binding robot 200 according to another embodiment of the present disclosure, as viewed from below in the Z direction (-Z direction). As shown in FIG. 26, in the present embodiment, the second reinforcing bars R20 are arranged at an angle of about 30° with respect to the first reinforcing bars R10. The reinforcing bar binding robot 200 according to the present embodiment differs from the reinforcing bar binding robot 100 in the positions of the third sensor 130c and the fourth sensor 130d. The third sensor 130c and the fourth sensor 130d of the reinforcing bar binding robot 200 are arranged to be present on a straight line inclined by 30° with respect to the X direction. In the reinforcing bar binding robot 200, by aligning the third sensor 130c and the fourth sensor 130d with the second reinforcing bars R20 and arranging the third sensor 130c and the fourth sensor 130d in a direction inclined from the X direction, the second reinforcing bars R20 can be detected by the same method as that in the reinforcing bar binding robot 100.

Accordingly, the arrangement of the first sensor 130a to the fourth sensor 130d may be changed according to the arrangement configurations of the first reinforcing bars R10 and the second reinforcing bars R20. For example, the arrangement of the first sensor 130a, the second sensor 130b, the third sensor 130c, and/or the fourth sensor 130d may be manually or automatically adjusted before the reinforcing bar binding work is started according to a construction site where the reinforcing bar group R to be subjected to a binding work is disposed. Alternatively, even after the reinforcing bar binding robot 100 starts traveling, a relationship between the first reinforcing bars R10 and the second reinforcing bars R20 may be determined based on the detection result of the sensor unit 130, and the arrangement of the first sensor 130a, the second sensor 130b, the third sensor 130c, and/or the fourth sensor 130d may be dynamically changed based on the determination result. In this case, for example, a motor or the like capable of driving the first sensor 130a to the fourth sensor 130d may be provided, and the positions of the first sensor 130a to the fourth sensor 130d may be changed by driving the motor.

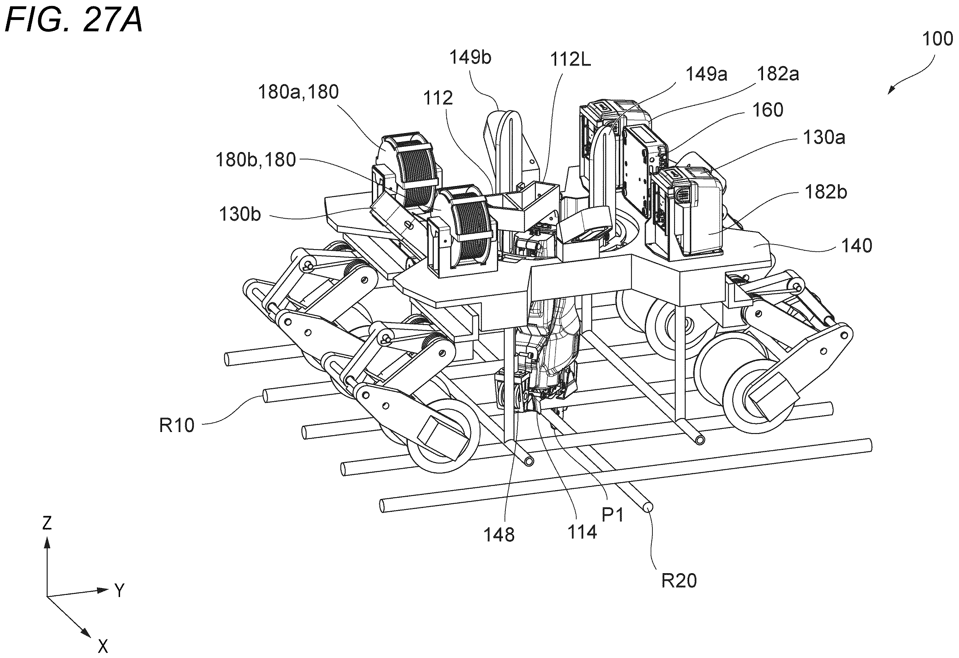

Hereinafter, with reference to FIGS. 27A to 32, a configuration for drawing out a wire W used in the binding operation in the binding device 100 according to the embodiment of the present disclosure will be described.

The binding device 100 according to the present embodiment includes the reinforcing bar binding unit 110 (also referred to as a "binding mechanism" in the present embodiment), the reinforcing bar binding unit movement section 168m (also referred to as a "binding mechanism movement section" in the present embodiment), and the wire drawing sections (a first wire drawing section 112 and a second wire drawing section 148 described later). The reinforcing bar binding unit 110 (binding mechanism) feeds the wire W around the reinforcing bar R and twists and binds the wire W fed around the reinforcing bar R. The reinforcing bar binding unit movement section 168m (binding mechanism movement section) moves the reinforcing bar binding unit 110 (binding mechanism) between the binding position (binding position P1 described later) where the reinforcing bar R is bound and the retracted position (retracted position P2 described later) away from the reinforcing bar R. The wire drawing sections draw out the wire W wound on the reel 180. The wire drawing sections draw out the wire W in a movement direction of the reinforcing bar binding unit 110 (binding mechanism) in conjunction with the movement of the reinforcing bar binding unit 110 (binding mechanism) by the reinforcing bar binding unit movement section 168m (binding mechanism movement section). Furthermore, an amount of the wire W drawn out by the wire drawing sections is greater than the movement amount of the reinforcing bar binding unit 110 (binding mechanism) moved by the operation of the reinforcing bar binding unit movement section 168m (binding mechanism movement section).

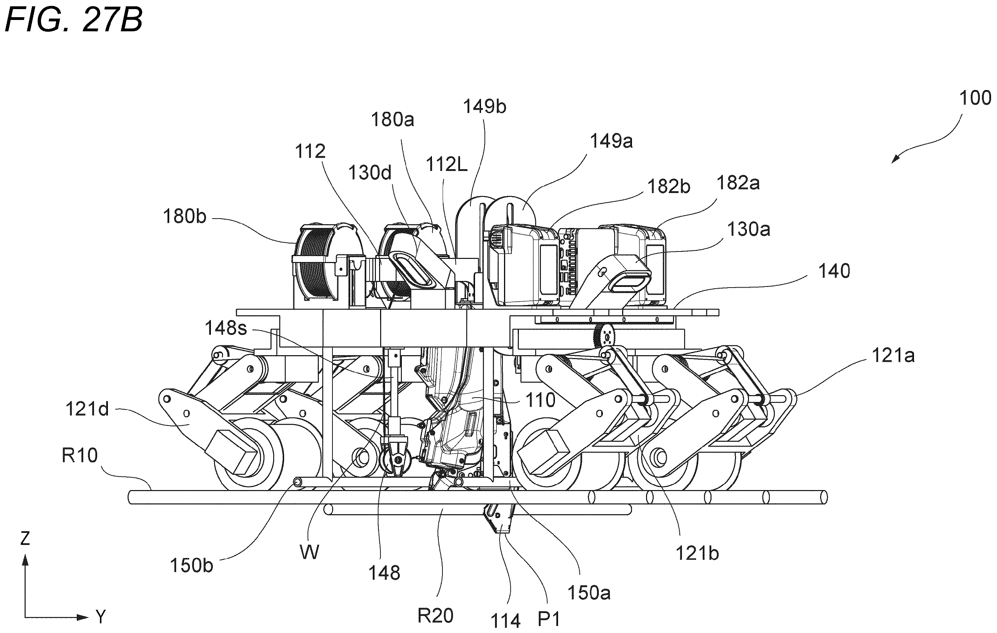

FIG. 27A is a diagram of the binding device 100 according to the embodiment of the present disclosure to illustrate the configuration for drawing out the wire, as viewed obliquely from the upward direction. FIG. 27B is a diagram of the binding device 100 as viewed from diagonally forward. FIGS. 27A and 27B show a state after the reinforcing bar binding unit 110 of the binding device 100 completes the binding operation at the intersecting point c12 of the first reinforcing bar R10 and the second reinforcing bar R20. Therefore, in the examples shown in FIG. 27A and FIG. 27B, the reinforcing bar binding unit 110 of the binding device 100 is present at the binding position P1.

In the present embodiment, the binding position P1 is a position where the reinforcing bar binding unit 110 binds the reinforcing bar R, and may be, for example, a position where at least a part of the wire twisting section 114 straddles the reinforcing bar surface (the surface formed by the first reinforcing bar R10 and the second reinforcing bar R20) in the Z direction. In the present embodiment, a position of a tip end (an end in the -Z direction) of the wire twisting section 114 in this case is shown as P1 in FIGS. 27A and 27B as the binding position P1. As shown in FIGS. 27A and 27B, the tip end of the wire twisting section 114 is present in the -Z direction from the first reinforcing bar R10 and the second reinforcing bar R20.

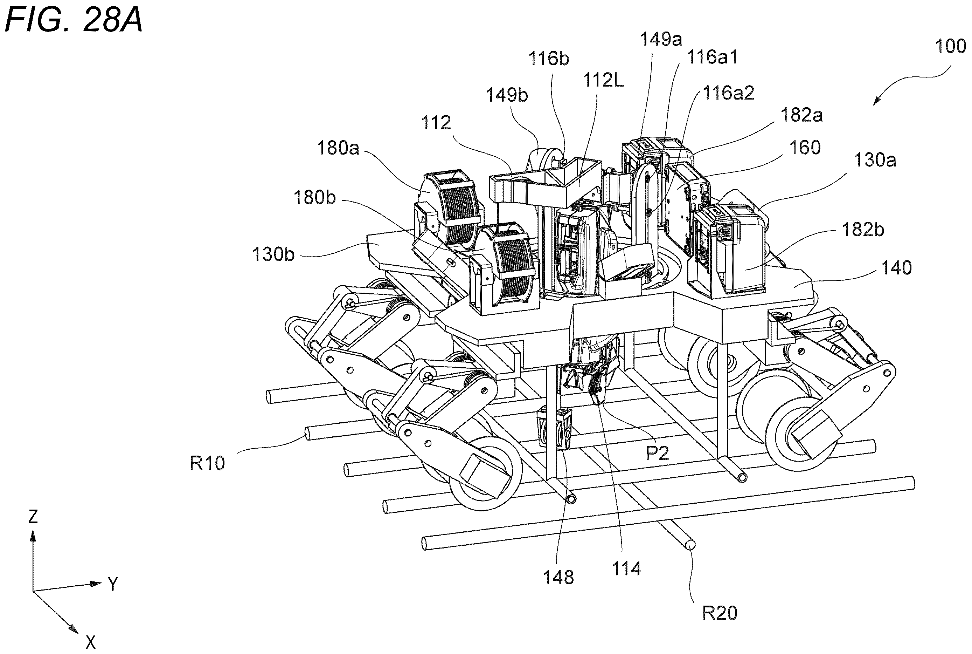

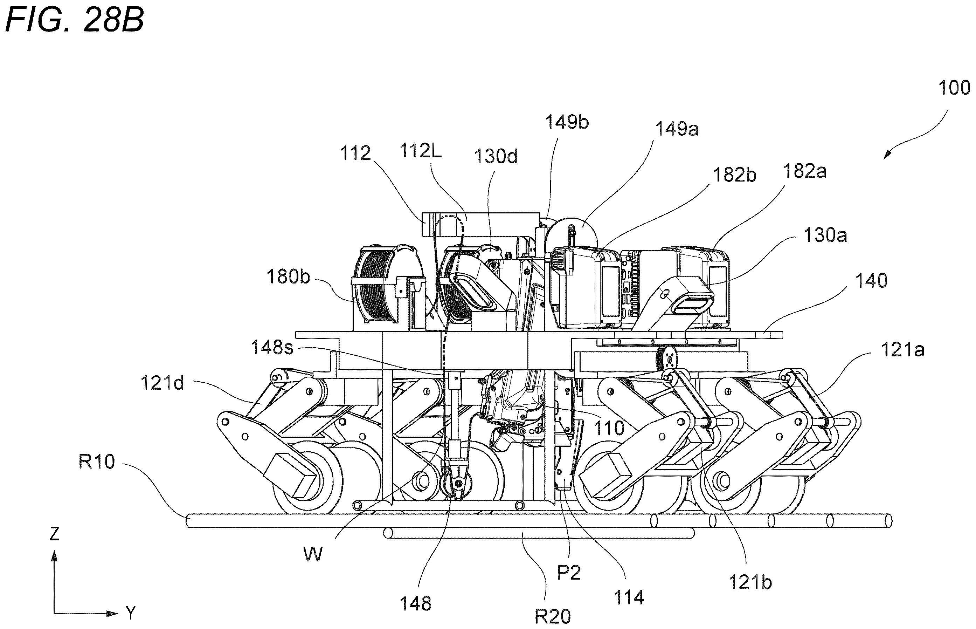

Similarly, FIG. 28A is a diagram of the binding device 100 according to the embodiment of the present disclosure to illustrate the configuration for drawing out the wire, as viewed obliquely from the upward direction, and FIG. 28B is a diagram of the binding device 100 as viewed from obliquely forward. FIGS. 28A and 28B show a state where the reinforcing bar binding unit 110 of the binding device 100 retracts to the retracted position P2 when the binding operation at the intersecting point c12 of the first reinforcing bar R10 and the second reinforcing bar R20 is completed at the binding position P1 (the state shown in FIGS. 27A and 27B).

In the present embodiment, the retracted position P2 is a position where the reinforcing bar binding unit 110 does not perform the binding on the reinforcing bar R, and may be, for example, a position where the wire twisting section 114 does not straddle the reinforcing bar surface (the surface formed by the first reinforcing bar R10 and the second reinforcing bar R20) in the Z direction. In the present embodiment, the position of the tip end (the end in the - Z direction) of the wire twisting section 114 in this case is shown as P2 in FIGS. 28A and 28B as the retracted position P2. As shown in FIGS. 28A and 28B, the tip end of the wire twisting section 114 is present in the +Z direction from the first reinforcing bar R10 and the second reinforcing bar R20. The retracted position P2 is not limited thereto. For example, even if the tip end of the wire twisting section 114 is present in the -Z direction from the reinforcing bar surface, in a state where the reinforcing bar binding unit 110 as a whole does not perform the binding operation on the reinforcing bar R (for example, a state where the reinforcing bar binding unit 110 cannot perform the binding operation unless the reinforcing bar binding unit 110 is moved relative to the reinforcing bar R in the Z direction), the reinforcing bar binding unit 110 may be set to the retracted position P2, and the retracted position P2 may be determined by the positions of the components (the wire twisting section 114 and the like) of the reinforcing bar binding unit 110 in this case.

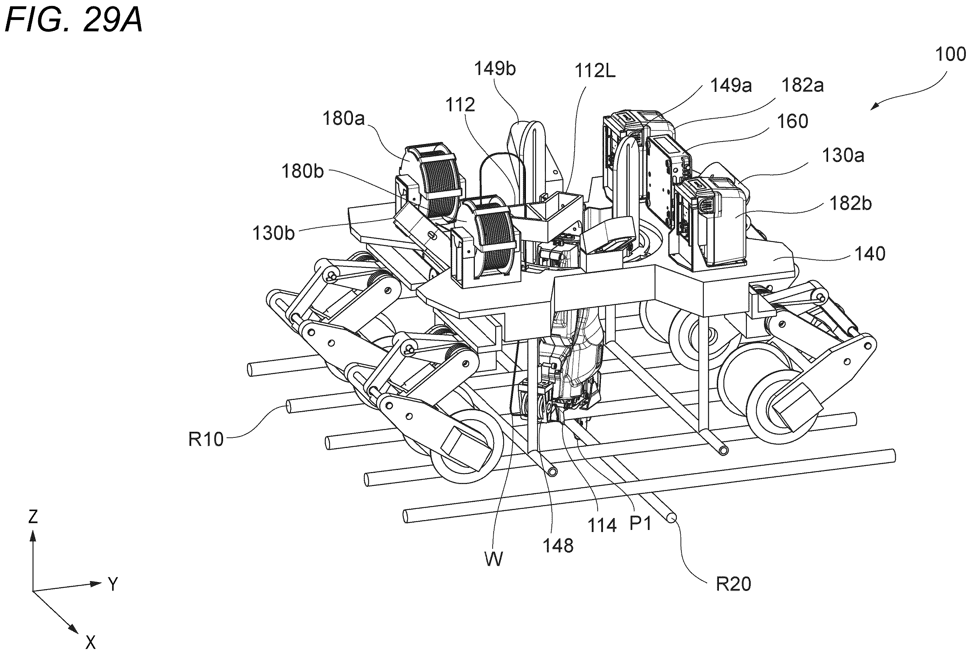

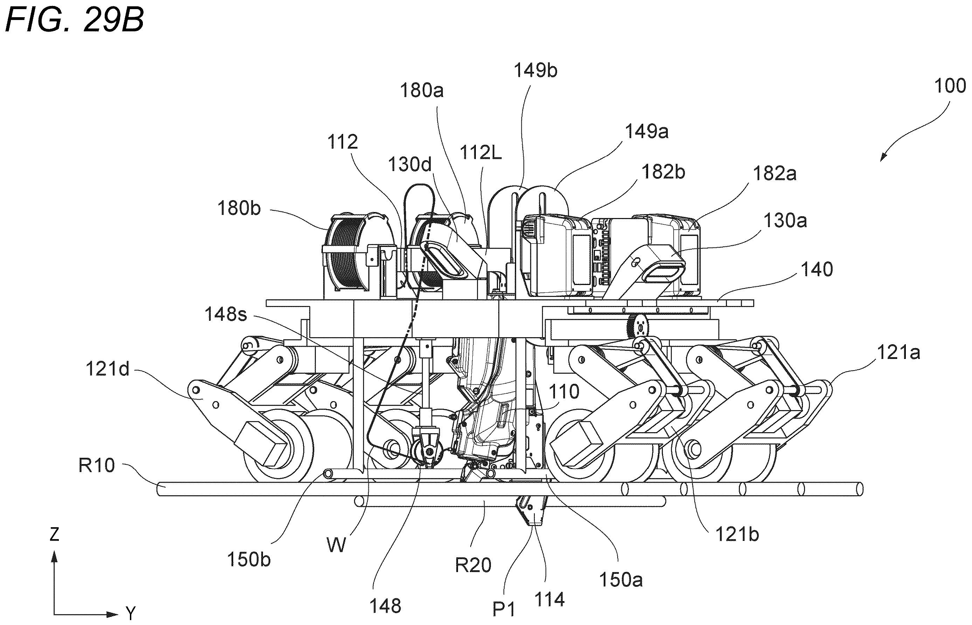

Similarly, FIG. 29A is a diagram of the binding device 100 according to the embodiment of the present disclosure to illustrate the configuration for drawing out the wire, as viewed obliquely from the upward direction, and FIG. 29B is a diagram of the binding device 100 as viewed from obliquely forward. FIGS. 29A and 29B show a state where the reinforcing bar binding unit 110 of the binding device 100 retracts to the retracted position P2 (the state shown in FIG. 28A and FIG. 28B) when the binding operation at the intersecting point c12 of the first reinforcing bar R10 and the second reinforcing bar R20 (the state shown in FIG. 27A and FIG. 27B) is completed, and then the reinforcing bar binding unit 110 is lowered in the -Z direction before starting the binding operation at the intersecting point of the first reinforcing bar R10 and the second reinforcing bar R20. Therefore, in the examples shown in FIG. 29A and FIG. 29B, the reinforcing bar binding unit 110 of the binding device 100 is present at the binding position P1.

As shown in FIGS. 27A and 27B, in addition to the configuration described above, the binding device 100 further includes the first wire drawing section 112 (also referred to as the "first drawing section" in the present embodiment) at the end of the reinforcing bar binding unit 110 opposite to the wire twisting section 114 via an intermediate section 112L. The intermediate section 112L transmits the movement of the reinforcing bar binding unit 110 moved by the reinforcing bar binding unit movement section 168m to the first wire drawing section 112. More specifically, the reinforcing bar binding unit 110 is moved in the +Z direction or -Z direction by the reinforcing bar binding unit movement section 168m, and the intermediate section 112L provided on the reinforcing bar binding unit 110 moves in the Z direction in conjunction with the movement of the reinforcing bar binding unit 110 in the Z direction, so that the first wire drawing section 112 moves in the Z direction in conjunction with the reinforcing bar binding unit 110. Therefore, the intermediate section 112L functions as a link member that links the first wire drawing section 112 with the movement of the reinforcing bar binding unit 110. The first wire drawing section 112 is configured to allow the wire W to be engaged. As described below, the first wire drawing section 112 has a first cylindrical surface 112c. In the present embodiment, the first cylindrical surface 112c of the first wire drawing section is a part of a cylindrical surface, and is, for example, a semi-cylindrical surface.

As shown in FIGS. 27A and 27B, the body unit 140 (in the present embodiment, also referred to as the "binding device body section") is provided with the second wire drawing section 148 (in the present embodiment, also referred to as the "second drawing section"), a first guide 149a, and a second guide 149b. The second wire drawing section 148 is provided on a surface of the body unit 140 in the -Z direction via a support member 148s. Therefore, even if the reinforcing bar binding unit 110 moves, the position of the second wire drawing section 148 does not change. That is, as will be described in detail later, the second wire drawing section 148 moves relative to the first wire drawing section 112 when the first wire drawing section 112 moves along with the movement of the reinforcing bar binding unit 110.

In the present embodiment, the second wire drawing section 148 is fixed to the body unit 140 and does not move relative to the body unit 140. However, the second wire drawing section 148 is not limited to this configuration, and may be configured to move relative to the body unit 140. For example, the second wire drawing section 148 may be configured to swing relative to the body unit 140. The second wire drawing section 148 may be configured to swing relative to the body unit 140, and does not have to be completely fixed as long as the first wire drawing section 112 moves along with the movement of the reinforcing bar binding unit 110 and the second wire drawing section 148 can draw out the wire W by moving relative to the first wire drawing section 112. The second wire drawing section 148 may be provided to be swingable relative to the body unit 140 within a range in which the second wire drawing section 148 can draw out the wire W by moving relative to the first wire drawing section 112.

The second wire drawing section 148 has a second cylindrical surface 148c. As shown in FIG. 27B, in the present embodiment, the second wire drawing section 148 is a cylindrical roller member. The second wire drawing section 148 is configured to allow the wire W to be engaged.

The first guide 149a and the second guide 149b are provided on an inner circumferential surface of the hole 144 of the body unit 140. The hole 144 is substantially circular when viewed from the Z direction, and the first guide 149a and the second guide 149b are arranged on sides opposite to each other with respect to the center of the circle formed by the inner circumferential surface of the hole 144. In the shown example, the first guide 149a is disposed on a section in the +X direction and +Y direction of the inner circumferential surface of the hole 144, and the second guide 149b is disposed on a section in the -X direction and -Y direction of the inner circumferential surface of the hole 144.

The first guide 149a and the second guide 149b are respectively provided with a first slit 149as and a second slit 149bs extending in the Z direction. The reinforcing bar binding unit 110 is provided with a first engagement section 116a and a second engagement section 116b, the first engagement section 116a is engaged to the first slit 149as and the second engagement section 116b is engaged to the second slit 149b. According to this configuration, when the reinforcing bar binding unit 110 moves in the Z direction, the reinforcing bar binding unit 110 moves in a state where the first engagement section 116a is engaged to the first slit 149a and the second engagement section 116b is engaged to the second slit 149b. That is, the movement of the reinforcing bar binding unit 110 in the Z direction is guided by a configuration in which the first guide 149a and the second guide 149b provided on the body unit 140 are engaged with the first engagement section 116a and the second engagement section 116b provided on the reinforcing bar binding unit 110. As described below, in the binding device 100 according to the present embodiment, the reinforcing bar binding unit 110 has two first engagement sections 116a1 and 116a2 and two second engagement sections 116b1 and 116b2.

As described above, FIGS. 27A and 27B show the state where the binding device 100 completes the binding operation performed by the reinforcing bar binding unit 110. In this case, as shown in FIG. 27B, for example, the wire W engaged to the first wire drawing section 112 and the second wire drawing section 148 provided below (in the -Z direction) the first wire drawing section 112 is in a state of no slack. FIG. 27B is a diagram of the binding device 100 as viewed obliquely from the upward direction in the Y direction, and the wire W that is not visible due to the first wire drawing section 112 and the body unit 140 is shown by a dashed line in FIG. 27B. As shown in FIG. 27B, the wire W engaged to the first wire drawing section 112 and curved in a semicircular shape along the first cylindrical surface 112c of the first wire drawing section 112 is also engaged to the second wire drawing section 148 in the -Z direction, and is curved along the second cylindrical surface 148c, which is a cylindrical surface of the roller member of the second wire drawing section 148.

In the binding device 100, after the reinforcing bar binding unit 110 completes the binding operation at the binding position P1 in the state shown in FIGS. 27A and 27B described above, the reinforcing bar binding unit 110 moves to the retracted position P2 as shown in FIGS. 28A and 28B. As shown in FIGS. 28A and 28B, at the retracted position P2, the first engagement section 116a (the first engagement section 116a1 and the first engagement section 116a2) and the second engagement section 116b (the second engagement section 116b1 and the second engagement section 116b2) are raised in the +Z direction along the first guide 149a and the second guide 149b, respectively. In addition, in conjunction with the movement of the reinforcing bar binding unit 110 in the +Z direction, the first wire drawing section 112 provided on the reinforcing bar binding unit 110 via the intermediate section 112L is also moved in the +Z direction. On the other hand, the second wire drawing section 148, which is provided on the body unit 140 via the support member 148s, does not move even if the reinforcing bar binding unit 110 moves in the Z direction. That is, the position of the second wire drawing section 148 in the binding device 100 does not change between the binding position P1 and the retracted position P2. Therefore, the second wire drawing section 148 moves in the Z direction relative to the first wire drawing section 112 when the first wire drawing section 112 moves along with the movement of the reinforcing bar binding unit 110 (binding mechanism). In the present embodiment, the second wire drawing section 148 moves in the -Z direction relative to the first wire drawing section 112 when the first wire drawing section 112 moves in the +Z direction along with the movement of the reinforcing bar binding unit 110.

As shown in FIGS. 28A and 28B, when the reinforcing bar binding unit 110 is at the retracted position P2, the first wire drawing section 112 is raised in the +Z direction as compared with a case where the reinforcing bar binding unit 110 is in the binding position P1 shown in FIGS. 27A and 27B, and thus a distance between the first wire drawing section 112 and the second wire drawing section 148 becomes larger. Also, as can be seen by comparing FIGS. 27A and 27B with FIGS. 28A and 28B, when the reinforcing bar binding unit 110 is at the retracted position P2, the distance in the Z direction between the first wire drawing section 112 and the reel 180 is also greater than that when the reinforcing bar binding unit 110 is at the binding position P1. In the state shown in FIGS. 28A and 28B, a distance in the Z direction between the second wire drawing section 148 and the vicinity of the wire twisting section 114 of the reinforcing bar binding unit 110 is also greater than that in the state shown in FIGS. 27A and 27B. Accordingly, in the state shown in FIGS. 28A and 28B, a length of the wire W between the first wire drawing section 112 and the second wire drawing section 148, a length of the wire W between the reel 180b and the first wire drawing section 112, and a length of the wire W between the second wire drawing section 148 and the vicinity of the wire twisting section 114 are all longer than those in the state shown in FIGS. 27A and 27B.

Similarly to FIG. 27B, FIG. 28B is a diagram of the binding device 100 as viewed obliquely from the upward direction in the Y direction, and in FIG. 28B, the wire W that is not visible due to the first wire drawing section 112, the fourth sensor 130d, and the body unit 140 is shown by a dashed line. As shown in FIG. 28B, the wire W engaged to the first wire drawing section 112 and curved in a semicircular shape along the first cylindrical surface 112c of the first wire drawing section 112 is also engaged to the second wire drawing section 148 in the -Z direction, and is curved along the second cylindrical surface 148c, which is the cylindrical surface of the roller member of the second wire drawing section 148. FIGS. 27B and 28B more specifically show that the length of the wire W between the first wire drawing section 112 and the second wire drawing section 148, the length of the wire W between the reel 180b and the first wire drawing section 112, and the length of the wire W between the second wire drawing section 148 and the vicinity of the wire twisting section 114 are increased by the reinforcing bar binding unit 110 moving from the binding position P1 to the retracted position P2.

That is, in the state shown in FIGS. 28A and 28B, along with the movement of the reinforcing bar binding unit 110 in the Z direction, the distance between the first wire drawing section 112 and the second wire drawing section 148 becomes longer by a distance equivalent to a movement distance of the reinforcing bar binding unit 110 in the Z direction as compared with the state shown in FIGS. 27A and 27B. Similarly, the distance between the reel 180b and the first wire drawing section 112 also becomes longer by the distance equivalent to the movement distance of the reinforcing bar binding unit 110 in the Z direction, and the distance between the second wire drawing section 148 and the vicinity of the wire twisting section 114 also becomes longer by the distance equivalent to the movement distance of the reinforcing bar binding unit 110 in the Z direction. Accordingly, in the state shown in FIGS. 28A and 28B, the length of the wire W between the first wire drawing section 112 and the second wire drawing section 148, and the length of the wire W between the second wire drawing section 148 and the vicinity of the wire twisting section 114 are, for example, both longer by the length equivalent to the movement distance of the reinforcing bar binding unit 110 in the Z direction as compared with the state shown in FIGS. 27A and 27B.

In the length of the wire W between the reel 180b and the first wire drawing section 112, a change amount along with a relative movement of the first wire drawing section 112 and the second wire drawing section 148 may vary depending on a positional relationship between the reel 180b and the first wire drawing section 112. For example, when the reinforcing bar binding unit 110 is at the binding position P1, the reel 180b and the first wire drawing section 112 are relatively close to each other, and when the first wire drawing section 112 moves in the Z direction or approximately in the Z direction relative to the reel 180b along with the movement of the reinforcing bar binding unit 110 from the binding position P1 to the retracted position P2, the change amount of the length of the wire W between the reel 180b and the first wire drawing section 112 is relatively large, and is close to the movement amount of the reinforcing bar binding unit 110 in the Z direction, for example. On the other hand, if the reel 180b and the first wire drawing section 112 are provided in such a positional relationship that the change in the length of the wire W between the reel 180b and the first wire drawing section 112 is relatively small when the reinforcing bar binding unit 110 moves from the binding position P1 to the retracted position P2, the length of the wire W between the reel 180b and the first wire drawing section 112 changes relatively small even when the reinforcing bar binding unit 110 moves from the binding position P1 to the retracted position P2. For example, if the reel 180b and the first wire drawing section 112 are provided relatively apart in the X direction, the wire W has already been drawn out in the X direction by the distance between the reel 180b and the first wire drawing section 112, and thus even if the first wire drawing section 112 moves in the Z direction relative to the reel 180b, a total amount corresponding to the movement of the first wire drawing section 112 in the Z direction is not drawn out as a drawing amount of the wire W. Therefore, in this case, the length of the wire W that is drawn out is relatively small.

After the wire W is used in the binding operation performed by the reinforcing bar binding unit 110, the wire W is cut using a wire cutter (not shown) or the like with a point twisted by the wire twisting section 114 left, and the vicinity of the cut point is held in the wire twisting section 114. Therefore, the wire W that becomes longer as a result of the reinforcing bar binding unit 110 moving from the binding position P1 to the retracted position P2 is newly drawn out from the reels 180. That is, in a state where a part of the wire W is engaged to the first wire drawing section 112 and another part of the wire W is engaged to the second wire drawing section 148, the first wire drawing section 112 moves relative to the second wire drawing section 148 along with the movement of the reinforcing bar binding unit 110 (binding mechanism), so that the wire W is drawn out from the reels 180.

The wire W newly drawn out by the reels 180 corresponds to a total of or a length greater than the length of the wire W between the first wire drawing section 112 and the second wire drawing section 148, the length of the wire W between the reel 180b and the first wire drawing section 112, and the length of the wire W between the second wire drawing section 148 and the vicinity of the wire twisting section 114. As described above, the length of the wire W between the first wire drawing section 112 and the second wire drawing section 148, and the length of the wire W between the second wire drawing section 148 and the vicinity of the wire twisting section 114 are, for example, both longer by the length equivalent to the movement distance of the reinforcing bar binding unit 110 in the Z direction. That is, the amount of the wire W newly drawn out is two times or more the movement amount of the reinforcing bar binding unit 110.

Therefore, the amount of the wire W drawn out by the wire drawing section (the first wire drawing section 112 and the second wire drawing section 148) is greater than the movement amount of the reinforcing bar binding unit 110 (binding mechanism) moved by the operation of the reinforcing bar binding unit movement section 168m (binding mechanism movement section), and in the present embodiment, for example, the amount of the wire W drawn out from the reels 180 by the wire drawing sections is two times or more the movement amount of the reinforcing bar binding unit 110. The movement amount of the reinforcing bar binding unit 110 may include the movement distance of the reinforcing bar binding unit 110. The amount of the wire W drawn out may include the distance of the wire W drawn out.

For example, when the change in the length of the wire W between the reel 180b and the first wire drawing section 112 is relatively large, for example close to the movement amount of the reinforcing bar binding unit 110 in the Z direction, the amount of the wire W newly drawn out is two times or more the movement amount of the reinforcing bar binding unit 110, and is, for example, three times. On the other hand, when the change in the length of the wire W between the reel 180b and the first wire drawing section 112 (for example, the change in the Z direction) is relatively small, the amount of the wire W newly drawn out is close to two times the movement amount of the reinforcing bar binding unit 110. For example, when the change in length of the wire W between the reel 180b and the first wire drawing section 112 is 0.4 times the movement amount of the reinforcing bar binding unit 110 in the Z direction, the amount of the wire W newly drawn out is 2.4 times the movement amount of the reinforcing bar binding unit 110.

These amounts of the wire W drawn out are examples, and the amount of the wire W newly drawn out may be other amounts depending on other factors. For example, the amount of the wire W newly drawn out may be other amounts depending on a strength with which the wire W is wound around the reels 180, a speed and/or strength with which the wire W is drawn out by the first wire drawing section 112 and/or the second wire drawing section 148, or the like, and thus the amount of the wire W newly drawn out relative to the movement amount of the reinforcing bar binding unit 110 may be a value other than the above two or three times.

In the binding device 100, the reinforcing bar binding unit 110 moves to the retracted position P2 as shown in FIGS. 28A and 28B, and then the reinforcing bar binding unit 110 moves to the binding position P1 as shown in FIGS. 29A and 29B. For example, in a state where the reinforcing bar binding unit 110 is at the retracted position P2, the binding device 100 moves to the vicinity of the intersecting point c12 of the first reinforcing bar R10 and the second reinforcing bar R20 where a next binding operation is performed, and lowers the reinforcing bar binding unit 110 to the binding position P1.

As shown in FIGS. 29A and 29B, the reinforcing bar binding unit 110 moves to the retracted position P2, and after the reinforcing bar binding unit 110 moves to the retracted position P2 and the wire W is drawn out by the first wire drawing section 112 and the second wire drawing section 148, the reinforcing bar binding unit 110 is lowered to the binding position P1, and a part of the wire W becomes slack. Specifically, with reference to FIGS. 29B and 28B in which the wire W that is not visible due to the first wire drawing section 112, the fourth sensor 130d, and the body unit 140 is shown by the dashed line, in the wire W, the slack occurs in a part between the first wire drawing section 112 and the reels 180, a part that engages with the first wire drawing section 112, a part between the first wire drawing section 112 and the body unit 140, and a part between the body unit 140 and the second wire drawing section 148. The slack parts of the wire W correspond to the newly drawn out wire W, and some or all of the slack wire W is used for the next binding operation performed by the reinforcing bar binding unit 110.

The amount of the wire W newly drawn out is, for example, five or less times the movement amount of the reinforcing bar binding unit 110. As described later, when the reinforcing bar binding unit 110 moves to the retracted position P2 and then lowers to the binding position P1 before starting the binding operation again, the slack occurs in the wire W, for example, by an amount equivalent to the amount of the wire W drawn out. If a slack amount is too large, the wire W may get caught on a part of the components of the binding device 100, or the binding operation may not be performed properly due to a tension that is applied to the wire W and less than a tension required to perform the binding operation. If the reinforcing bar binding unit 110 is configured to draw out the wire with an amount that is five or less times the movement amount of the reinforcing bar binding unit 110, the binding operation can be performed properly.

In the present embodiment, as shown in FIG. 28B, the position of the second wire drawing section 148 is lower (in the -Z direction) than the wire twisting section 114 at the retracted position P2 of the reinforcing bar binding unit 110. That is, when the reinforcing bar binding unit 110 (binding mechanism) is at the retracted position P2, the distance (distance in the Z direction) between the first wire drawing section 112 and the second wire drawing section 148 is greater than the distance between the first wire drawing section 112 and the wire twisting section 114.

The relationship between the second wire drawing section 148 and the wire twisting section 114 may vary depending on the position of the reinforcing bar binding unit 110. For example, when the position of the reinforcing bar binding unit 110 is the binding position P1, the position of the second wire drawing section 148 is above the wire twisting section 114 (+Z direction) as shown in FIGS. 27B and 29B. That is, when the reinforcing bar binding unit 110 (binding mechanism) is present at the binding position P1, the distance (distance in the Z direction) between the first wire drawing section 112 and the second wire drawing section 148 is smaller than the distance between the first wire drawing section 112 and the wire twisting section 114.

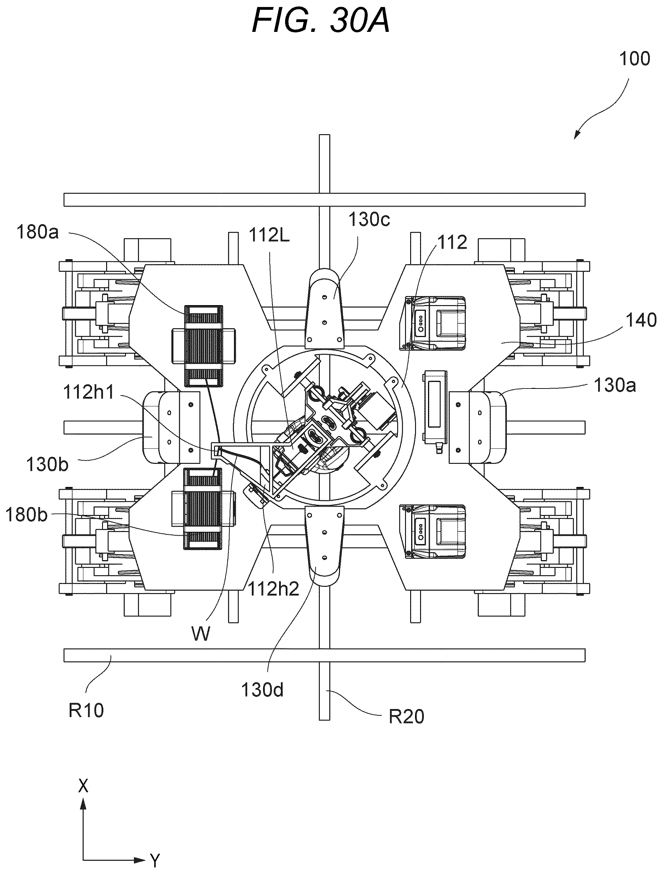

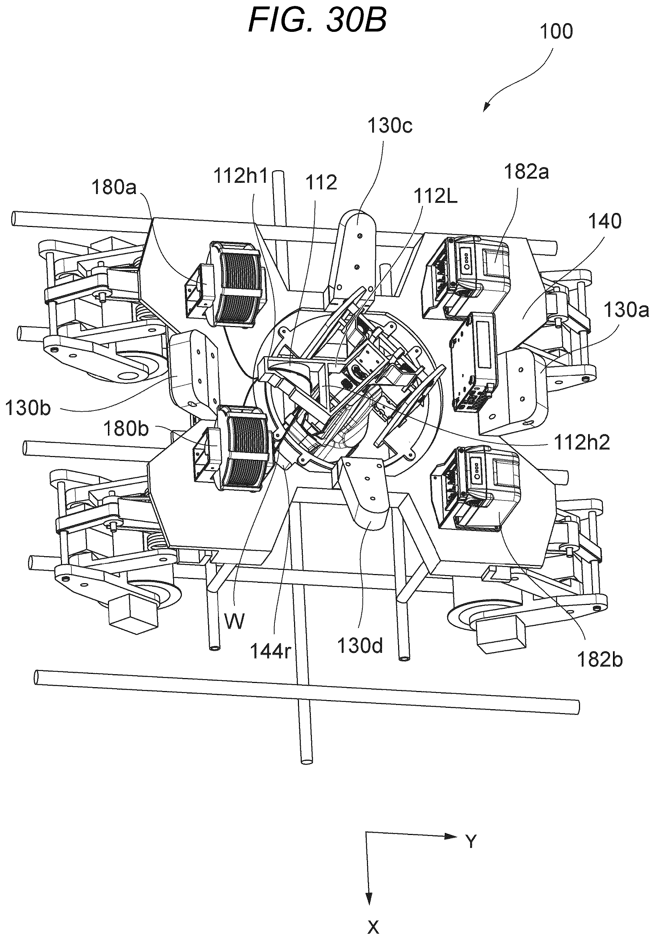

Hereinafter, the first wire drawing section 112 will be specifically described. FIG. 30A is a top view of the binding device 100, and FIG. 30B is a diagram of the binding device 100 as viewed obliquely from above. FIG. 30B is the diagram of the binding device 100 as viewed obliquely from above in the +X direction and the -Y direction. Both FIGS. 30A and 30B show the binding device 100 when the reinforcing bar binding unit 110 is at the retracted position P2.

As shown in FIGS. 30A and 30B, a shape of the first wire drawing section 112 is a trapezoid with a smaller side in the -Y direction and a larger side in the +Y direction when viewed from the +Z direction. A hole 112h1 and a hole 112h2 are provided in sections of the first wire drawing section 112 in the -Y direction and the +Y direction, respectively. The hole 112h1 is provided in the smaller side of the trapezoidal first wire drawing section 112, and the hole 112h2 is provided in the larger side of the trapezoidal first wire drawing section 112. Therefore, as shown in FIG. 30A, a length of the hole 112h1 in the Y direction is set to be shorter than that of the hole 112h2.

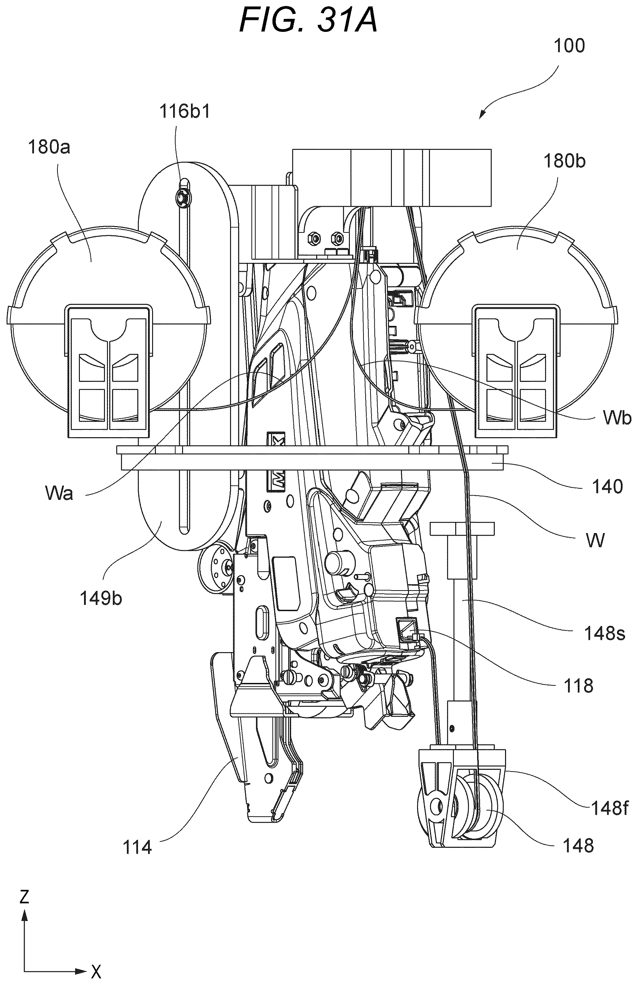

In the binding device 100 according to the present embodiment, two reels, that is, the reel 180a and the reel 180b are provided as the reels 180. The wires W (a wire Wa and a wire Wb (for example, FIG. 31A)) are drawn out from the two reels, that is, the reel 180a and the reel 180b, respectively, and the binding operation performed by the reinforcing bar binding unit 110 is performed using the two wires W. The wires W drawn out from the reel 180a and the reel 180b, respectively, are drawn out to pass through the smaller hole 112h1, so that the wires W come close to each other. Therefore, in the subsequent binding operation using the two wires W by the reinforcing bar binding unit 110, the two wires W can be easily bundled together for use in binding.

On the other hand, the two bundled wires W are then guided through the other hole 112h2 toward the wire twisting section 114. By providing the hole 112h2 longer, a mobility of the wires W passing through the hole 112h2 can be larger in the hole 112h2, and for example, a load on the wires W when the reinforcing bar binding unit 110 moves can be reduced.

By configuring the wires W to pass through the hole 112h1 or the hole 112h2 in the first wire drawing section 112, when the reinforcing bar binding unit 110 is at the binding position P1 and the wires W are slack, as described with reference to FIGS. 29A and 29B, the slack wires W can be maintained in the engagement state with the first wire drawing section 112.

As shown in FIG. 30B, the hole 144 of the body unit 140 may be provided with a notch 144r, and in the present embodiment, the wires W that pass through the hole 112h2 are guided through the notch 144r toward the wire twisting section 114 of the reinforcing bar binding unit 110. In the present embodiment, as shown in FIG. 30B, by setting the first wire drawing section 112 to be the cylindrical surface 112c, the part of the wires W that is engaged to the first wire drawing section 112 is curved along the cylindrical surface 112c, so that the load on the wires W can be reduced.

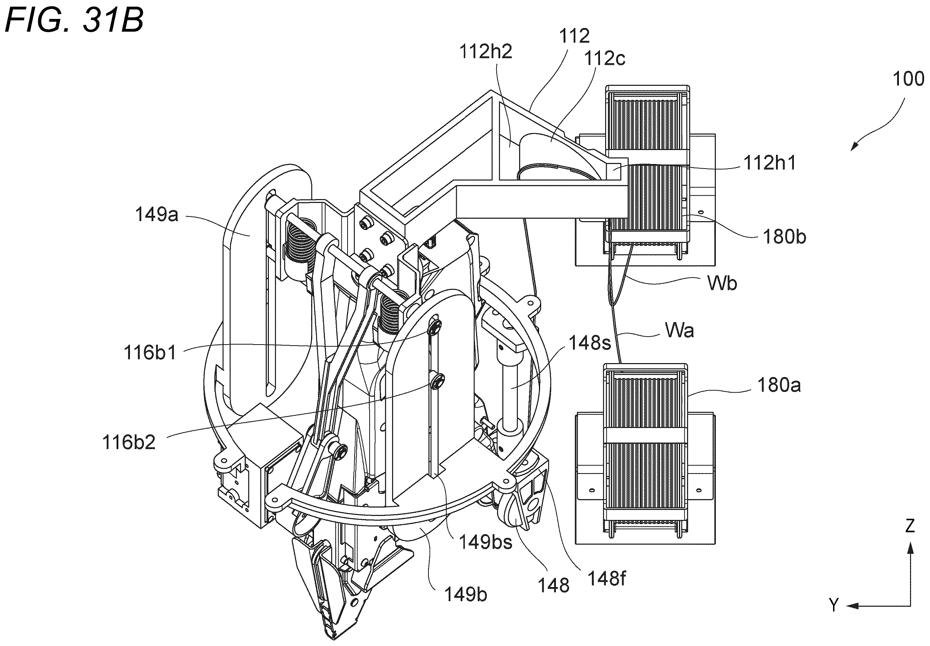

Hereinafter, a relationship and configurations of the reel 180a and the reel 180b, the first wire drawing section 112, and the second wire drawing section 148 will be described with reference to FIGS. 31A and 31B. FIGS. 31A and 31B are diagrams showing the binding device 100 which is partially taken out. FIG. 31A is the diagram as viewed from the -Y direction with the reel 180a, the reel 180b, the first wire drawing section 112, the second wire drawing section 148, and the like taken out. FIG. 31B is the diagram of the reel 180a, the reel 180b, the first wire drawing section 112, and the second wire drawing section 148, as viewed obliquely from above.

As shown in FIGS. 31A and 31B, the wire Wa drawn out from the reel 180a and the wire Wb drawn out from the reel 180b are drawn out to pass through the hole 112h1 of the first wire drawing section 112 and are brought close to each other. After that, the wire Wa and the wire Wb pass through the notch 144r of the body unit 140 almost as one wire and are guided toward the second wire drawing section 148. The wire Wa and the wire Wb engaged to the second wire drawing section 148 and guided along the cylindrical surface 148c of the roller member of the second wire drawing section 148 are guided into the reinforcing bar binding unit 110 through a wire insertion port 118 provided in the reinforcing bar binding unit 110. The wire Wa and the wire Wb guided into the reinforcing bar binding unit 110 through the wire insertion port 118 are used for the binding operation performed by the wire twisting section 114.

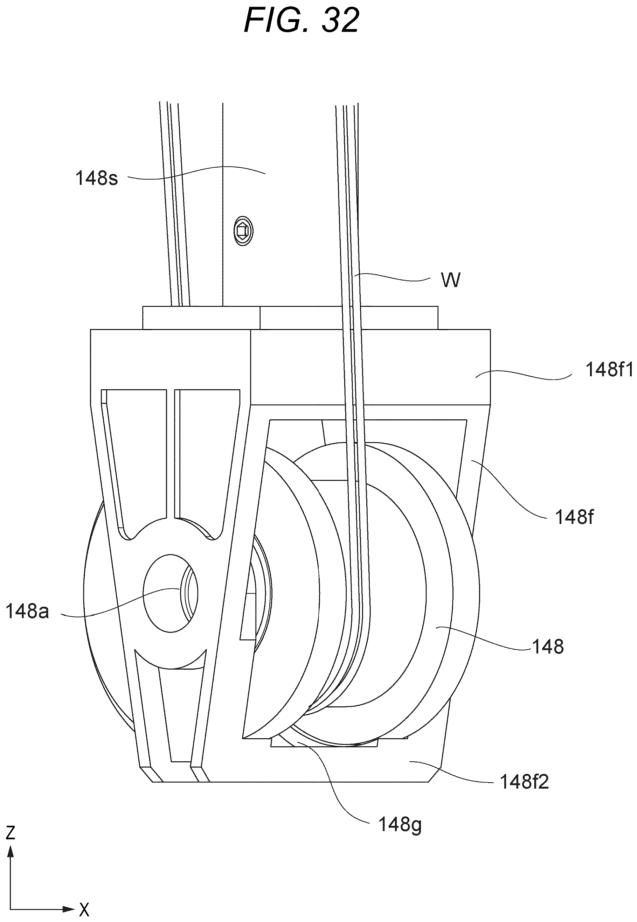

FIG. 32 is an enlarged side view showing the vicinity of the second wire drawing section 148 shown in FIG. 31A. As shown in FIG. 32, the roller member of the second wire drawing section 148 is rotatably provided with respect to a roller support member 148f. As shown in FIG. 32, the roller member of the second wire drawing section 148 is provided with respect to the roller support member 148f such that a gap 148g is generated between the cylindrical surface 148c of the roller member and the roller support member 148f, and the wire Wa and the wire Wb guided to the second wire drawing section 148 are configured to pass through the gap 148g.

As shown in FIG. 32, the roller support member 148f has a first support section 148f1 and a second support section 148f2 that are provided to cover the rotation shaft 148a, which is a rotation center of the roller member of the second wire drawing section 148, from the +Z direction and the -Z direction, respectively. Therefore, as shown in FIG. 32, the gap 148g corresponds to a gap that is generated between the cylindrical surface 148c (a part of the cylindrical surface 148c that is in the -Z direction) of the roller member of the second wire drawing section 148 and the second support section 148f2. Since the gap 148g is closed in the -Z direction by the second support section 148f2 with respect to the cylindrical surface 148c, which is the surface engaged with the wires W, the wires W that pass through the gap 148g and are engaged to the second wire drawing section 148 can maintain the engagement state with the second wire drawing section 148 without coming off in the Z direction.

For example, as shown in FIG. 31B which is referred to in the above description, regarding the hole 112h1 and the hole 112h2 of the first wire drawing section 112, the hole 112h1 and the hole 112h2 are respectively closed in the -Y direction and the +Y direction by a first wall 112w1 and a second wall 112w2 provided in the -Y direction and the +Y direction, respectively, of the cylindrical surface 112c of the first wire drawing section 112. Therefore, the wires W (the wire Wa and the wire Wb) engaged to the first wire drawing section 112 can maintain the engagement state with the first wire drawing section 112 without coming off in the -Y direction and the +Y direction.

Accordingly, by configuring the wire Wa and the wire Wb to pass through the hole 112h1 and the hole 112h2 of the first wire drawing section 112 and/or by configuring the wire Wa and the wire Wb to pass through the gap 148g, for example, when the reinforcing bar binding unit 110 moves to the binding position P1 and the wire Wa and the wire Wb slack, the wire Wa and the wire Wb can maintain the engagement state with the first wire drawing section 112 and/or the second wire drawing section 148.

Similarly to the above description for the cylindrical surface 112c of the first wire drawing section 112, the second wire drawing section 148 also has the cylindrical surface 148c, so that the load on the part of the wires W that are engaged to the second wire drawing section 148 can be reduced. In particular, when a wire W having a higher rigidity is used as the wire W used to bind the reinforcing bar R, a larger force needs to be applied to bend the wire W, but the first wire drawing section 112 and the second wire drawing section 148 have cylindrical surfaces, such as the first cylindrical surface 112c and the second cylindrical surface 148c, so that it is possible to easily bend the wire W.

In the present embodiment, a radius of curvature of the first cylindrical surface 112c is configured to be greater than a radius of curvature of the second cylindrical surface 148c. The first cylindrical surface 112c is engaged with the wire Wa and the wire Wb immediately after the wires are drawn out from the reel 180a and the reel 180b, and thus a force to guide the wire Wa and the wire Wb greater than that in the second cylindrical surface 148c may be required. By configuring the radius of curvature of the first cylindrical surface 112c to be greater than the radius of curvature of the second cylindrical surface 148c, the wire Wa and the wire Wb can be more easily guided through the first cylindrical surface 112c.

The present embodiment is described above with reference to specific examples. However, the present disclosure is not limited to these specific examples. Design changes made by those skilled in the art as appropriate to these specific examples are also included within the scope of the present disclosure as long as the changes have characteristics of the present disclosure. Elements, arrangements, conditions, shapes, and the like included in the specific examples described above are not limited to those shown, and can be appropriately changed. The elements included in the specific examples described above can be appropriately changed in combination as long as technical contradiction does not occur.

The present application is based on Japanese Patent Application No. 2023-007172 filed on January 20, 2023, Japanese Patent Application No. 2023-007174 filed on January 20, 2023, Japanese Patent Application No. 2023-007176 filed on January 20, 2023, Japanese Patent Application No. 2023-007177 filed on January 20, 2023, Japanese Patent Application No. 2023-007182 filed on January 20, 2023, Japanese Patent Application No. 2023-007187 filed on January 20, 2023, and Japanese Patent Application No. 2023-131097 filed on August 10, 2023, and the contents of which are incorporated in the present application by reference.

### INDUSTRIAL APPLICABILITY

The binding device according to the present disclosure can draw out a wire with a simple configuration.

### REFERENCE SIGNS LIST

100, 200 Reinforcing bar binding robot (binding device)
110 Reinforcing bar binding unit (binding mechanism)
112 First wire drawing section (first drawing section, wire drawing section)
112c First cylindrical surface
112L Intermediate section
114 Wire twisting section
120 Movement unit
121 Traveling unit
130 Sensor unit
140 Body section (body unit)
148 Second wire drawing section (second drawing section, wire drawing section)
148c Second cylindrical surface
160 Control section (control unit)
168m Reinforcing bar binding unit movement section (binding mechanism movement section)
180 Reel
P1 Binding position
P2 Retracted position
R10 First reinforcing bar
R20 Second reinforcing bar
W, Wa, Wb Wire

## Claims

1. A binding device comprising:
a binding mechanism configured to feed a wire around a reinforcing bar and twist and bind the wire fed around the reinforcing bar;
a binding mechanism movement section configured to move the binding mechanism between a binding position for binding the reinforcing bar and a retracted position away from the reinforcing bar; and
a wire drawing section configured to draw out the wire wound on a reel,
wherein the wire drawing section draws out the wire in a movement direction of the binding mechanism, in conjunction with the movement of the binding mechanism by the binding mechanism movement section, and
wherein an amount of the wire drawn out by the wire drawing section is greater than a movement amount of the binding mechanism moved by an operation of the binding mechanism movement section.

2. The binding device according to claim 1,
wherein the wire drawing section includes an intermediate section that transmits the movement of the binding mechanism to the wire drawing section.

3. The binding device according to claim 2,
wherein the wire drawing section includes:
a first drawing section configured to allow the wire to be engaged, and provided on the intermediate section to move along with the movement of the binding mechanism; and
a second drawing section configured to allow the wire to be engaged and move relative to the first drawing section when the first drawing section moves along with the movement of the binding mechanism, and
wherein the wire is drawn out from the reel by the first drawing section moving relative to the second drawing section along with the movement of the binding mechanism in a state where a part of the wire is engaged with the first drawing section and another part of the wire is engaged with the second drawing section.

4. The binding device according to claim 1,
wherein an amount of the wire drawn out by the wire drawing section is two times or more and five times or less the movement amount of the binding mechanism moved by an operation of the binding mechanism movement section.

5. The binding device according to claim 3,
wherein the second drawing section is provided in a binding device body section that is a body section of the binding device.

6. The binding device according to claim 3,
wherein the first drawing section has a first cylindrical surface,
wherein the second drawing section has a second cylindrical surface, and
wherein a radius of curvature of the first cylindrical surface is greater than a radius of curvature of the second cylindrical surface.

7. The binding device according to claim 3,
wherein one end of the binding mechanism is provided with the intermediate section,
wherein the other end of the binding mechanism is provided with a wire twisting section that twists the wire fed around the reinforcing bar, and
wherein in a case where the binding mechanism is present at the retracted position, a distance between the first drawing section and the second drawing section is greater than a distance between the first drawing section and the wire twisting section.
